# EUROPÄISCHE PATENTSCHRIFT

(11) **EP 2 536 498 B1**
(45) Veröffentlichungstag und Bekanntmachung des Hinweises auf die Patenterteilung: **10.12.2014**
(21) Anmeldenummer: 11702786.2
(22) Anmeldetag: 24.01.2011
(51) Int. Cl.: B01J 20/28, B01J 20/20, B01J 20/26

(54) **ADSORPTIVE STRUKTUREN MIT PARTIKEL- UND/ODER AEROSOLFILTERFUNKTION UND VERFAHREN ZUR HERSTELLUNG SOLCHER ADSORPTIVER STRUKTUREN**
ADSORPTIVE STRUCTURES HAVING A PARTICLE AND/OR AEROSOL FILTER FUNCTION AND METHOD FOR PRODUCING SUCH ADSORPTIVE STRUCTURES
STRUCTURES ADSORPTIVES AYANT UNE FONCTION DE FILTRE À PARTICULES ET/OU À AÉROSOLS ET PROCÉDÉ DE FABRICATION DE TELLES STRUCTURES ADSORPTIVES

(30) Priorität: 24.06.2010 DE 102010024989; 15.02.2010 DE 102010008109
(43) Veröffentlichungstag der Anmeldung: 26.12.2012
(73) Patentinhaber: Blücher GmbH, 40699 Erkrath (DE)
(72) Erfinder: HEINRICH, Peter, 47447 Moers (DE); GUERRA-GONZÁLEZ, Omar, 40211 Düsseldorf (DE); ECKLE, Ilsebill, 45886 Gelsenkirchen (DE); BUCHTA, Ellen, 83026 Rosenheim (DE); NIENTIEDT, Jürgen, 83109 Großkarolinenfeld (DE)
(74) Vertreter: Von Rohr Patentanwälte Partnerschaft mbB
(86) Internationale Anmeldenummer: PCT/EP2011/000269
(87) Internationale Veröffentlichungsnummer: WO 2011/098211

(56) Entgegenhaltungen:
- EP-A2- 2 036 430
- WO-A2-2008/036861
- DE-U1-202008 016 507
- US-A1- 2007 289 543

## Beschreibung

Die vorliegende Erfindung betrifft das Gebiet der Adsorptionsfiltertechnologie und insbesondere den Bereich von Filtermaterialien mit kombinierten Adsorptionseigenschaften einerseits und Partikel- bzw. Aerosolfiltereigenschaften andererseits.

Insbesondere betrifft die vorliegende Erfindung adsorptive Strukturen auf Basis von Agglomeraten, welche sowohl Adsorberpartikel als auch Fasermaterialien aufweisen, sowie ein Verfahren zu deren Herstellung und deren Verwendung.

Des weiteren betrifft die vorliegende Erfindung adsorptive Formkörper, welche ausgehend von den erfindungsgemäßen adsorptiven Strukturen erhältlich sind.

Schließlich betrifft die vorliegende Erfindung Filter, welche die erfindungsgemäßen adsorptiven Formkörper umfassen.

Zur Aufreinigung oder Aufbereitung von fluiden Medien, wie insbesondere Gasen, Gasströmen oder Gasgemischen, wie z. B. Luft, oder aber Flüssigkeiten, wie z. B. Wasser, kommen oft partikuläre Systeme auf Basis von Teilchen mit spezifischer Wirkung (z. B. Adsorbentien, Ionenaustauscher, Katalysatoren etc.) zum Einsatz. So ist beispielsweise die Verwendung von Adsorberpartikeln zur Entfernung von Gift- oder Schadstoffen und Gerüchen aus Gas- oder Luftströmen oder aber aus Flüssigkeiten aus dem Stand der Technik bekannt.

Die Verwendung loser Schüttungen der vorgenannten Teilchen, insbesondere in Form von sogenannten Schüttfiltern, ist dabei die zentrale Anwendungsform, um die betreffenden Partikel, wie z. B. Adsorberpartikel, mit dem betreffenden Gas oder der betreffenden Flüssigkeit in Kontakt zu bringen.

Da bei kleinen Partikeln, wie z. B. Adsorberpartikeln, eine größere spezifische Oberfläche zur Verfügung steht als bei größeren Partikeln, ist bei den kleineren Partikeln erwartungsgemäß die Wirkungsweise besser. Allerdings führen die kleinen Partikel in loser Schüttung zu einem hohen Druckverlust, und zudem wird durch die kleinen Partikel die Bildung von Kanälen gefördert, was eine gewisse Durchbruchgefahr mit sich bringt. Aus diesem Grund ist die bei Schüttungen verwendete Teilchengröße oftmals nur ein Kompromiß, so daß meist nicht die für die Anwendung optimalen Teilchengrößen zum Einsatz kommen können. Insbesondere kommen zu Zwecken der Erreichung wirtschaftlicher Betriebsbedingungen, insbesondere eines akzeptablen Druckverlustes, oftmals größere Partikel (z. B. Adsorberpartikel) zum Einsatz, als es für eine optimale Nutzung der Adsorptionseffizienz wünschenswert wäre, so daß oft ein beträchtlicher Teil der theoretisch vorhandenen Kapazität nicht genutzt werden kann.

Aus der DE 38 13 564 A1 und aus der zu derselben Patentfamilie gehörenden EP 0 338 551 A2 ist eine Aktivkohlefilterschicht für Gasmasken bekannt, welche ein hochluftdurchlässiges, im wesentlichen formstabiles dreidimensionales Trägergerüst umfaßt, an welchem eine Schicht von körnigen, insbesondere kugelförmigen Aktivkohleteilchen eines Durchmessers von 0,1 bis 1 mm fixiert ist, wobei es sich bei dem Trägergerüst um ein Geflecht aus Drähten, Monofilamenten oder Stegen oder um einen großporigen retikulierten Polyurethanschaumstoff handeln kann. Nachteilig bei dem dort beschriebenen System ist die Tatsache, daß ein zusätzliches Trägermaterial benötigt wird, welches in einem relativ aufwendigen Bearbeitungsprozeß mit den betreffenden Partikeln beaufschlagt werden muß. Zudem beschränkt das einmal gewählte Trägergerüst dann die betreffende Anwendung.

Weiterhin ist aus der DE 42 39 520 A1 ein Hochleistungsfilter bekannt, welches aus einem dreidimensionalen Trägergerüst besteht, auf welchem mittels einer Haftmasse Adsorberteilchen fixiert sind, wobei das. Trägergerüst durch einen thermisch stabilen und sehr hydrolysebeständigen Kunststoff ummantelt ist, der ca. 20 bis 500 %, bezogen auf den Träger, beträgt. Insbesondere handelt es sich bei dem Trägergerüst um einen großporigen retikulierten Polyurethanschaumstoff, welcher durch ein Silikonharz, Polypropylen, hydrolysefestes Polyurethan, ein Acrylat, einen Synthesekautschuk oder Fluorpolymere ummantelt ist. Der Herstellungsprozeß für diese Strukturen ist relativ aufwendig. Zudem erfordert die dort beschriebene Technologie das Vorhandensein eines zusätzlichen Trägers.

Des weiteren sind aus der DE 43 43 358 A1 Aktivkohle enthaltende poröse Körper bekannt, welche aus Platten und Agglomeraten aus vermahlener, in einer porösen SiO₂-Matrix eingebauten Aktivkohle bestehen. Insbesondere werden dort poröse Platten oder Körper mit adsorbierenden Eigenschaften beschrieben, bei denen Aktivkohlekörner oder Aktivkohlekügelchen bzw. Aktivkohle enthaltende Körner oder Kügelchen mit Hilfe einer Silikatlösung aneinander zum Haften gebracht sind und nachfolgend die Silikatbrücken in Silicagelbrücken umgewandelt und die Körper getrocknet sind. Nachteilig hierbei ist die festgelegte Geometrie dieser porösen Körper sowie deren mangelnde Flexibilität und Kompressibilität, infolge derer sie für Filterbedingungen unter mechanischer Belastung nicht geeignet sind. Weiterhin nachteilig ist, daß die aktivkohlehaltigen Partikel vollständig mit der Silikatlösung benetzt werden, so daß ein großer Teil der Kapazität dieser Partikel nicht mehr für adsorptive Prozesse zur Verfügung steht.

Gleichermaßen sind aus der DE 43 31 586 C2 Agglomerate aus Aktivkohle bekannt, bei denen Aktivkohleteilchen mit einem Durchmesser zwischen 0,1 bis 5 mm durch leichten Druck unter Erwärmung um ein etwa gleichgroßes Teilchen aus Pech angeordnet und zum Haften gebracht sind und nachfolgend das Pechteilchen durch Oxidation unschmelzbar gemacht und in Aktivkohle umgesetzt ist, so daß der freie Zwischenraum zwischen den Teilchen im Agglomerat eine Weite von mindestens 10 Vol. % der Teilchengröße aufweist. Nachteilig bei den dort beschriebenen Teilchen ist die relativ aufwendige, energiereiche Herstellung sowie die mangelnde Kompressibilität der erhaltenen Agglomerate. Infolge der Starrheit der Aktivkohleagglomerate ist eine Verwendung für Filteranwendungen unter mechanischer Belastung nicht vorgesehen. Auch ist infolge der mangelnden Kompressibilität eine Weiterverarbeitung zu Formkörpern unter Verpressung nicht möglich.

Gleiches trifft auch auf die porösen Körper mit adsorbierenden Eigenschaften gemäß der DE 42 38 142 A1 zu, welche Adsorberteilchen umfassen, die über Brücken aus anorganischem Material, insbesondere Tonerde, miteinander verbunden sind, wobei die Hohlräume zwischen den Adsorberteilchen 10 bis 100 % des Volumens der Adsorberteilchen ausmachen. Auch die dort beschriebenen porösen Körper weisen eine nur geringe Flexibilität und Kompressibilität auf, so daß eine Verwendung unter mechanischer Belastung und eine Weiterverarbeitung zu Formkörpern unter Verpressung ausgeschlossen ist.

Zudem weisen die Systeme des Standes der Technik keinen effektiven Schutz gegenüber mitunter toxischen Aerosolen bzw. feinverteilten Partikeln in einem Medium, wie Luft, auf. Daher kann hierdurch dem Problem der mangelnden Schutzfunktion gegenüber schädigenden Aerosolen (z. B. feinverteilt ausgebrachte chemische Schadstoffe, insbesondere Kampfstoffe) oder schädigenden Partikeln (z. B. schädigende Mikroorganismen oder an Trägerpartikeln fixierte Mikroorganismen, z. B. als biologische Kampfstoffe eingesetzte Viren oder Bakterien) nicht begegnet werden.

Die US 2007/0289543 A1 betrifft ein Tierstreu auf Basis von Kompositpartikeln, welches ein Flüssigkeit absorbierendes Material aus der Gruppe von Bentoniten, Verstärkungsfasern und Aktivkohle aufweisen soll.

Weiterhin betrifft die WO 2008/036861 A2 ein Vollprofilblockfilter für die Filtration von Flüssigkeiten, wobei das Blockfilter Kohlenstofffasern aufweist, welche in ein festes Profil auf Basis mindestens eines Bindemittels gebunden sind, wobei hierzu Fasern mit Stablängen von weniger als 20 µm sowie mit einem Kreisäquivalentdurchmesser im Bereich von 6 bis 10 µm eingesetzt werden sollen.

Weiterhin betrifft die EP 2 036 430 A2 eine Pflanzbasis in Form eines künstlichen Erdmaterials sowie einer speziellen Polyesterstapelfaser.

Zudem betrifft die auf die Anmelderin selbst zurückgehende DE 20 2008 016 507 U1 einen adsorptiven Formkörper, welcher aus einer Vielzahl adsorptiver Strukturen auf Basis von Agglomeraten von Adsorberpartikeln aufgebaut ist.

Weiterhin betrifft die auf die Anmelderin selbst zurückgehende deutsche Patentanmeldung DE 10 2008 058 249.2 mit Anmeldetag vom 19. November 2008 adsorptive Strukturen auf Basis von Agglomeraten von Adsorberpartikeln, wobei in bezug auf die Agglomerate Adsorberpartikel gleicher Ausprägung über ein thermoplastisches Bindemittel miteinander verbunden sind. Auf Basis derartiger Agglomerate können bereits leistungsfähige Adsorptionsmaterialien bereitgestellt werden, welche insbesondere im Schüttbett eine im Vergleich zu den reinen Basisadsorberpartikeln deutlich verringerte Druckdifferenzen, einhergehend mit einem verbesserten Durchströmungsverhalten, aufweisen. Allerdings weisen derartige Agglomerate keine Partikel- und/oder Aerosolfilterfunktion auf. Durch die mitunter nicht vollständige Belegung der Oberfläche des Bindemittels resultieren zudem bei solchen Agglomeraten in einem gewissen Maße nichtadsorptive Oberflächen, welche keinen Beitrag zu den Adsorptions- bzw. Filtrationseigenschaften der Agglomerate leisten können.

Der vorliegenden Erfindung liegt daher die Aufgabe zugrunde, adsorptive Strukturen bzw. adsorptive Formkörper bereitzustellen, welche die zuvor geschilderten Nachteile des Standes der Technik zumindest weitgehend vermeiden oder aber wenigstens abschwächen.

Insbesondere ist eine Aufgabe der vorliegenden Erfindung darin zu sehen, adsorptive Strukturen bzw. adsorptive Formkörper bereitzustellen, welche sowohl Adsorptionseigenschaften als auch Filtrationseigenschaften in bezug auf in einem aufzureinigenden Medium vorhandene Partikel bzw. Aerosole in ein und demselben Material aufweisen. Dabei sollen insgesamt adsorptive Strukturen bereitgestellt werden, welche aufgrund der Kombination von adsorptiven Eigenschaften einerseits und der Fähigkeit, Partikel bzw. Aerosole zurückzuhalten, andererseits ein breiteres Einsatzspektrum bzw. insgesamt erweiterte Filtereigenschaften aufweisen.

In diesem Zusammenhang soll ein Material bereitgestellt werden, welches einerseits in bezug auf chemische und/oder biologische Gifte bzw. Schadstoffe, insbesondere chemische Kampfstoffe, eine wirksame Schutzfunktion entfaltet und andererseits auch einen Schutz gegenüber schädlichen Partikeln und/oder Aerosolen bereitstellt.

Weiterhin liegt eine Aufgabe der vorliegenden Erfindung darin, die in der zuvor angeführten DE 10 2008 058 249.2 beschriebenen Systeme weiterzuentwickeln und diese Systeme insbesondere im Hinblick auf die Gewährleistung einer Partikel- bzw. Aerosolfilterfunktion zu verbessern, so daß mit einem einzigen Material sowohl gasförmige Substanzen als auch sich in dem aufzureinigenden Medium befindliche feste bzw. flüssige Partikel bzw. Schwebeteilchen in effektiver Weise zurückgehalten werden können.

Zudem besteht eine noch weitere Aufgabe der vorliegenden Erfindung darin, adsorptive Strukturen bzw. adsorptive Formkörper, welche die erfindungsgemäßen Systeme enthalten oder hieraus bestehen, bereitzustellen, welche zudem auch eine Verwendung unter hoher mechanischer Belastung ermöglichen, insbesondere im Hinblick auf die Bereitstellung einer ausreichenden Flexibilität bzw. Kompressibilität der erfindungsgemäßen adsorptiven Systeme, so daß auf deren Basis eine Weiterverarbeitung zu adsorptiven Formkörpern ermöglicht werden kann, insbesondere insofern, als auf dieser Basis Formkörper erhalten werden sollen, welche zudem ein gutes Durchströmverhalten, insbesondere einhergehend mit geringen Druckdifferenzen, aufweisen.

Die zuvor geschilderte Aufgabenstellung wird vorschlagsgemäß durch den Gegenstand von Patentanspruch 1 gelöst, welcher die erfindungsgemäßen adsorptiven Strukturen auf Basis von Agglomeraten von Adsorberpartikeln, vorzugsweise mit Partikel- und/oder Aerosolfilterfunktion, betrifft; weitere, vorteilhafte Weiterbildungen und Ausgestaltungen dieses Erfindungsaspekts sind Gegenstand der entsprechenden Unteransprüche.

Weiterer Gegenstand der vorliegenden Erfindung ist das erfindungsgemäße Verfahren zur Herstellung der adsorptiven Strukturen nach der Erfindung, wie es Gegenstand des entsprechenden unabhängigen Verfahrensanspruchs ist. Weitere, vorteilhafte Weiterbildungen und Ausgestaltungen dieses Erfindungsaspekts sind Gegenstand der jeweiligen Verfahrensunteransprüche.

Darüber hinaus sind Gegenstand der vorliegenden Erfindung die erfindungsgemäßen Verwendungen der adsorptiven Strukturen nach der vorliegenden Erfindung, wie sie in dem entsprechenden unabhängigen Verwendungsanspruch definiert sind.

Noch weiterer Gegenstand der vorliegenden Erfindung ist der Formkörper nach der Erfindung sowie darüber hinaus Filter, welche den adsorptiven Formkörper nach der Erfindung umfassen, gemäß den jeweiligen unabhängigen Patentansprüchen.

Es versteht sich von selbst, daß Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in bezug auf die übrigen Erfindungsaspekte entsprechend gelten.

Weiterhin versteht es sich von selbst, daß bei nachfolgenden Werte-, Zahlen- und Bereichsangaben die angegebenen Bereiche nicht beschränkend zu verstehen sind; es versteht sich für den Fachmann, daß einzelfallbedingt oder anwendungsbezogen von den angegebenen Bereichen und Angaben abgewichen werden kann, ohne daß der Rahmen der vorliegenden Erfindung verlassen ist.

Zudem gilt, dass alle im Folgenden genannten Werte- bzw. Parameterangaben oder dergleichen grundsätzlich mit genormten oder explizit angegebenen Bestimmungsverfahren oder aber mit dem Fachmann an sich geläufigen Bestimmungsmethoden bestimmt bzw. ermittelt werden können.

Dies vorausgeschickt, wird im folgenden die vorliegende Erfindung näher beschrieben.

Gegenstand der vorliegenden Erfindung sind somit - gemäß einem **ersten** Aspekt der vorliegenden Erfindung - adsorptive Strukturen auf Basis von Agglomeraten von Adsorberpartikeln, vorzugsweise mit Partikel- und/oder Aerosolfilterfunktion,
wobei die einzelnen adsorptiven Strukturen in Form der einzelnen Agglomerate jeweils mindestens ein partikuläres Adsorptionsmaterial (A) einerseits und mindestens ein Fasermaterial (B) andererseits aufweisen, wobei das mindestens eine partikuläre Adsorptionsmaterial (A) und das mindestens eine Fasermaterial (B) jeweils auf einem auf Basis eines thermoplastischen organischen Polymers ausgebildeten Bindemittelträger fixiert sind, wobei das partikuläre Adsorptionsmaterial (A) und das Fasermaterial (B) über den Bindemittelträger zu einer einzelnen adsorptiven Struktur in Form eines einzelnen Agglomerats verbunden sind und wobei der Bindemittelträger mindestens einen Kern einer einzelnen adsorptiven Struktur in Form eines einzelnen Agglomerats bildet,
wobei die einzelnen adsorptiven Strukturen in Form der einzelnen Agglomerate das partikuläre Adsorptionsmaterial (A) in Form von diskreten Adsorberpartikeln und das Fasermaterial (B) in Form von diskreten Fasern in einem Gewichtsverhältnis von Adsorberpartikeln einerseits zu Fasern andererseits von mindestens 5 : 1 aufweisen und
wobei das partikuläre Adsorptionsmaterial (A) ausgewählt ist aus der Gruppe von
(i) Aktivkohle, insbesondere kornförmiger Aktivkohle, vorzugsweise kugelförmiger Aktivkohle und/oder insbesondere geformter und/oder extrudierter Aktivkohle und/oder pulverförmiger Aktivkohle;
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) Ionenaustauscherharzen, insbesondere polydispersen und/oder monodispersen Kationen- und/oder Anionenaustauschern, insbesondere vom Geltyp und/oder vom makroporösen Typ;
(vi) anorganischen Oxiden, insbesondere Siliciumdioxiden, Silicagelen und/oder Aluminiumoxiden;
(vii) porösen organischen Polymeren und/oder porösen organisch-anorganischen Hybridpolymeren;
(viii) mineralischen Granulaten;
(ix) Klathraten; sowie
(x) deren Mischungen und/oder Kombinationen.

Der Begriff "adsorptive Strukturen" bzw. "adsorptive Systeme" bzw. "Agglomerate", wie er erfindungsgemäß verwendet wird, ist sehr breit zu verstehen und bezeichnet insbesondere eine mehr oder weniger verfestigte bzw. zusammengefügte Anhäufung von zuvor losen bzw. separaten Bestandteilen (d. h. insbesondere einzelnen Adsorberpartikeln des partikulären Adsorptionsmaterials (A) einerseits und einzelnen bzw. separaten Fasern des Fasermaterials (B) andererseits zu einem mehr oder weniger festen Verbund). Dabei weisen die erfindungsgemäßen Strukturen insbesondere eine Vielzahl von Adsorberpartikeln bzw. eine Vielzahl von Fasern auf. Der Begriff "adsorptive Strukturen" bzw. "adsorptive Systeme" bzw. "Agglomerate" bezeichnet im Rahmen der vorliegenden Erfindung sozusagen technisch hergestellte Zusammenballungen bzw. Anhäufungen einzelner bzw. diskreter Adsorberpartikel einerseits und einzelner bzw. diskreter Fasern andererseits, welche im vorliegenden Fall insbesondere durch ein organisches Polymer als Bindemittelträger zusammengefügt sind. Dabei sind die partikulären Adsorptionsmaterialien und das Fasermaterial, insbesondere unabhängig voneinander, vorzugsweise auf der Oberfläche des Bindemittelträgers aufgebracht bzw. befestigt, bzw. fixiert bzw. hieran verklebt und/oder hieran zum Haften gebracht. Somit fokussiert der Begriff "adsorptive Strukturen" bzw. "adsorptive Systeme" bzw. "Agglomerate", wie er im Rahmen der vorliegenden Erfindung verwendet wird, insbesondere auf eine funktionale Gesamtheit von Bestandteilen, welche insbesondere durch das partikuläre Adsorptionsmaterial (A) und das Fasermaterial (B) einerseits und den Bindemittelträger andererseits gebildet wird, wobei die einzelnen Bestandteile so aufeinander bezogen sind und in einer derartigen Weise miteinander wechselwirken, daß sie als eine zweckgebundene Einheit angesehen werden können, so daß gewissermaßen eine Einheit bzw. eine einheitliche Struktur bzw. ein Gefüge unterschiedlicher Bestandteile vorliegt, welche einen zusammenhängenden Körper bzw. ein zusammenhängendes Gebilde bzw. eine zusammenhängende Struktur ausbilden.

Weiterhin zielt der Begriff "adsorptive Strukturen" bzw. "adsorptive Systeme" bzw. "Agglomerate", wie er erlindungsgemäß verwendet wird, maßgeblich darauf ab, daß die erfindungsgemäßen Strukturen auch Adsorptionseigenschaften, insbesondere gegenüber vorzugsweise gasförmigen, mitunter aber auch flüssigen bzw. festen Substanzen bzw. Verbindungen aufweist, wobei die Adsorptionseigenschaften insbesondere anorganische bzw. organische Verbindungen bzw. Substanzen umfassen. Insbesondere handelt es sich hierbei um Schad- bzw. Giftstoffe, wie militärische Giftstoffe bzw. Kampfstoffe.

Im Lichte dieser Ausführungen können die erfindungsgemäßen adsorptiven Strukturen mit Partikel- und/oder Aerosolfilterfunktion synonym auch als adsorptive(r) Aerosol- bzw. Partikelfilter(-struktur) bzw. als adsorptives Aerosol- bzw. Partikelfiltersystem bzw. auch als adsorptive Einheit mit Aerosol- und/oder Partikelfilterfunktion bezeichnet werden.

Zudem bezieht sich der Begriff "Partikel- und/oder Aerosolfilterfunktion" maßgeblich auf die Filtereigenschaften der erfindungsgemäßen adsorptiven Strukturen in bezug auf feste und/oder flüssige Schwebeteilchen in einem aufzureinigenden Medium bzw. deren Zurückbehaltung bzw. Entfernung aus dem aufzureinigenden Medium. Bei den Schwebeteilchen kann es sich beispielsweise und nicht beschränkend um Staub, Ruß, Pollen, Sporen, Viren, Bakterien oder um flüssige Schad- bzw. Giftstoffe oder dergleichen handeln.

Was den Begriff "Vielzahl von Adsorberpartikeln" bzw. "Vielzahl von Fasern" anbelangt, so sind hierunter im Rahmen der vorliegenden Erfindung jeweils insbesondere mindestens zwei, vorzugsweise mehr als zwei Adsorberpartikel bzw. Fasern zu verstehen, welche auf dem Bindemittelträger zum Haften gebracht werden. Die vorliegende Erfindung umfaßt jedoch auch solche Ausführungsformen, wonach die adsorptiven Strukturen nach der Erfindung jeweils lediglich ein Adsorberpartikel und/oder eine Faser aufweisen.

Eine zentrale Idee der vorliegenden Erfindung ist insgesamt darin zu sehen, adsorptive Strukturen auf Basis von Agglomeraten bereitzustellen, welche - zur Gewährleistung von adsorptiven Eigenschaften - ein partikuläres Adsorptionsmaterial (A) einerseits und - zur Gewährleistung einer Partikel- bzw. Aerosolfilterfunktion - ein Fasennaterial (B) andererseits aufweisen. In diesem Zusammenhang ist es im Rahmen der vorliegenden Erfindung in völlig überraschender Weise gelungen, ein Material bereitzustellen, welches eine Adsorptionsfunktion sowie eine Partikel- bzw. Aerosolfilterfunktion in ein und demselben System vereint, was insbesondere durch die zweckgerichtete Kombination und Abstimmung des partikulären Adsorptionsmaterials (A) mit dem Fasermaterial (B) im Rahmen der erfindungsgemäßen adsorptiven Strukturen gelungen ist. Die erfindungsgemäßen adsorptiven Strukturen weisen somit ein großes Einsatzspektrum auf, welches sowohl die Adsorption von insbesondere gasförmigen und toxischen Substanzen als auch die Filtereigenschaft in bezug auf feste bzw. flüssige Partikel umfaßt. Es handelt sich erfindungsgemäß somit um ein multifunktionales Filtermaterial mit Adsorptions- und Filtrationseigenschaften.

Zudem können die erfindungsgemäßen adsorptiven Strukturen durch die spezielle Auswahl und Abstimmung der jeweiligen Komponenten insbesondere auf Basis des partikulären Adsorptionsmaterials (A) und des Fasermaterials (B) im Hinblick auf den jeweiligen Einsatzzweck maßgeschneidert bzw. optimiert werden, insbesondere im Hinblick auf die Bereitstellung von speziellen Adsorptionseigenschaften einerseits und speziellen Partikel- bzw. Aerosolfiltereigenschaften andererseits.

Im Rahmen der vorliegenden Erfindung resultieren somit erfindungsgemäße adsorptive Strukturen, welche eine verbesserte bzw. erhöhte Breitbandigkeit bzw. Multifunktionalität aufweisen. Dabei zeichnen sich die erfindungsgemäßen adsorptiven Strukturen auch dadurch aus, daß sie im Vergleich zu den einzelnen partikulären Adsorberstrukturen als solchen insbesondere im Rahmen der Verwendung als Schüttung oder als Formkörper über ein hervorragendes Durchströmvermögen bzw. über einen geringen Druckverlust verfügen, was einen entscheidenden Vorteil im Vergleich zu den jeweiligen Basisagglomeraten bzw. -systemen darstellt. Hierbei kann dem Fasermaterial auch eine Funktion als Abstandshalter in bezug auf die sich in der Schüttung befindlichen adsorptiven Strukturen zukommen.

Zudem ist es aufgrund der Optimierung der Oberflächenbesetzung des Bindemittelträgers, wonach, wie nachfolgend noch angeführt, das Fasermaterial (B) gewissermaßen die freien, nicht von dem partikulären Adsorptionsmaterial (A) belegten Oberflächen des Bindemittelträgers belegt bzw. besetzt, gelungen, die Leistungsfähigkeit der adsorptiven Strukturen nach der Erfindung weiter zu erhöhen.

Diesbezüglich kann es im Rahmen der vorliegenden Erfindung vorgesehen sein, daß dem eingesetzten Fasermaterial (B) gewissermaßen eine Doppelfunktion zukommt. Denn neben der Funktion im Hinblick auf die Filterung von Partikeln bzw. Aerosolen können die Fasermaterialien (B) auch als Abstandshalter in bezug auf die adsorptiven Strukturen fungieren, was insbesondere hinsichtlich des Einsatzes der adsorptiven Strukturen nach der Erfindung im Rahmen einer losen Schüttung bzw. eines Formkörpers von Vorteil ist, da hierdurch das Durchströmverhalten bzw. der Druckverlust weiter optimiert bzw. gezielt eingestellt werden kann - und dies bei gleichzeitiger Gewährleistung einer Partikel- bzw. Aerosolfilterfunktion durch das Fasermaterial (B).

Was die adsorptiven Strukturen nach der Erfindung anbelangt, so verhält es sich im Rahmen der vorliegenden Erfindung insbesondere derart, daß das Bindemittel gewissermaßen den Kern einer jeweiligen erfindungsgemäßen adsorptiven Struktur, insbesondere eines Agglomerates, bildet, an welcher bzw. an welchem das partikuläre Adsorptionsmaterial (A) einerseits und das Fasermaterial (B) andererseits angelagert bzw. zum Haften gebracht sind. Dabei sind die jeweiligen Komponenten (A) und (B) insbesondere an der Oberfläche des Bindemittelträgers bzw. des Kerns zum Haften gebracht. Insbesondere kann es auch vorgesehen sein, daß die einzelnen Agglomerate bzw. die einzelnen adsorptiven Strukturen nach der Erfindung mehrere Kerne des Bindemittelträgers aufweisen.

Erfindungsgemäß sind das partikuläre Adsorptionsmaterial (A) und das Fasermaterial (B) über den Bindemittelträger zu einer einzelnen adsorptiven Struktur in Form eines einzelnen Agglomerats verbunden.

Was das erfindungsgemäß eingesetzte partikuläre Adsorptionsmaterial (A) anbelangt, so kann dies insbesondere in Form von kornförmigen, vorzugsweise kugelförmigen Adsorberpartikeln vorliegen. In diesem Zusammenhang können erfindungsgemäß sozusagen diskrete Partikel bzw. Teilchen des partikulären Adsorptionsmaterial (A) eingesetzt werden, welche auf dem Bindemittelträger aufgebracht sind.

Insbesondere können die einzelnen adsorptiven Strukturen in Form der einzelnen Agglomerate nach der Erfindung jeweils eine Mehrzahl von Adsorberpartikeln, insbesondere kornförmigen, bevorzugt kugelförmigen Adsorberpartikeln, umfassen. Gleichermaßen kann es vorgesehen sein, daß die einzelnen adsorptiven Strukturen in Form der einzelnen Agglomerate nach der Erfindung jeweils auf Basis einer Mehrzahl von Adsorberpartikeln, insbesondere kornförmigen, bevorzugt kugelförmigen Adsorberpartikeln, ausgebildet sind. Wie zuvor angeführt, kann es im Rahmen der vorliegenden Erfindung aber auch vorgesehen sein, daß die erfindungsgemäßen adsorptiven Strukturen pro einzelne Struktur bzw. pro Agglomerat das partikuläre Adsorptionsmaterial (A) in Form eines einzelnen Adsorberpartikels aufweist. Erfindungsgemäß ist jedoch der Einsatz einer Mehrzahl bzw. einer Vielzahl von Adsorberpartikeln bevorzugt, da dies zu einer Verbesserung der adsorptiven Eigenschaften führt.

Insbesondere können die einzelnen adsorptiven Strukturen in Form der einzelnen Agglomerate das partikuläre Adsorptionsmaterial (A) jeweils in Form einer Vielzahl von diskreten Adsorberpartikeln aufweisen.

In diesem Zusammenhang ist es im Rahmen der vorliegenden Erfindung bevorzugt, wenn die einzelnen adsorptiven Strukturen in Form der einzelnen Agglomerate das partikuläre Adsorptionsmaterial (A) jeweils in Form und/oder in Mengen von mindestens 2 Adsorberpartikeln, insbesondere mindestens 5 Adsorberpartikeln, vorzugsweise mindestens 10 Adsorberpartikeln, besonders bevorzugt mindestens 15 Adsorberpartikeln, aufweisen. Zudem können die adsorptiven Strukturen in Form der einzelnen Agglomerate das partikuläre Adsorptionsmaterial (A) jeweils in Form und/oder in Mengen von bis zu 50 Adsorberpartikeln, insbesondere bis zu 75 Adsorberpartikeln, vorzugsweise bis zu 100 Adsorberpartikeln oder mehr, aufweisen. Dies führt zur Gewährleistung einer guten Adsorptionseffizienz, insbesondere zu einer verbesserten Adsorptionskinetik und Adsorptionskapazität.

Was das im Rahmen der vorliegenden Erfindung eingesetzte Fasermaterial anbelangt, so weisen die einzelnen adsorptiven Strukturen in Form der einzelnen Agglomerate das Fasermaterial (B) jeweils in Form von diskreten Fasern auf. Gleichermaßen können die einzelnen adsorptiven Strukturen in Form der einzelnen Agglomerate das Fasermaterial (B) jeweils in Form einer Vielzahl von diskreten Fasern aufweisen. Bei den erfindungsgemäß eingesetzten Fasern handelt es sich insbesondere um im Verhältnis zur Länge dünne und vorzugsweise flexible Gebilde mit im Vergleich zu ihrer Länge kleinen Durchmessern bzw. Querschnitten, welche einen vorzugsweise zumindest im wesentlichen kreisförmigen oder ellipsenförmigen Querschnitt aufweisen können. Gleichermaßen kommt aber auch ein Einsatz von profilierten Fasern in Betracht, z. B. Fasern mit einem trilobalen oder sternförmigen Querschnitt.

Zur Gewährleistung einer guten Partikel- bzw. Aerosolfilterfunktion sollten die einzelnen adsorptiven Strukturen in Form der einzelnen Agglomerate das Fasermaterial (B) jeweils in Form von und/oder in Mengen von mindestens 5 Fasern, insbesondere mindestens 10 Fasern, vorzugsweise mindestens 20 Fasern, bevorzugt mindestens 30 Fasern, besonders bevorzugt mindestens 50 Fasern, aufweisen. Die einzelnen adsorptiven Strukturen in Form der einzelnen Agglomerate können das Fasermaterial (B) jeweils in Form von und/oder in Mengen von bis zu 50 Fasern, insbesondere bis zu 100 Fasern, vorzugsweise bis zu 150 Fasern oder mehr, umfassen.

Das Mengenverhältnis und somit das Verhältnis der Teilchenanzahl des partikulären Adsorptionsmaterials (A) zu der Faseranzahl des Fasermaterials (B) kann in weiten Bereichen variieren. So können die einzelnen erfindungsgemäßen adsorptiven Strukturen in Form der einzelnen Agglomerate das partikuläre Adsorptionsmaterial (A) in Form von diskreten Adsorberpartikeln und das Fasermaterial (B) in Form von diskreten Fasern in einem Mengenverhältnis von Adsorberpartikeln einerseits zu Fasern andererseits von mindestens 1 : 0,5, insbesondere mindestens 1 : 1, vorzugsweise mindestens 1 : 1,5, bevorzugt mindestens 1 : 2 oder mehr, aufweisen.

Die einzelnen Fasern des Fasermaterials (B) sind insbesondere in zufälliger Anordnung auf dem Bindemittelträger fixiert, insbesondere so daß gewissermaßen eine gespinnstartige Ausbildung bzw. Anordnung der Fasern vorliegt. Dies führt zu einer besonders guten Partikel- bzw. Aerosolfilterfunktion der adsorptiven Strukturen nach der Erfindung.

In diesem Zusammenhang können die einzelnen erfindungsgemäßen adsorptiven Strukturen in Form der einzelnen Agglomerate das partikuläre Adsorptionsmaterial (A) in Form von diskreten Adsorberpartikeln und das Fasermaterial (B) in Form von diskreten Fasern in einem Mengenverhältnis von Adsorberpartikeln einerseits zu Fasern andererseits im Bereich von 1 : 0,5 bis 1 : 100, insbesondere 1 : 1 bis 1 : 80, vorzugsweise 1 : 1,5 bis 1 : 60, bevorzugt 1 : 2 bis 1 : 50, aufweisen.

Auch das Gewichtsverhältnis des partikulären Adsorptionsmaterials (A) zu dem Fasermaterial (B) kann in weiten Bereichen variieren. So ist es erfindungsgemäß vorgesehen, daß die einzelnen erfindungsgemäßen adsorptiven Strukturen in Form der einzelnen Agglomerate das partikuläre Adsorptionsmaterial (A) in Form von diskreten Adsorberpartikeln und das Fasermaterial (B) in Form von diskreten Fasern in einem Gewichtsverhältnis von Adsorberpartikeln einerseits zu Fasern andererseits von mindestens 5 : 1, besonders bevorzugt mindestens 10 : 1, ganz besonders bevorzugt mindestens 50 : 1 oder mehr, aufweisen.

In diesem Zusammenhang kann es gleichermaßen vorgesehen sein, daß die einzelnen erfindungsgemäßen adsorptiven Strukturen in Form der einzelnen Agglomerate das partikuläre Adsorptionsmaterial (A) in Form von diskreten Adsorberpartikeln und das Fasermaterial (B) in Form von diskreten Fasern in einem Gewichtsverhältnis von Adsorberpartikeln einerseits zu Fasern andererseits im Bereich von 1000 : 1 bis 5 : 1, insbesondere 500 : 1 bis 5 : 1, vorzugsweise 400 : 1 bis 5 : 1, bevorzugt 300 : 1 bis 5 : 1, besonders bevorzugt 250 : 1 bis 10 : 1, ganz besonders bevorzugt 200 : 1 bis 10 : 1, aufweisen.

Im allgemeinen kann das Mengenverhältnis bzw. das Gewichtsverhältnis des partikulären Adsorptionsmaterials (A) zu dem Fasermaterial (B) im Hinblick auf die gewünschte Funktion der erfindungsgemäßen adsorptiven Strukturen ausgewählt bzw. angepaßt werden. So kann es beispielsweise vorgesehen sein, daß die erfindungsgemäßen adsorptiven Strukturen eine höhere Anzahl bzw. eine höhere Menge des partikulären Adsorptionsmaterials (A) aufweisen, sofern die erfindungsgemäßen adsorptiven Strukturen überwiegend adsorptive Eigenschaften aufweisen. Zudem können die erfindungsgemäßen adsorptiven Strukturen eine vergleichsweise hohe Anzahl an Fasern bzw. Menge an Fasermaterial (B) aufweisen, sofern die Partikel- bzw. Filtrationseigenschaften der erfindungsgemäßen adsorptiven Strukturen stärker ausgebildet sein sollen. Der Fachmann ist diesbezüglich jederzeit in der Lage, das jeweilige Mengen- bzw. Gewichtsverhältnis insbesondere vor dem Hintergrund der jeweils gewünschen Funktion auszuwählen bzw. zu optimieren.

Was das erfindungsgemäß eingesetzte partikuläre Adsorptionsmaterials (A) anbelangt, so können eine Vielzahl an Materialien eingesetzt werden. Die jeweiligen partikelbildenden Materialien des partikulären Adsorptionsmaterials (A) sind dem Fachmann wohlbekannt, und der Fachmann ist jederzeit in der Lage, die jeweiligen partikelbildenden Materialien im Lichte der Ausrüstung der erfindungsgemäßen adsorptiven Strukturen mit speziellen Adsorptionseigenschaften auszubilden und aufeinander abzustimmen.

Erfindungsgemäß ist das partikuläre Adsorptionsmaterial (A), insbesondere das partikelbildende Material des partikulären Adsorptionsmaterials (A), ausgewählt aus der Gruppe von
(i) Aktivkohle, insbesondere kornförmiger Aktivkohle, vorzugsweise kugelförmiger Aktivkohle und/oder insbesondere geformter und/oder extrudierter Aktivkohle und/oder pulverförmiger Aktivkohle;
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) Ionenaustauscherharzen, insbesondere polydispersen und/oder monodispersen Kationen- und/oder Anionenaustauschern, insbesondere vom Geltyp und/oder vom makroporösen Typ;
(vi) anorganischen Oxiden, insbesondere Siliciumdioxiden, Silicagelen und/oder Aluminiumoxiden;
(vii) porösen organischen Polymeren und/oder porösen organisch-anorganischen Hybridpolymeren;
(viii) mineralischen Granulaten;
(ix) Klathraten; sowie
(x) deren Mischungen und/oder Kombinationen.

Vorzugsweise kann das partikuläre Adsorptionsmaterial (A), insbesondere das partikelbildende Material des partikulären Adsorptionsmaterial (A), aus Aktivkohle, insbesondere aus kornförmiger, vorzugsweise kugelförmiger Aktivkohle gebildet sein.

Gemäß einer erfindungsgemäß bevorzugten Ausführungsform kann das partikuläre Adsorptionsmaterial (A), insbesondere das partikelbildende Material des partikulären Adsorptionsmaterials (A), somit aus Aktivkohle, insbesondere aus kornförmiger, vorzugsweise kugelförmiger Aktivkohle gebildet sein. Diesbezüglich können vorzugsweise Aktivkohlekörner oder Aktivkohlekügelchen eingesetzt werden. Wie nachfolgend noch angeführt, kann das partikuläre Adsorptionsmaterial (A) bzw. die jeweiligen Adsorptionspartikel auch aus unterschiedlichen Materialien, insbesondere der vorgenannten Art, bestehen. So kann z. B. und in nichtbeschränkender Weise ein partikuläres Adsorptionsmaterial (A) auf Basis von Adsorberpartikeln in Form von Aktivkohle einerseits und Adsorberpartikel auf Basis von porösen organischen Polymeren bzw. porösen organisch-anorganischen Hybridpolymeren andererseits eingesetzt sein. Hierdurch können erfindungsgemäß somit auch die Adsorptionseigenschaften, insbesondere die Adsorptionskapazität und die Adsorptionskinetik, gewissermaßen maßgeschneidert werden und somit das Adsorptionsspektrum insbesondere im Hinblick auf die zu adsorbierenden Substanzen entsprechend ausgebildet bzw. angepaßt werden.

Erfindungsgemäß verwendbare Aktivkohlen, welche insbesondere auf Basis kugelförmiger Aktivkohle eingesetzt werden, sind beispielsweise von der Blücher GmbH, Erkrath, Deutschland, oder von der Adsor-Tech GmbH, Premnitz, Deutschland, erhältlich. Zudem kann in bezug auf die erfindungsgemäß einsetzbare mikroporöse Aktivkohle verwiesen werden auf die auf die Anmelderin selbst zurückgehende europäische Patentanmeldung EP 1 918 022 A1 sowie auf die parallele US 2008/0107589 A1, deren jeweilige Offenbarung hiermit durch Bezugnahme vollumfänglich eingeschlossen ist.

Was die Menge des partikulären Adsorptionsmaterials (A) in bezug auf die erfindungsgemäßen adsorptiven Strukturen anbelangt, so kann auch diese in weiten Bereichen variieren. So ist es erfindungsgemäß insbesondere vorgesehen, daß die einzelnen adsorptiven Strukturen in Form der einzelnen Agglomerate das partikuläre Adsorptionsmaterial (A) in Mengen von mindestens 5 Gew.-%, insbesondere mindestens 10 Gew.-%, vorzugsweise mindestens 20 Gew.-%, bevorzugt mindestens 30 Gew.-%, besonders bevorzugt mindestens 50 Gew.-% oder mehr, bezogen auf das Gesamtgewicht einer einzelnen adsorptiven Struktur in Form eines einzelnen Agglomerates aufweisen. Zudem kann es erfindungsgemäß vorgesehen sein, daß die einzelnen adsorptiven Strukturen in Form der einzelnen Agglomerate das partikuläre Adsorptionsmaterial (A) in Mengen im Bereich von mindestens 5 bis 95 Gew.-%, insbesondere 10 bis 90 Gew.-%, vorzugsweise 20 bis 85 Gew.-%, bevorzugt 30 bis 85 Gew.-%, besonders bevorzugt 50 bis 85 Gew.-%, bezogen auf das Gesamtgewicht einer einzelnen adsorptiven Struktur in Form eines einzelnen Agglomerates aufweisen.

Im allgemeinen weisen die einzelnen adsorptiven Strukturen in Form der einzelnen Agglomerate jeweils ein Gewichtsverhältnis von partikulärem Adsorptionsmaterial (A) zu Bindemittelträger von mindestens 1,5 : 1, insbesondere mindestens 2 : 1, vorzugsweise mindestens 3 : 1, besonders bevorzugt mindestens 5 : 1, ganz besonders bevorzugt mindestens 7 : 1, auf. Üblicherweise weisen die einzelnen adsorptiven Strukturen in Form der einzelnen Agglomerate jeweils ein Gewichtsverhältnis von partikulärem Adsorptionsmaterial (A) einerseits zu Bindemittelträger andererseits im Bereich von 1,5 : 1 bis 30 : 1, insbesondere 2 : 1 bis 20 : 1, vorzugsweise 3 : 1 bis 15 : 1, besonders bevorzugt 4 : 1 bis 10 : 1, auf.

Die vorgenannten Untergrenzen erklären sich maßgeblich dadurch, daß eine ausreichende Anzahl bzw. Menge bzw. Masse von Adsorberpartikeln zur Gewährleistung einer ausreichenden Adsorptionseffizienz vorhanden sein sollte, wohingegen die vorgenannten Obergrenzen zum einen insbesondere dadurch bedingt sind, daß eine ausreichende Menge an Bindemittelträger zur Gewährleistung eines stabilen Verbunds bzw. Agglomerates und zur weiterführenden Aufnahme des Fasermaterials (B) vorhanden sein sollte.

Was die Adsorberpartikel des partikulären Adsorptionsmaterials (A) weiterhin anbelangt, so sollten diese üblicherweise eine poröse Struktur aufweisen. Des weiteren sind die Adsorberpartikel, wie zuvor geschildert, insbesondere kornförmig, vorzugsweise kugelförmig ausgebildet. Hierdurch wird einerseits eine möglichst hohe Oberfläche für die Adsorption zur Verfügung gestellt und andererseits eine gute mechanische Belastbarkeit sowie eine gute Fixierbarkeit bzw. Verklebbarkeit in bezug auf den Bindemittelträger gewährleistet.

Die Teilchengrößen des partikulären Adsorptionsmaterials (A), insbesondere die Teilchengröße der Adsorberpartikel, kann gleichermaßen in weiten Bereichen variieren. Üblicherweise weist bzw. weisen das partikuläre Adsorptionsmaterial (A), insbesondere die Adsorberpartikel, Teilchengrößen, insbesondere Teilchendurchmesser, im Bereich von 0,001 bis 3 mm, insbesondere 0,005 bis 2,5 mm, vorzugsweise 0,01 bis 2 mm, besonders bevorzugt 0,02 bis 1,5 mm, ganz besonders bevorzugt 0,05 bis 1 mm, auf.

Auch die mittleren Teilchengrößen des partikulären Adsorptionsmaterials (A) bzw. der Adsorberpartikel können in weiten Bereichen variieren: Im allgemeinen weist bzw. weisen das partikuläre Adsorptionsmaterials (A), insbesondere die Adsorberpartikel, mittlere Teilchengrößen, insbesondere mittlere Teilchendurchmesser (D50), im Bereich von 0,01 bis 2 mm, insbesondere 0,05 bis 1,5 mm, vorzugsweise 0,1 bis 1 mm, auf.

Die entsprechenden Teilchengrößen bzw. -durchmesser können beispielsweise auf Basis der Methode nach ASTM D2862-97/04 bestimmt werden. Zudem können die vorgenannten Größen mit weiteren Bestimmungen auf Basis einer Siebanalyse, auf Basis von Röntgenbeugen, Laserdiffraktometrie oder dergleichen bestimmt werden. Die jeweiligen Bestimmungsmethoden sind dem Fachmann als solche wohlbekannt, so daß es diesbezüglich keiner weiteren Ausführungen bedarf.

Was die Größenverteilung der eingesetzten Adsorberpartikel des partikulären Adsorptionsmaterials (A) anbelangt, so können diese zumindest im wesentlichen monodispers oder polydispers sein.

Zur Gewährleistung einer guten Adsorptionseffizienz ist es weiterhin von Vorteil, wenn das partikuläre Adsorptionsmaterial (A), insbesondere die Adsorberpartikel, eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweist bzw. aufweisen. Üblicherweise weist bzw. weisen das partikuläre Adsorptionsmaterial (A), insbesondere die Adsorberpartikel, eine spezifische Oberfläche (BET-Oberfläche) im Bereich von 500 bis 4.000 m²/g, insbesondere 750 bis 3.000 m²/g, vorzugsweise 900 bis 2.500 m²/g, besonders bevorzugt 950 bis 2.000 m²/g, auf.

Die Bestimmung der spezifischen Oberfläche gemäß BET ist dem Fachmann grundsätzlich als solches bekannt, so daß diesbezüglich keine weitergehenden Einzelheiten ausgeführt werden zu brauchen. Alle BET-Oberflächenangaben beziehen sich auf die Bestimmung gemäß ASTM D6556-04. Im Rahmen der vorliegenden Erfindung wird zur Bestimmung der BET-Oberfläche insbesondere die sogenannte MultiPoint-BET-Bestimmungsmethode (MP-BET) in einem Partialdruckbereich p/p₀ von 0,05 bis 0,1 angewendet. In bezug auf weitergehende Einzelheiten zur Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur und auf Winnacker-Küchler (3. Auflage), Band 7, Seiten 93 ff. sowie auf Z. Anal. Chem. 238, Seiten 187 bis 193 (1968) verwiesen werden.

Zur Gewährleistung einer gewissen Stabilität, insbesondere Druckstabilität, ist es von Vorteil, wenn das partikuläre Adsorptionsmaterial (A), insbesondere die Adsorberpartikel, einen Berstdruck von mindestens 5 Newton, insbesondere einen Berstdruck im Bereich von 5 Newton bis 50 Newton, pro Partikel aufweist bzw. aufweisen. Hierdurch resultiert eine gute mechanische Belastbarkeit. Zur Gewährleistung guter Adsorptionseffizienzen sollten die eingesetzten Adsorberpartikel bzw. das partikuläre Adsorptionsmaterial (A) weiterhin über hohe Adsorptionsvolumina, hohe Gesamtporenvolumina nach Gurvich, hohe Gesamtporositäten sowie hohe spezifische Gesamtporenvolumina verfügen.

In diesem Zusammenhang sollte das partikuläre Adsorptionsmaterial (A), insbesondere die Adsorberpartikel, ein Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, aufweisen. Üblicherweise kann bzw. können das partikuläre Adsorptionsmaterial (A), insbesondere die Adsorberpartikel, ein Adsorptionsvolumen V_{ads} im Bereich von 250 bis 3.000 cm³/g, insbesondere 300 bis 2.000 cm³/g, vorzugsweise 350 bis 2.500 cm³/g, aufweisen.

Bei dem Adsorptionsvolumen V_{ads} handelt es sich um eine dem Fachmann wohlbekannte Größe zur Charakterisierung der eingesetzten partikulären Adsorptionsmaterialien. Auch die diesbezüglichen Bestimmungsmethoden sind dem Fachmann an sich wohlbekannt, so daß es hierzu keinerlei weiterführenden Ausführungen bedarf. Insbesondere handelt es sich bei dem Adsorptionsvolumen V_{ads} um das gewichtsbezogene adsorbierte N₂- Volumen, welches im allgemeinen bei einem Partialdruck p/p₀ von 0,995 bestimmt wird.

Des weiteren sollte bzw. sollten das partikuläre Adsorptionsmaterial (A), insbesondere die Adsorberpartikel, ein Gesamtporenvolumen nach Gurvich von mindestens 0,50 cm³/g, insbesondere mindestens 0,55 cm³/g, vorzugsweise mindestens 0,60 cm³/g, besonders bevorzugt mindestens 0,65 cm³/g, ganz besonders bevorzugt mindestens 0,70 cm³/g, aufweisen. Üblicherweise weist bzw. weisen das partikuläre Adsorptionsmaterial (A), insbesondere die Adsorberpartikel, ein Gesamtporenvolumen nach Gurvich im Bereich von 0,50 bis 2,0 cm³/g, insbesondere 0,55 bis 1,5 cm³/g, vorzugsweise 0,60 bis 1,2 cm³/g, besonders bevorzugt 0,65 bis 1,0 cm³/g, auf.

Was die Bestimmung des Gesamtporenvolumens nach Gurvich anbelangt, so handelt es sich um eine dem Fachmann auf diesem Gebiet an sich bekannte Meß- bzw. Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technologies Series, Seiten 111 ff.

Ferner verfügen die erfindungsgemäß eingesetzten Adsorberpartikel bzw. das erfindungsgemäß eingesetzte partikuläre Adsorptionsmaterial (A) über eine hohe Gesamtporosität. Insbesondere kann bzw. können das partikuläre Adsorptionsmaterial (A), insbesondere die Adsorberpartikel, eine Gesamtporosität im Bereich von 10 % bis 80 %, insbesondere 20 % bis 75 %, vorzugsweise 25 % bis 70 %, aufweisen.

Im allgemeinen kann es auch vorgesehen sein, daß in bezug auf das partikuläre Adsorptionsmaterial (A) Adsorberpatikel mit bestimmten Anteilen an Mikroporen, Mesoporen und Makroporen am Gesamtporenvolumen eingesetzt werden.

Im Rahmen der vorliegenden Erfindung kann es vorgesehen sein, daß das partikuläre Adsorptionsmaterial (A), insbesondere die Adsorberpartikel, ein spezifisches Gesamtporenvolumen im Bereich von 0,01 bis 4,0 cm³/g, insbesondere 0,1 bis 3,0 cm³/g, vorzugsweise 0,2 bis 2,0 cm³/g, aufweist bzw. aufweisen. Diesbezüglich kann es beispielsweise vorgesehen sein, daß der Anteil an Poren mit Porendurchmessern ≤ 75 Å, mindestens 65 %, insbesondere mindestens 70 %, vorzugsweise mindestens 75 %, beträgt. Zudem kann bzw. können das partikuläre Adsorptionsmaterial (A), insbesondere die Adsorberpartikel, bezogen auf das Gesamtporenvolumen, insbesondere auf das Gesamtporenvolumen nach Gurvich, einen Anteil an Mikroporen, insbesondere an Mikroporen mit Porendurchmessern von ≤ 30 Å, insbesondere ≤ 25 Å, vorzugsweise ≤ 20 Å, von mindestens 70 %, insbesondere mindestens 75 %, vorzugsweise mindestens 80 %, bevorzugt mindestens 85 %, besonders bevorzugt mindestens 90 %, aufweisen.

Des weiteren kann es im Rahmen der vorliegenden Erfindung vorgesehen sein, daß das partikuläre Adsorptionsmaterial (A), insbesondere die Adsorberpartikel, mit einer basischen und/oder sauren Imprägnierung ausgerüstet sind.

Was die fakultativ vorgesehene Imprägnierung des partikulären Adsorptionsmaterials (A) anbelangt, so kann diese auf Basis von Phosphorsäure, Caliumcarbonat, Trimethanolamin, 2-Amino-1,3-propandiol, Schwefel oder Kupfersalzen durchgeführt sein. In diesem Zusammenhang kann die Menge an Imprägniermittel, bezogen auf die imprägnierten Adsorberpartikel, 0,01 bis 15 Gew.-%, insbesondere 0,05 bis 12 Gew.-%, vorzugsweise 5 bis 12 Gew.-%, betragen.

Zudem kann bzw. können das partikuläre Adsorptionsmaterial (A), insbesondere die Adsorberpartikel, mit mindestens einem Katalysator ausgerüstet sein. So kann beispielsweise auf Basis einer katalytischen Ausrüstung eine Regenerierbarkeit des Adsorptionsmaterials gewährleistet werden.

In diesem Zusammenhang kann der Katalysator ausgewählt sein aus Enzymen und/oder Metallen, vorzugsweise Metallen, insbesondere aus der Gruppe von Kupfer, Silber, Cadmium, Platin, Palladium, Rhodium, Zink, Quecksilber, Titan, Zirkonium und/oder Aluminium, bevorzugt in Form der entsprechenden Metallionen. Diesbezüglich kann die Menge an Katalysator im Bereich von 0,05 bis 12 Gew.-%, vorzugsweise 1 bis 10 Gew.-%, besonders bevorzugt 2 bis 8 Gew.-%, bezogen auf das partikuläre Adsorptionsmaterial (A), liegen.

Wie zuvor angeführt, ist die vorliegende Erfindung nicht auf die Verwendung einheitlicher bzw. einer Spezies von Adsorbermaterialien hinsichtlich des partikulären Adsorptionsmaterials (A) beschränkt. Vielmehr kann das partikuläre Adsorptionsmaterial (A) als solches unterschiedliche Adsorberpartikel enthalten, beispielsweise zum einen auf Basis von Aktivkohle und zum anderen auf Basis von porösen organischen Polymeren und/oder porösen organisch-anorganischen Hybridpolymeren.

Insbesondere kann es im Rahmen der vorliegenden Erfindung vorgesehen sein, daß die einzelnen adsorptiven Strukturen in Form der einzelnen Agglomerate mindestens ein weiteres partikuläres Adsorptionsmaterial (A₁) aufweisen. Dabei können das erste partikuläre Adsorptionsmaterial (A) und das weitere partikuläre Adsorptionsmaterial (A₁) mindestens eine voneinander verschiedene physikalische und/oder chemische Eigenschaft, insbesondere mindestens einen voneinander verschiedenen physikalischen und/oder chemischen Parameter, aufweisen.

Mit anderen Worten können die einzelnen adsorptiven Strukturen bzw. die einzelnen Agglomerate neben dem partikulären Adsorptionsmaterial (A) mindestens ein weiteres Adsorptionsmaterial (A₁) bzw. noch weitere Adsorptionsmaterialien (A₂), (A₃), (A₄) etc. aufweisen.

Diesbezüglich kann die unterschiedliche physikalische bzw. chemische Eigenschaft, insbesondere der unterschiedliche physikalische bzw. chemische Parameter, ausgewählt sein aus der Gruppe von (i) Teilchengröße, insbesondere mittlerer Teilchengröße, und/oder Teilchendurchmesser, insbesondere mittlerer Teilchendurchmesser D50; (ii) spezifischer Oberfläche, insbesondere BET-Oberfläche; (iii) Porenvolumen, insbesondere Adsorptionsvolumen und/oder Gesamtporenvolumen; (iv) Porosität und/oder Porenverteilung, insbesondere Mikroporenvolumenanteil am Gesamtporenvolumen und/oder mittlerem Porendurchmesser; (v) Teilchenform; (vi) chemischer Natur des partikelbildenden Materials; (vii) Imprägnierung und/oder katalytischer Ausrüstung sowie (viii) Kombinationen von mindestens zwei dieser Eigenschaften.

In diesem Zusammenhang bezieht sich der Begriff "physikalische Eigenschaft" bzw. "physikalischer Parameter", wie er erfindungsgemäß verwendet wird, insbesondere auf die dreidimensionale Struktur bzw. Ausbildung der jeweiligen Adsorptionsmaterialien, wie beispielsweise insbesondere auf die Formgebung, die Teilchengröße und/oder den Teilchendurchmesser. Zudem können beispielsweise auch die Porosität der jeweiligen Adsorptionsmaterialien betreffende Eigenschaften zu den physikalischen Eigenschaften bzw. Parametern der erfindungsgemäß verwendeten Adsorptionsmaterialien gezählt werden, wie beispielsweise das Porenvolumen, die BET-Oberfläche und dergleichen. Die Begriffe "chemische Eigenschaften" bzw. "chemischer Parameter" betreffen dagegen insbesondere die chemische Natur der erfindungsgemäß eingesetzten Adsorptionsmaterialien betreffende Eigenschaften, wie beispielsweise die chemische Struktur des substanz- bzw. massebildenden Materials der eingesetzten Adsorptionsmaterialien. Im allgemeinen sind die vorgenannten Begriffe im Rahmen der vorliegenden Erfindung jedoch nicht streng voneinander zu trennen. So kann beispielsweise die chemische Natur des substanz- bzw. massebildenden Materials einen Einfluß auf die Porosität aufweisen, was beispielsweise das Adsorptionsverhalten der eingesetzten Adsorptionsmaterialien beeinflussen kann, so daß im Ergebnis physikalische und chemische Parameter voneinander abhängen bzw. sich aneinander bedingen können.

Sofern im Rahmen der vorliegenden Erfindung unterschiedliche Adsorptionsmaterialien eingesetzt werden, können das partikuläre Adsorptionsmaterial (A) und das mindestens eine weitere partikuläre Adsorptionsmaterial (A₁) voneinander verschiedene Teilchengrößen, insbesondere voneinander verschiedene Teilchendurchmesser, und/oder voneinander verschiedene mittlere Teilchendurchmesser, insbesondere voneinander verschiedene mittlere Teilchendurchmesser D50, aufweisen.

In diesem Zusammenhang kann es im Rahmen der vorliegenden Erfindung vorgesehen sein, daß die Teilchendurchmesser, insbesondere die mittleren Teilchendurchmesser D50, des partikulären Adsorptionsmaterials (A) und des weiteren partikulären Adsorptionsmaterials (A₁) um mindestens einen Faktor 1,1, insbesondere mindestens einen Faktor 1,25, vorzugsweise mindestens einen Faktor 1,5, bevorzugt mindestens einen Faktor 2, besonders bevorzugt mindestens einen Faktor 5, ganz besonders bevorzugt mindestens einen Faktor 10, jeweils bezogen auf den kleineren Teilchengrößenwert, voneinander verschieden sind. Üblicherweise können die Teilchengrößen, insbesondere die Teilchendurchmesser, insbesondere die mittleren Teilchendurchmesser D50, des partikulären Adsorptionsmaterials (A) und des weiteren partikulären Adsorptionsmaterials (A₁) um mindestens 0,001 mm, insbesondere um mindestens 0,01 mm, vorzugsweise um mindestens 0,05 mm, bevorzugt um mindestens 0,1 mm, voneinander verschieden sind. Dies kann insbesondere mit der Maßgabe realisiert sein, daß das partikuläre Adsorptionsmaterial (A) die größeren Werte aufweist bzw. insbesondere mit der Maßgabe realisiert sein, daß das weitere partikuläre Adsorptionsmaterial (A₁) die kleineren Werte aufweist.

Was das im Rahmen der vorliegenden Erfindung eingesetzte Fasermaterial (B) anbelangt, so kommen diesbezüglich eine Vielzahl von Fasermaterialien in Betracht.

Üblicherweise kann das Fasermaterial (B) ausgewählt sein aus der Gruppe von synthetischen Fasern (Chemiefasern), Naturfasern, insbesondere tierischen und/oder pflanzlichen Fasern, und Mineralfasern sowie deren Mischungen, vorzugsweise synthetischen Fasern (Chemiefasern).

Insbesondere kann das Fasermaterial (B) in Form von synthetischen Fasern (Chemiefasern) eingesetzt sein oder diese umfassen.

Im Rahmen der vorliegenden Erfindung hat es sich als vorteilhaft erwiesen, wenn das Fasermaterial (B) in Form von synthetische Fasern (Chemiefasern), eingesetzt ist oder diese umfaßt, insbesondere aus der Gruppe von Polyestern (PES); Polyolefinen, wie Polyethylen (PE) und Polypropylen (PP), Polyvinylchlorid (CLF); Polyvinylidenchlorid (CLF); Acetat (CA); Triacetat (CTA); Polyacryl (PAN), Polyamid (PA); Polyvinylalkohol (PVAL); Polyurethanen; Polyvinylestern; (Meth-)Acrylaten; sowie deren Mischungen.

Weiterhin kann das Fasermaterial (B) in Form von Wollfasern, insbesondere Wollfasern tierischen und/oder pflanzlichen Ursprungs, vorzugsweise in Form von Schafswolle und/oder Baumwolle, bevorzugt Schafswolle, eingesetzt sein oder diese umfassen.

Wiederum weiterhin kann das Fasermaterial (B) in Form von Glasfasern eingesetzt sein oder diese umfassen. Gleichermaßen kann das Fasermaterial (B) auch in Form von Bastfasern; Fruchtfasern, insbesondere Kokosfasern; Tierhaar, insbesondere Roßhaar; Seidenfasern; Fasern aus natürlichen Polymeren, insbesondere Viskosefasern; Basaltfasern; Kohlenstoffasern; Metallfasern und/oder Keramikfasern eingesetzt sein oder diese umfassen.

Wie zuvor angeführt, führt der zweckgerichtete Einsatz von Fasern bzw. des Fasermaterials (B) dazu, daß die erfindungsgemäßen adsorptiven Strukturen neben den durch das Adsorptionsmaterial gewährleisteten adsorptiven Eigenschaften auch Partikel- und/oder Aerosolfiltereigenschaften aufweisen, so daß im Rahmen der vorliegenden Erfindung gewissermaßen ein multifunktionales Adsorptions- und Filtermaterial bereitgestellt wird. Dabei können die Fasern auch die Funktion eines Abstandshalters insbesondere in bezug auf aneinanderliegende Agglomerate, wie sie beispielsweise in einer Schüttung vorliegen, aufweisen. Dies ist beispielsweise hinsichtlich der Schüttdichte der adsorptiven Strukturen nach der Erfindung von Relevanz, insbesondere im Hinblick auf den Druckverlust bzw. das Durchströmverhalten, denn aufgrund der Verwendung spezieller Fasern sowie deren mengenmäßigen Abstimmung kann die Schüttdichte gezielt beeinflußt werden.

Gemäß einer weiteren erfindungsgemäßen Ausführungsform kann das Fasermaterial (B) auch in Form von Aktivkohlefasern eingesetzt sein. In diesem Zusammenhang können die Aktivkohlefasern beispielsweise erhältlich sein durch Carbonisieren und nachfolgende Aktivierung organischer Ausgangsfasern, insbesondere von Cellulosefasern, Fasern auf Basis von Cellulosederivaten, Phenolharzfasern, Polyvinylalkoholfasern, Pechfasern, Acrylharzfasern, Polyacrylnitrilfasern, aromatischen Polyamidfasern, Formaldehydharzfasern, divinylbenzolvernetzten Polystyrolfasern, Ligninfasern, Baumwollfasern und/oder Hanffasern.

Durch den gezielten Einsatz von Fasermaterialien auf Basis von Aktivkohlefasern ist es im Rahmen der vorliegenden Erfindung sogar möglich, daß die erfindungsgemäßen adsorptiven Strukturen - in weiterführender Ergänzung zu der Partikel- und/oder Aerosolfilterfunktion - noch weiter verbesserte bzw. optimierte Eigenschaften hinsichtlich der Adsorption von Schadstoffen aufweisen. Denn die Adsorptionskapazität wird durch die Bereitstellung weiterer adsorptiver Bestandteile - nämlich in Form der Aktivkohlefasern - erhöht. Zudem kann durch den gezielten Einsatz von Aktivkohlefasern in Ergänzung zu den partikulären Adsorptionsmaterialien eine weiterführende Verbesserung der Adsorptionseigenschaften dahingehend realisiert sein, daß die adsorptiven Strukturen - nämlich Aktivkohlefasern (B) einerseits und partikuläres Adsorptionsmaterial (A) andererseits - über sich ergänzende positive Adsorptionseigenschaften verfügen. Denn - ohne sich auf diese Theorie beschränken zu wollen - weisen Aktivkohlefasern im allgemeinen eine höhere Anfangsspontaneität auf, während die teilchenförmigen bzw. partikulären Adsorptionsmaterialien eine höhere Adsorptionskapazität aufweisen. Durch die gezielte Kombination der adsorptiven Systeme, nämlich Aktivkohlefasern einerseits und partikuläres Adsorptionsmaterial andererseits, kann die Adsorptionskinetik somit insgesamt verbessert werden. Insbesondere liegt ein noch weiter verbessertes Durchbruchverhalten in bezug auf die erfindungsgemäßen adsorptiven Strukturen bei gleichzeitig hoher Adsorptionskapazität vor. Zudem weisen auch die Aktivkohlefasern gute Eigenschaften hinsichtlich der Partikel- und/oder Aerosolfilterung auf.

Die Menge an Fasermaterial in bezug auf die adsorptiven Strukturen nach der Erfindung kann in weiten Bereichen variieren: So können die einzelnen adsorptiven Strukturen in Form der einzelnen Agglomerate das Fasermaterial (B) in Mengen von mindestens 0,5 Gew.-%, insbesondere mindestens 1 Gew.-%, vorzugsweise mindestens 2 Gew.-%, bevorzugt mindestens 5 Gew.-%, bezogen auf das Gesamtgewicht einer einzelnen adsorptiven Struktur, insbesondere eines einzelnen Agglomerates, aufweisen. Üblicherweise können die einzelnen adsorptiven Strukturen (1) in Form der einzelnen Agglomerate das Fasermaterial (B) in Mengen von höchstens 40 Gew.-%, insbesondere höchstens 30 Gew.-%, vorzugsweise höchstens 25 Gew.-%, bevorzugt höchstens 20 Gew.-%, bezogen, auf das Gesamtgewicht einer einzelnen adsorptiven Struktur in Form der eines einzelnen Agglomerates aufweisen. Gleichermaßen ist es im Rahmen der vorliegenden Erfindung möglich, daß die einzelnen adsorptiven Strukturen in Form der einzelnen Agglomerate das Fasermaterial (B) in Mengen im Bereich von 0,5 bis 40 Gew.-%, insbesondere 1 bis 30 Gew.-%, vorzugsweise 2 bis 25 Gew.-%, bevorzugt 5 bis 20 Gew.-%, bezogen auf das Gesamtgewicht einer einzelnen adsorptiven Struktur in Form eines einzelnen Agglomerates aufweisen.

Zudem kann auch das Gewichtsverhältnis von Fasermaterial (B) zu Bindemittelträger der erfindungsgemäßen adsorptiven Strukturen in weiten Bereichen variieren: So kann es im Rahmen der vorliegenden Erfindung vorgesehen sein, daß die einzelnen adsorptiven Strukturen in Form der einzelnen Agglomerate jeweils ein Gewichtsverhältnis von Fasermaterial (B) zu Bindemittelträger von mindestens 0,05 : 1, insbesondere mindestens 0,2 : 1, vorzugsweise mindestens 0,5 : 1, aufweisen. Üblicherweise können die einzelnen adsorptiven Strukturen (1) in Form der einzelnen Agglomerate jeweils ein Gewichtsverhältnis von Fasermaterial (B) einerseits zu Bindemittelträger (2) andererseits im Bereich von 0,1 : 1 bis 5 : 1, insbesondere 0,2 : 1 bis 3 : 1, vorzugsweise 0,5 : 1 bis 2 : 1, besonders bevorzugt 0,75 : 1 bis 1,5 : 1, aufweisen.

Die vorgenannte Mengenangaben bzw. Gewichtsverhältnisse können dabei insbesondere auch vor dem Hintergrund der gezielten Einstellung der Partikel-und/oder Aerosolfiltereigenschaft entsprechend angepaßt bzw. ausgewählt werden. Zudem können die oben genannten Werteangaben hinsichtlich des Gewichtsanteils des Fasermaterials (B) sowie des Gewichtsverhältnisses des Fasermaterials (B) zu dem Bindemittelträger im Hinblick auf die zuvor beschriebene Abstandsfunktion des Fasermaterials eingestellt bzw. optimiert werden.

Im allgemeinen kann das Fasermaterial (B) Fasern mit einer Faserlänge von mindestens 0,1 mm, insbesondere mindestens 0,5 mm, vorzugsweise mindestens 0,75 mm, bevorzugt mindestens 1 mm, aufweisen. Üblicherweise kann das Fasermaterial (B) Fasern mit einer Faserlänge von höchstens 100 mm, insbesondere höchstens 70 mm, vorzugsweise höchstens 50 mm, bevorzugt höchstens 40 mm, aufweisen. Üblicherweise kann das Fasermaterial (B) Fasern mit einer Faserlänge im Bereich von 0,1 bis 100 mm, insbesondere 0,5 bis 70 mm, vorzugsweise 0,5 bis 50 mm, bevorzugt 0,75 bis 40 mm, besonders bevorzugt 1 bis 30 mm, aufweisen.

Zudem kann das Fasermaterial (B) Fasern mit einer mittleren Faserlänge von mindestens 0,5 mm, insbesondere mindestens 1 mm, vorzugsweise mindestens 2 mm, bevorzugt mindestens 5 mm, aufweisen. Üblicherweise kann das Fasermaterial (B) Fasern mit einer mittleren Faserlänge von höchstens 100 mm, insbesondere höchstens 50 mm, vorzugsweise höchstens 40 mm, bevorzugt höchstens 30 mm, aufweisen. Weiterhin kann das Fasermaterial (B) Fasern mit einer mittleren Faserlänge im Bereich von 0,5 bis 100 mm, insbesondere 1 bis 50 mm, vorzugsweise 2 bis 40 mm, bevorzugt 3 bis 30 mm, besonders bevorzugt 5 bis 20 mm, aufweisen.

Darüber hinaus können auch die mittleren Faserdurchmesser des Fasermaterials (B) bzw. der Fasern des Fasermaterials (B) in weiten Bereichen variieren: So kann es erfindungsgemäß vorgesehen sein, daß das Fasermaterial (B) Fasern mit einem mittleren Faserdurchmesser von mindestens 0,4 µm, insbesondere mindestens 0,6 µm, vorzugsweise mindestens 0,8 µm, bevorzugt mindestens 1 µm, aufweist. Üblicherweise kann das Fasermaterial (B) Fasern mit einem mittleren Faserdurchmesser von höchstens 1.000 µm, insbesondere höchstens 800 µm, vorzugsweise höchstens 600 µm, bevorzugt höchstens 500 µm, aufweisen. Weiterhin kann das Fasermaterial (B) Fasern mit einem mittleren Faserdurchmesser im Bereich von 0,4 bis 1.000 µm, insbesondere 0,6 bis 800 µm, vorzugsweise 0,8 bis 600 µm, bevorzugt 1 bis 500 µm, aufweisen. Zudem kommt auch der Einsatz von Fasern mit geringerem Faserdurchmesser in Betracht, wobei es sich diesbezüglich insbesondere um dem Fachmann an sich wohlbekannte Nanofasern, *Meltblown*-Fasern und/oder um elektrogesponnene Fasern handeln kann. Derartige Fasern sind im allgemeinen auf Basis von Polymerwerkstoffen hergestellt und weisen mittlere Faserdurchmesser von höchstens 0,5 µm, insbesondere höchstens 0,4 µm, vorzugsweise höchstens 0,2 µm, auf. Zudem können Nanofasern mit den oben angeführen Fasern, insbesondere Mikrofasern, kombiniert werden. Erfindungsgemäß kann demnach ein gleichzeitiger Einsatz von Nanofasern und Mikrofasern vorgesehen sein.

Wie zuvor angeführt, kann das erfindungsgemäß verwendete Fasermaterial (B) gewährleisten, daß die erfindungsgemäßen adsorptiven Strukturen neben ihren adsorptiven Eigenschaften auch die Funktion eines Partikel- bzw. Aerosolfilters aufweisen, insbesondere sofern die erfindungsgemäßen Strukturen in Form einer losen Schüttung oder als Formkörper eingesetzt werden, da sich hierbei die jeweiligen Fasern gewissennaßen gespinnstartig zu einem Filter angeordnet sind, wobei sich der Filter über den gesamten Bereich bzw. das gesamte Volumen der Schüttung bzw. des Formkörpers erstreckt. Zudem kann das Fasermaterial (B) gewissermaßen als Abstandshalter in bezug auf die einzelnen adsorptiven Strukturen nach der Erfindung fungieren und somit insbesondere auch die Schüttdichte und damit das Durchströmverhalten bzw. den Druckverlust beim Durchströmen der adsorptiven Strukturen mit dem entsprechenden Medium beeinflussen. Vor diesem Hintergrund können zur jeweiligen Optimierung der vorgenannten Funktionen die spezifischen Fasereigenschaften ausgewählt bzw. zweckgerichtet angepaßt werden:

So kann es insbesondere im Hinblick auf eine Maßschneiderung bzw. Optimierung bzw. Gewährleistung der Partikel- oder Aerosolfilterfunktion vorgesehen sein, daß die Fasern des Fasermaterials im Vergleich zu den im allgemeinen verwendbaren Fasern geringere Faserdurchmesser und/oder geringere Faserlängen aufweisen.

In diesem Zusammenhang kann es somit vorgesehen sein, daß - insbesondere sofern das Fasermaterial im Hinblick auf eine weiterführende Optimierung der Partikel- und Aerosolfiltereigenschaft ausgewählt sein soll - das Fasermaterial (B) Fasern mit einem mittleren Faserdurchmesser von höchstens 100 µm, insbesondere höchstens 50 µm, vorzugsweise höchstens 10 µm, bevorzugt höchstens 5 µm, ganz besonders bevorzugt höchstens 2 µm, aufweist. In diesem Zusammenhang kann das Fasermaterial (B) Fasern mit einem mittleren Faserdurchmesser im Bereich von 0,4 bis 100 µm, insbesondere 0,5 bis 50 µm, vorzugsweise 0,55 bis 10 µm, bevorzugt 0,6 bis 10 µm, aufweisen.

Zudem kann es im Rahmen der vorliegenden Erfindung vorgesehen sein, daß - sofern das Fasermaterial im Hinblick auf eine weiterführende Optimierung der Partikel- und Aerosolfiltereigenschaft ausgewählt sein soll - das Fasermaterial (B) Fasern mit einer mittleren Faserlänge von höchstens 50 mm, insbesondere höchstens 40 mm, vorzugsweise höchstens 30 mm, bevorzugt höchstens 20 mm, aufweist. In diesem Zusammenhang kann das Fasermaterial (B) Fasern mit einer mittleren Faserlänge im Bereich von 0,1 bis 50 mm, insbesondere 0,5 bis 40 mm, vorzugsweise 0,8 bis 30 mm, bevorzugt 1 mm bis 20 mm, aufweisen.

Sofern die erfindungsgemäßen adsorptiven Strukturen insbesondere im Hinblick auf eine Beeinflussung der Partikeldichte, beispielsweise in bezug auf eine Schüttung oder eines Formkörpers, optimiert werden soll, insbesondere was eine gewisse Beabstandung der einzelnen adsorptiven Strukturen bzw. der einzelnen Agglomerate und somit eine Verringerung der Partikeldichte anbelangt, so sollte das Fasermaterial (B) bzw. die diesbezüglichen Fasern in bezug auf ihre Eigenschaft als Abstandshalter im Vergleich zu den im allgemeinen einsetzbaren Fasern größere Faserlängen und/oder größere Faserdurchmesser aufweisen:
So kann es im Rahmen der vorliegenden Erfindung vorgesehen sein, daß - sofern das Fasermaterial (B) bzw. die diesbezüglichen Fasern im Hinblick auf die Funktion als Abstandshalter optimiert werden sollen - das Fasermaterial (B) Fasern mit einer mittleren Faserlänge von mindestens 0,5 mm, insbesondere mindestens 1 mm, vorzugsweise mindestens 1,5 mm, bevorzugt mindestens 2 mm, aufweist. In diesem Zusammenhang kann das Fasermaterial (B) Fasern mit einer mittleren Faserlänge im Bereich von 2 bis 100 mm, insbesondere 4 bis 80 mm, vorzugsweise 5 bis 60 mm, bevorzugt 6 mm bis 50 mm, aufweisen.

Weiterhin kann es erfindungsgemäß vorgesehen sein, daß - sofern das Fasermaterial (B) bzw. die diesbezüglichen Fasern im Hinblick auf die Funktion als Abstandshalter optimiert werden sollen - das Fasermaterial (B) Fasern mit einem mittleren Faserdurchmesser von mindestens 1 µm, insbesondere mindestens 5 µm, vorzugsweise mindestens 10 µm, bevorzugt mindestens 20 µm, aufweist. Diesbezüglich kann das Fasermaterial (B) Fasern mit einem mittleren Faserdurchmesser im Bereich von 1 bis 1.000 µm, insbesondere 5 bis 800 µm, vorzugsweise 10 bis 700 µm, bevorzugt 20 bis 600 µm, aufweisen. Im Rahmen der vorliegenden Erfindung kann es auch vorgesehen sein, daß die einzelnen adsorptiven Strukturen, insbesondere die einzelnen Agglomerate, mindestens ein weiteres Fasermaterial (B₁) aufweisen. In diesem Zusammenhang kann das Fasermaterial (B) und das weitere Fasermaterial (B₁) mindestens eine voneinander verschiedene physikalische und/oder chemische Eigenschaft, insbesondere mindestens einen voneinander verschiedenen physikalischen und/oder chemischen Parameter, aufweisen.

Insbesondere kann die physikalische und/oder chemische Eigenschaft, insbesondere der physikalische und/oder chemische Parameter, ausgewählt sein aus der Gruppe von (i) Faserlänge, insbesondere mittlerer Faserlänge; (ii) Faserdurchmesser, insbesondere mittlerem Faserdurchmesser; (iii) chemischer Natur des faserbildenden Materials sowie (vi) Kombinationen von mindestens zwei dieser Eigenschaften.

Was die erfindungsgemäßen adsorptiven Strukturen weiterhin anbelangt, so bildet der Bindemittelträger mindestens einen Kern einer einzelnen adsorptiven Struktur in Form eines einzelnen Agglomerates. Zudem können die jeweiligen Teilchen oder Partikel und/oder Adsorberpartikel des partikulären Adsorptionsmaterials (A) und/oder die Fasern des Fasermaterials (B) einer einzelnen adsorptiven Struktur in Form eines einzelnen Agglomerates jeweils an mindestens einem Kern in Form des Bindemittelträgers angeordnet bzw. angelagert sein. In diesem Zusammenhang kann eine einzelne adsorptive Struktur nach der Erfindung in Form eines in Form einzelnes Agglomerates, auch einen oder mehrere Kerne in Form des Bindemittelträgers umfassen.

Die Größe des Kerns aus dem Bindemittelträger kann dabei in weiten Grenzen variieren.

Insbesondere besitzt der Bindemittelträger und/oder der Kern in Form des Bindemittelträgers eine Größe von 100 bis 2.000 µm, insbesondere 150 bis 1.500 µm, vorzugsweise 200 bis 1.000 µm. Üblicherweise kann dabei das Größenverhältnis von Bindemittelträger und/oder Kern in Form des Bindemittelträgers zu einzelnem Adsorberpartikel des partikulären Adsorptionsmaterials (A) mindestens 1 : 1, insbesondere mindestens 1,25: 1, vorzugsweise mindestens 1,5 : 1, besonders bevorzugt mindestens 2 : 1, ganz besonders bevorzugt mindestens 3 : 1, betragen. Üblicherweise kann das Größenverhältnis von Bindemittelträger und/oder Kern in Form des Bindemittelträgers zu einzelner Faser des Fasermaterials (B), bezogen auf den mittleren Faserdurchmesser, mindestens 2 : 1, insbesondere mindestens 5 : 1, vorzugsweise mindestens 10: 1, betragen. Durch die gezielte Auswahl der Größe der adsorptiven Strukturen sowie der jeweiligen Größenverhältnisse können die adsorptiven Eigenschaften sowie die Filtrationseigenschaften und zudem auch die Schüttdichte der erfindungsgemäßen adsorptiven Strukturen weiterführend optimiert bzw. angepaßt werden.

Im allgemeinen sind die einzelnen adsorptiven Strukturen in Form der einzelnen Agglomerate selbsttragend ausgebildet.

Insbesondere sind die einzelnen adsorptiven Strukturen in Form der einzelnen Agglomerate teilchenförmig ausgebildet. In diesem Zusammenhang können die einzelnen adsorptiven Strukturen in Form der einzelnen Agglomerate eine Teilchengröße, insbesondere eine mittlere Teilchengröße, und/oder einen Teilchendurchmesser, insbesondere einen mittleren Teilchendurchmesser D50, im Bereich von 0,01 bis 20 mm, insbesondere 0,05 bis 15 mm, vorzugsweise 0,1 bis 10 mm, besonders bevorzugt 0,2 bis 7,5 mm, ganz besonders bevorzugt 0,5 bis 5 mm, aufweisen.

Was die Größe der erfindungsgemäßen adsorptiven Strukturen anbelangt, so können die einzelnen adsorptiven Strukturen in Form der einzelnen Agglomerate teilchenförmig ausgebildet sein. Diesbezüglich können die einzelnen adsorptiven Strukturen in Form der einzelnen Agglomerate eine Teilchengröße und/oder einen Teilchendurchmesser im Bereich vom 0,01 bis 20 mm, insbesondere 0,05 bis 15 mm, vorzugsweise 0,1 bis 10 mm, besonders bevorzugt 0,2 bis 7,5 mm, ganz besonders bevorzugt 0,5 bis 5 mm, aufweisen. Bei den vorgenannten Teilchengrößenangaben bzw. Teilchendurchmesserangaben handelt es sich um absolute Teilchengrößen.

Typischerweise besitzen die einzelnen adsorptiven Strukturen nach der Erfindung in Form der einzelnen Agglomerate eine himbeer- oder brombeerartige Struktur. Dabei sind einzelne äußere Adsorberpartikel sowie einzelne äußere Fasern um einen oder mehrere innere Kerne aus dem Bindemittelträger insbesondere zufällig angeordnet. In diesem Zusammenhang ist es erfindungsgemäß von Vorteil, wenn die einzelnen Teilchen bzw. Partikel der jeweiligen partikulären Adsorptionsmaterialien sowie die Fasern des Fasermaterials leicht in den Bindemittelträger eingedrückt sind, so daß zum einen eine ausreichende Fixierung bzw. Haftung der Strukturen auf dem Bindemittelträger gewährleistet ist und zum anderen aber auch im fixierten Zustand der Teilchen bzw. Fasern eine ausreichende Zugänglichkeit vorliegt.

Was das den Kern des adsorptiven Systems nach der Erfindung ausbildende Bindemittel als solches bzw. den Bindemittelträger als solchen anbelangt, so kann dieses auf Basis einer Vielzahl hierfür geeigneter Materialien ausgewählt werden. Erfindungsgemäß handelt es sich bei dem Bindemittel bzw. dem Bindemittelträger um ein thermoplastisches Material, wobei das diesbezügliche Bindemittel üblicherweise weiterhin hitzeklebrig ausgebildet sein sollte. Erfindungsgemäß ist das Bindemittel bzw. der Bindemittelträger auf Basis eines organischen Polymers ausgebildet. In diesem Zusammenhang ist das organische Polymer thermoplastisch ausgebildet. Zudem sollte das für das Bindemittel eingesetzte organische Polymer, wie zuvor angeführt, hitzeklebrig ausgebildet sein. Weiterhin sollte das organische Polymer aus Polymeren aus der Gruppe von Polyestern, Polyamiden, Polyethern, Polyetherestern und/oder Polyurethanen sowie aus deren Mischungen und Copolymeren ausgewählt sein. Insbesondere kommen auch Kleber auf Basis von Copolyestern und/oder Copolyamiden in Betracht.

Bei dem organischen Polymer des Bindemittelträgers sollte es sich um einen thermoplastischen Schmelzklebstoff handeln. Dabei sollte das thermoplastische Bindemittel bevorzugt ein thermoplastischer Schmelzklebstoff auf der Grundlage von Polymeren aus der Gruppe von Polyestern, Polyamiden, Polyethern, Polyetherestern und/oder Polyurethanen sowie deren Mischungen und Copolymeren, sein.

Üblicherweise ist das organische Polymer, insbesondere das Bindemittel, vorzugsweise der Schmelzklebstoff, bei 25 °C und Atmosphärendruck fest. Hierdurch wird eine hervorragende Haftung der partikulären Strukturen auf dem Bindemittelträger bei Raumtemperatur gewährleistet.

Darüber hinaus sollte das organische Polymer, insbesondere das Bindemittel, vorzugsweise der Schmelzklebstoff, einen Schmelz- oder Erweichungsbereich oberhalb von 100 °C, vorzugsweise oberhalb von 110 °C, insbesondere oberhalb von 120 °C, aufweisen. Im allgemeinen weist das organische Polymer, insbesondere das Bindemittel, vorzugsweise der Schmelzklebstoff, eine Temperaturbeständigkeit von mindestens 100 °C, vorzugsweise mindestens 125 °C, insbesondere mindestens 150 °C, auf. Für den Fachmann versteht es sich von selbst, dass das organische Polymer, insbesondere das Bindemittel, vorzugsweise der Klebstoff, einen niedrigeren Schmelz- bzw. Erweichungspunkt als die übrigen für die erfindungsgemäßen adsorptiven Strukturen eingesetzten Materialien, insbesondere im Hinblick auf das verwendete Fasennaterial, aufweist.

Zur Gewährleistung einer guten Adsorptionseffizienz, insbesondere Adsorptionskinetilc oder Adsorptionskapazität, sowie zur Gewährleistung der Funktion der Partikel- und/oder Aerosolfiltration bzw. der Beabstandung der einzelnen adsorptiven Strukturen, ist es vorteilhaft, wenn die jeweiligen Teilchen oder Partikel und/oder Adsorberpartikel des partikulären Adsorptionsmaterials (A) und/oder die Fasern des Fasermaterials (B) einer einzelnen adsorptiven Struktur, insbesondere eines einzelnen Agglomerats, unabhängig voneinander, jeweils zu höchstens 50 %, insbesondere zu höchstens 40 %, bevorzugt zu höchstens 30 %, ganz besonders bevorzugt zu höchstens 20 %, ihrer Oberfläche mit dem Bindemittelträger (2) bedeckt und/oder belegt sind. Hierdurch ist - bei gleichzeitig guter Fixierung bzw. Haftung - eine hervorragende Zugänglichkeit insbesondere der äußeren Oberfläche der partikulären Adsorptionsmaterialien in bezug auf adsorbierende Substanzen sowie der Fasern in bezug auf zu filternde Partikel bzw. Aerosole gegeben. Ein gewisser Bedeckungsgrad der Oberfläche mit dem Bindemittel ist insbesondere vor dem Hintergrund erforderlich, daß eine gute Haftung bzw. Fixierung der Adsorberpartikel (A) bzw. des Fasermaterials (B) an dem Bindemittelträger gewährleistet ist.

Gemäß einer besonderen Ausführungsform der vorliegenden Erfindung können die adsorptiven Strukturen nach der Erfindung bzw. die sie bildenden Agglomerate zu einem Formkörper verarbeitet werden, was insbesondere mittels Verpressung erfolgen kann.

Sofern im Rahmen der vorliegenden Erfindung von einer Schüttung bzw. einem Formkörper gesprochen wird, bezieht sich diese Angabe insbesondere auf eine Schüttung bzw. einen Formkörper, welche bzw. welcher eine Höhe von 1 bis 10 cm, insbesondere von 2 cm bis 5 cm, vorzugsweise 2 cm und/oder einen Durchmesser von 1 bis 15 cm, insbesondere 5 cm bis 11 cm, vorzugsweise 5 cm, aufweist bzw. eine Breite und/oder Länge, unabhängig voneinander, von 1 bis 10 cm, insbesondere von 2 cm bis 5 cm, vorzugsweise 2 cm, aufweist.

Ein besonderer Vorteil des erfindungsgemäßen adsorptiven Systems ist zudem darin zu sehen, daß das adsorptive System nach der Erfindung bzw. das entsprechende Agglomerat, insbesondere in loser Schüttung oder in Form eines Formkörpers, einen deutlich reduzierten Druckverlust, insbesondere im Vergleich zu den jeweiligen Adsorberpartikeln als solchen, aufweisen, so daß eine gute Durchströmung des adsorptiven Systems mit dem aufzureinigendem Medium, insbesondere Luft, erfolgen kann - und dies bei gleichzeitiger Bereitstellung von Partikel- und/oder Aerosolfiltereigenschaften. So weisen die erfindungsgemäßen adsorptiven Strukturen bzw. die Agglomerate, insbesondere in loser Schüttung oder in Form eines Formkörpers, einen längenbezogenen Druckverlust bei einer Strömungsgeschwindigkeit von 0,2 m/s von höchstens 200 Pa/cm, insbesondere höchstens 140 Pa/cm, vorzugsweise höchstens 100 Pa/cm, besonders bevorzugt höchstens 80 Pa/cm, ganz besonders bevorzugt höchstens 60 Pa/cm, noch mehr bevorzugt höchstens 40 Pa/cm, auf. Üblicherweise weisen die erfindungsgemäßen adsorptiven Strukturen bzw. die Agglomerate, insbesondere in loser Schüttung oder in Form eines Formkörpers, einen längenbezogenen Druckverlust bei einer Strömungsgeschwindigkeit von 0,2 m/s im Bereich von 5 bis 200 Pa/cm, insbesondere 5 bis 140 Pa/cm, vorzugsweise 5 bis 100 Pa/cm, besonders bevorzugt 7,5 bis 80 Pa/cm, ganz besonders bevorzugt 10 bis 70 Pa/cm, auf.

Im Vergleich hierzu besitzen lose Schüttungen gleichartiger Adsorberpartikel, wie sie in den erfindungsgemäßen adsorptiven Strukturen eingesetzt werden und welche zudem keine Filterfunktion im Sinne der vorliegenden Erfindung aufweisen, in Form separater Teilchen typischerweise längenbezogene Druckverluste bei einer Strömungsgeschwindigkeit von 0,2 m/s im Bereich von 22 bis 600 Pa/cm. Das Durchströmverhalten der erfindungsgemäßen,adsorptiven Systeme ist somit gegenüber dem Stand der Technik deutlich verbessert - und dies bei gleichzeitiger Gewährleistung einer zusätzlichen Partikel- und/oder Aerosolfilterfunktion.

Darüber hinaus verfügen die adsorptiven Strukturen nach der Erfindung, insbesondere in loser Schüttung oder in Form eines Formkörpers, über hervorragende Eigenschaften der Partikel- und/oder Aerosolfiltration, insbesondere wie nachfolgend angeführt:
So können die erfindungsgemäßen adsorptiven Strukturen und/oder die Agglomerate, insbesondere in loser Schüttung oder in Form eines Formkörpers, einen mittleren Wirkungsgrad Eₘ nach DIN EN 779 (Juli 1993) von mindestens 40 %, insbesondere mindestens 50 %, vorzugsweise mindestens 70 %, besonders bevorzugt mindestens 90 %, ganz besonders bevorzugt mindestens 95 %, aufweisen. Zudem können die adsorptiven Strukturen und/oder die Agglomerate, insbesondere in loser Schüttung oder in Form eines Formkörpers, einen mittleren Abscheidegrad Aₘ nach DIN EN 779 (Juli 1993) von mindestens 50 %, insbesondere mindestens 70 %, vorzugsweise mindestens 90 %, besonders bevorzugt mindestens 95 %, ganz besonders bevorzugt mindestens 99 %, aufweisen. Weiterhin können die adsorptiven Strukturen und/oder die Agglomerat, insbesondere in loser Schüttung oder in Form eines Formkörpers, einen integralen Anfangsdurchlaßgrad Dᵢ nach DIN EN 1822 (April 1998; DEHS-Aerosol, MPPS = 0,1 bis 0,3 µm) von höchstens 50 %, insbesondere höchstens 40 %, vorzugsweise höchstens 30 %, besonders bevorzugt höchstens 20 %, ganz besonders bevorzugt höchstens 10 %, aufweisen.

Der mittlere Wirkungsgrad Eₘ kann insbesondere nach DIN EN 779 (Juli 1993) bestimmt werden. Nach dieser Vorschrift wird der mittlere Abscheidegrad Aₘ durch eine gravimetrische Prüfmethode bestimmt, wobei eine mehrmalige Bestaubung des Prüflings mit einer bekannten Menge eines standardisierten künstlichen Prüfstaubes in strömender Luft bis zum maximalen Enddruckverlust von 250 Pa erfolgt, wobei jeweils der Abscheidegrad aus den Massenverhälinissen durch Wägen eines dem Prüfling nachgeschalteten Schwebstoffilters bestimmt wird, wobei der mittlere Abscheidegrad Aₘ, berechnet aus allen Einzelmessungen, gilt; für weitere diesbezügliche Einzelheiten kann auf die DIN EN 779 verwiesen werden. Der mittlere Wirkungsgrad Eₘ dagegen wird nach DIN 779 mittels einer Verfärbungsprüfmethode durch mehrfache Messung des Wirkungsgrades gegenüber natürlichem atmosphärischem Staub in der Luft gemessen, wobei der Prüfling nach einer ersten Messung im Neuzustand mit einer bekannten Menge von standardisierten künstlichem Prüfstaub nach DIN EN 779 beladen und danach die Bestimmung des Wirkungsgrads erneut vorgenommen wird, bis ein Enddruckverlust von 450 Pa erreicht ist, wobei die Messung des Wirkungsgrades auf dem Vergleich jener Prüfluftvolumina beruht, die vor und nach dem Prüfling durch je ein weißes Schwebstoffilterpapier gesaugt werden müssen, bis diese gleich verfärbt bzw. getrübt sind, wobei der mittlere Wirkungsgrad Eₘ, berechnet aus allen Einzelmessungen, gilt; für weitere diesbezügliche Einzelheiten kann auf DIN EN 779 verwiesen werden.

Die Prüfmethode gemäß DIN EN 1822, welche in bezug auf die Bestimmung des integralen Anfangsdurchlaßgrades Dᵢ verwendet werden kann, wird an unverschmutzten Prüflingen mit einem flüssigen Prüfaerosol (DEHS = Diethylhexylsebacat), basierend auf Meßwerten für jeweils einen dem Durchlaßgradmaximum entsprechenden Partikeldurchmesser (sogenannter MPPS, hier: 0,1 bis 0,3 µm), durchgeführt. In einem ersten Schritt der Untersuchung wird an flachen Mustern des Filtermedium jene Partikelgröße ermittelt, bei welcher das Durchlaßmaximum (MPPS) erreicht wird, wobei die nachfolgende Beurteilung und Klassierung der Filter nur noch für den MPPS erfolgt. In einem zweiten Schritt wird dann der über die Ausblasfläche ermittelte integrale Durchlaßgrad Dᵢ für den MPPS und der Druckverlust des Filters, beides beim Nennvolumenstrom, gemessen. Für weitergehende diesbezügliche Einzelheiten kann auf die DIN EN 1822 verwiesen werden.

Weiterhin können die erfindungsgemäßen adsorptiven Strukturen und/oder die Agglomerate, insbesondere in loser Schüttung oder in Form eines Formkörpers, bei einer Einströmgeschwindigkeit von 0,1 m/s eine mittlere Abscheiderate gegenüber Partikeln und/oder Aerosolen mit Durchmessern im Bereich von 0,1 bis 0,3 µm von mindestens 80 %, insbesondere mindestens 90 %, vorzugsweise mindestens 95 %, aufweisen. Zudem können die erfindungsgemäßen adsorptiven Strukturen und/oder die Agglomerate, insbesondere in loser Schüttung oder in Form eines Formkörpers, bei einer Anströmgeschwindigkeit von 0,1 m/s eine mittlere Abscheiderate gegenüber Partikeln und/oder Aerosolen mit Durchmessern ≥ 2 µm, insbesondere 1,5 µm, von mindestens 95 %, insbesondere mindestens 98 %, bevorzugt mindestens 99 %, aufweisen.

Im Ergebnis ist es im Rahmen der vorliegenden Erfindung gelungen, ein effektives adsorptives Material bereitzustellen, welches sowohl herausragende adsorptive Eigenschaften als auch sehr gute Partikel- und/oder Aerosolfilereigenschaften in ein und demselben Material aufweist. Aufgrund der Tatsache, daß die erfindungsgemäßen adsorptiven Strukturen als solche bzw. die daraus resultierenden Schüttungen bzw. Formkörper insgesamt - also über das gesamte Volumen - zusätzlich als Partikel- und/oder Aerosolfilter fungieren, wird im Rahmen der vorliegenden Erfindung in effektiver Weise ein frühzeitiges Verstopfen des Systems vermieden. Zudem ist es im Rahmen der vorliegenden Erfindung gelungen, ein Material bereitzustellen, welches aufgrund einer spezifischen Anpassung der jeweiligen Komponenten für den jeweiligen Einsatzbereich, insbesondere im Hinblick auf eine Spezifizierung der zu adsorbierenden bzw. zu filternden Substanzen, maßgeschneidert bzw. optimiert werden kann, so daß die erfindungsgemäßen adsorptiven Strukturen für ein großes Spektrum von zu adsorbierenden bzw. zu filternden Substanzen eingesetzt werden können. ¹

Die vorliegende Erfindung ist folglich mit einer Vielzahl von Vorteilen verbunden, von denen vorstehend nur einige genannt worden sind und nachfolgend in nichtbeschränkender und nichtabschließender Weise einige weitere aufgezählt seien:
- Wie zuvor erwähnt, weisen die erfindungsgemäßen adsorptiven Strukturen bzw. die Agglomerate nach der Erfindung im Schüttbett bzw. in Form eines Formkörpers eine im Vergleich zu den reinen Basisadsorberpartikeln deutlich verringerte Druckdifferenzen auf, ohne daß andere Adsorptionseigenschaften, wie z. B. Adsorptionskinetik, Adsorptionskapazität, Anfangsdurchbruch oder dergleichen, beeinträchtigt sind. Auch die Filtrationseigenschaften sind im Hinblick auf die Schüttung bzw. den Formkörper als hervorragend einzustufen, wie es den zuvor angeführten Werten in bezug auf den integralen Anfangsdurchlaßgrad Dᵢ, dem mittleren Abscheidegrad Aₘ sowie dem mittleren Wirkungsgrad Eₘ zu entnehmen sind.
- Im Rahmen der vorliegenden Erfindung ist es somit gelungen, ein Adsorptionsmaterial mit hervorragenden Filtrationseigenschaften in bezug auf Partikel und/oder Aerosole bereitzustellen. So können in bezug auf die erfindungsgemäßen adsorptiven Strukturen in bezug auf Partikel bzw. Aerosolabscheideraten von bis zu 100 % erhalten werden, während bei solchen Agglomeraten bzw. adsorptiven Systemen, welche nicht im Sinne der vorliegenden Erfindung mit Fasern ausgerüstet sind, etwa 98 % der Partikel bzw. Aerosole nicht zurückgehalten werden können.
- Durch die Vielzahl der möglichen Kombinationen im Hinblick auf das partikuläre Adsorptionsmaterial (A) sowie das Fasermaterial (B) resultiert hinsichtlich der Adsorptionseigenschaften sowie der Filtrationseigenschaften eine Multifunktionalität bzw. Breitbandigkeit, so daß im Ergebnis adsorptive Systeme mit deutlich verbesserten Adsorptions- und Filtrationseigenschaften zur Verfügung gestellt werden. Es resultiert somit ein vergrößerter Einsatzbereich, bei welchem Adsorptions- und Filtrationseigenschaften unabhängig voneinander eingestellt werden können, was erfindungsgemäß insbesondere durch die spezielle Kombination mindestens eines partikulären Adsorptionsmaterials einerseits mit einem Fasermaterial andererseits ermöglicht wird.
- Ein weiterer Vorteil der erfindungsgemäßen Konzeption mit der gezielten Kombination eines Adsorptionsmaterials und eines Fasermaterials innerhalb der adsorptiven Strukturen nach der Erfindung ist darin zu sehen, daß sowohl die Adsorptionskinetik bzw. die Adsorptionskapazität der adsorptiven Strukturen nach der Erfindung als auch die Filtrationseigenschaften im Vergleich zu den jeweiligen Basisbestandteilen - nämlich Partikel als solche und Fasern als solche - deutlich verbessert sind.
- Ein weiterer zentraler Vorteil der vorliegenden Erfindung ist darin zu sehen, daß durch den Einsatz von partikulären Adsorptionsmaterialien einerseits und Fasern andererseits eine Optimierung der Nutzung bzw. Belegung der durch den Bindemittelträger bereitgestellten Oberfläche realisiert ist, so daß die erfindungsgemäßen adsorptiven Strukturen über eine deutlich verbesserte Wirkeffizienz verfügen.
- Zudem weisen die erfindungsgemäßen adsorptiven Strukturen kaum Feuchtigkeits- bzw. Alterungseffekte auf, was nicht zuletzt aufgrund der hochreinen Oberflächen der eingesetzten Adsorptionsmaterialien bzw. Fasern gewährleistet ist.
- Zudem sind die erfindungsgemäßen adsorptiven Strukturen in wesentlichen staubfrei, was insbesondere auch aufgrund der sehr hohen mechanischen Stabilität der eingesetzten Komponenten sowie der Stabilität der adsorptiven Strukturen nach der Erfindung an sich gewährleistet ist. Insbesondere enthalten die erfindungsgemäßen adsorptiven Strukturen im wesentlichen zumindest keine lungengängigen Staubpartikelgrößen.
- Im Hinblick auf das eingesetzte partikuläre Adsorptionsmaterial bleibt auch in den erfindungsgemäßen adsorptiven Strukturen bzw. Agglomeraten die hervorragende Imprägnierbarkeit der Basispartikel erhalten (z. B. mehr als 60 % vom Benetzungstest).
- Durch die freie Wahl der entsprechenden Agglomeratfraktion im Hinblick auf das partikuläre Adsorptionsmaterial bzw. durch die gezielte Auswahl der eingesetzten Fasern bzw. des eingesetzten Fasermaterials kann die Beabstandung bzw. Schüttdichte der adsorptiven Strukturen frei gewählt werden. Auf dieser Basis kann somit der Druckverlust frei eingestellt werden - was zudem durch die gezielte Auswahl insbesondere der Größe der Agglomerate noch weiterführend beeinflußt werden kann.
- Wie zuvor geschildert, wird bei loser Schüttung der erfindungsgemäßen adsorptiven Strukturen im Vergleich zu Korn- oder Formaktivkohle bei gleicher Adsorptionskapazität ein deutlich geringerer Druckverlust beobachtet - und dies, wie zuvor angeführt, bei gleichzeitiger Partikel- und/oder Aerosolfilterfunktion.
- Durch die freie Wahl und Abstimmung der jeweils eingesetzten Komponenten, insbesondere im Hinblick auf das partikuläre Adsorptionsmaterial und/oder auf das Fasermaterial, kann die Gesamtadsorptionseffizienz und die Gesamtadsorptionskinetik sowie das Gesamtfiltrationsvermögen eingestellt bzw. gesteuert werden, wobei eine deutlich verbesserte Breitenwirksamkeit realisiert werden kann.
- Infolge des hohen Puffervolumens wird ein etwaiger Adsorptionsverlust aufgrund des Bindemittelträgers, insbesondere aufgrund der organischen Polymerbestandteile, kompensiert, so daß kein signifikantes bis kein durch das Bindemittel, insbesondere durch die organischen Polymerbestandteile, geblocktes Porenvolumen vorliegt. Ein etwaiger damit im Zusammenhang stehender Kapazitätsverlust ist dabei äußerst gering. Dies gilt um so mehr, als die jeweiligen Komponenten im allgemeinen nur geringfügig in den Bindemittelträger eingetaucht sind und an dessen Oberfläche fixiert sind.
- Weitere Vorteile der erfindungsgemäßen Erfindung sind darin zu sehen, daß die erfindungsgemäßen adsorptiven Strukturen bzw. Agglomerate gute mechanische Beständigkeiten bei gleichzeitig guter Flexibilität und Komplexibilität aufweisen, so daß die adsorptiven Strukturen nach der Erfindung ohne weiteres verpreßt und unter Verwendung einer Vielzahl von adsorptiven Systemen bzw. Strukturen nach der Erfindung zu entsprechenden stabilen und selbsttragenden adsorptiven Formkörper beliebiger Geometrie verarbeitet werden können.
- Durch die erfindungsgemäß mögliche Kombination von teilchenförmigen Adsorptionsmaterialien einerseits und gegebenenfalls adsorptiven faserförmigen Materialien, insbesondere in Form von Aktivkohlefasern andererseits wird das Adsorptionsvermögen durch die gezielte Kombination und damit einhergehenden jeweils positiven Eigenschaften weiterführend verbessert. Denn, wie zuvor angeführt, weisen Aktivkohlefasern insbesondere eine sehr hohe Anfangsspontaneität auf, während die partikulären Adsorptionsmaterialien insbesondere eine höhere Adsorptionskapazität aufweisen. Bei den erfindungsgemäßen Strukturen bzw. Agglomeraten mit der zuvor geschilderten Breitbandigkeit bzw. Multifunktionalität wird gleichermaßen eine hohe Gesamtadsorptionseffizienz auch bei niedrigen Adsorbatkonzentrationen aufgrund sehr hoher möglicher Adsorptionspotentiale der Basisadsorberpartikel erreicht. Dabei kann die Gesamtadsorptionseffizienz durch die konkrete Abstimmung der eingesetzten partikulären Adsorptionsmaterialien noch weiter verbessert werden.
- Insbesondere verstärken sich die Wirkweise der partikulären Adsorptionsmaterialien einerseits und der Faserkomponente dahingehend, daß auch durch die Fasern selbst zurückgehaltene Teilchen bzw. Tröpfchen einer mitunter toxischen Flüssigkeit von dem sozusagen zu den Fasern benachbarten partikulären Adsorptionsmaterial adsorbiert werden können.
- Aufgrund der hochreinen Oberflächen der eingesetzten partikulären Adsorptionsmaterialien bzw. der Faserkomponente werden keine nennenswerten Effizienzverluste durch hohe relative Feuchten und Alterungseffekte beobachtet.

Die adsorptiven Strukturen nach der Erfindung mit einem partikulären Adsorptions-material (A) und einem Fasermaterial (B), wie zuvor definiert, können mit einem Verfahren hergestellt werden, wobei ein partikuläres Adsorptionsmaterial (A) und ein Fasermaterial (B) in Gegenwart eines Bindemittelträgers, insbesondere auf Basis mindestens eines vorzugsweise thermoplastischen organischen Polymers, zu Agglomeraten mit dem partikulären Adsorptionsmaterial (A) und dem Fasermaterial (B) verarbeitet werden, wobei das partikuläre Adsorptionsmaterial (A) und das Fasermaterial (B) an dem Bindemittelträger fixiert, insbesondere zum Haften gebracht, und über den Bindemittelträger jeweils zu Agglomeraten verbunden werden.

In bezug auf das Verfahren kann beispielsweise derart vorgegangen werden, daß von einer Mischung des partikulären Adsorptionsmaterials (A) und des Fasermaterials (B) ausgegangen wird, welche auf dem Bindemittelträger durch Erwärmen auf Temperaturen oberhalb des Schmelzbereichs des Bindemittelträger und unter mechanischem Energieeintrag fixiert bzw. zum Haften gebracht wird. Der Bindemittelträger sollte dabei in Form von Teilchen bzw. Partikeln eingesetzt werden.

Weiterhin kann im Rahmen des Verfahrens derart vorgegangen werden, daß das partikuläre Adsorptionsmaterial (A) einerseits und das Fasermaterial (B) andererseits in Form der Mischung oder in getrennten Chargen bzw. getrennt voneinander zu dem Bindemittelträger hinzugegeben werden, wobei die resultierende Mischung jeweils nachfolgend oder während der Zugabe auf Temperaturen oberhalb der Schmelz- bzw. Erweichungstemperatur des Bindemittelträgers erwärmt wird und die entsprechende Temperatur für eine bestimmte Zeitdauer aufrecht gehalten wird. Es kann aber auch vorgesehen sein, die Temperatur während der gesamten Abfolge der Komponentenzugabe aufrechtzuerhalten. In diesem Zusammenhang können die Adsorberpartikel bzw. das partikuläre Adsorptionsmaterial (A) einerseits und das Fasermaterial (B) andererseits getrennt voneinander bzw. nacheinander auf den Bindemittelträger fixiert werden.

Im allgemeinen sollte die Partikelgrößenverteilung und/oder die Teilchengrößen bzw. die Teilchendurchmesser, insbesondere die mittlere Teilchengröße bzw. der mittlere Teilchendurchmesser D50, des partikelförmigen Bindemittelträgers größer ausgewählt werden als die entsprechenden Werte der zu fixierenden Adsorbentien in Form des partikulären Adsorptionsmaterials (A), insbesondere um hinsichtlich der Gewährleistung einer guten Adsorptionskapazität die Fixierung ausreichender Mengen an Adsorberpartikeln auf dem Bindemittelträger zu ermöglichen.

Insbesondere können das partikuläre Adsorptionsmaterial (A) und das Fasermaterial (B) durch einen Energieeintrag, beispielsweise durch Mischen auf den klebrigen bzw. erweichten Bindemittelträger fixiert werden, wobei die Größe der resultierenden adsorptiven Strukturen nach der Erfindung durch die entsprechende Höhe des Energieeintrags gesteuert werden können.

Weiterhin kann es im Rahmen des Verfahrens auch vorgesehen sein, hitzeklebrige Fasern bzw. ein hitzeklebriges Fasermaterial (B) einzusetzen, welches insbesondere im Rahmen des Erwärmungsvorganges selbst eine gewisse Hitzeklebrigkeit ausbildet. Hierdurch kann es auch ermöglicht werden, daß zumindest ein Teil des Fasermaterials (B) auf den Adsorbentien als solchen bzw. auf das partikuläre Adsorptionsmaterial zum Haften gebracht wird bzw. hieran fixiert wird. Ein derartiges Vorgehen kann beispielsweise dann vorgesehen werden, wenn insbesondere die Partikel- bzw. der Aerosolfilterfunktion weiter verstärkt werden soll.

Das Verfahren kann beispielsweise in einem beheizbaren Drehrohr bzw. einem beheizbaren Drehrohrofen durchgeführt werden. Gleichermaßen kommt die Anwendung von Wirbelschichtverfahren, Vibrationsagglomeration und/oder Trommelbeschichtungsverfahren *(Trommel-Coating)* in Betracht.

Im Rahmen des Verfahrens können zudem noch weitere partikuläre Adsorptionsmaterialien (A₁), (A₂), (A₃) etc. sowie weitere Fasermaterialien (B₁), (B₂), (B₃) etc. eingesetzt werden.

Bezüglich weiterer Ausführungen zu diesem Verfahren kann auf die obigen Ausführungen zu den adsorptiven Strukturen nach der Erfindung sowie auf die nachfolgenden Ausführungen zu den weiteren erfindungsgemäßen Aspekten verwiesen werden, welche in bezug auf dieses Verfahren entsprechend gelten.

Weiterer Gegenstand der vorliegenden Erfindung - gemäß einem zweiten Aspekt der vorliegenden Erfindung - ist ein Verfahren zur Herstellung von adsorptiven Strukturen, wie zuvor definiert, mit einem partikulären Adsorptionsmaterial (A) und einem Fasermaterial (B),
a) wobei zunächst das partikuläre Adsorptionsmaterial (A) einerseits und Partikel eines Bindemittelträgers (2) auf Basis mindestens eines thermoplastischen organischen Polymersandererseits miteinander in Kontakt gebracht und vermischt werden,
b) wobei die resultierende Mischung nachfolgend auf Temperaturen oberhalb der Schmelz- oder Erweichungstemperatur des Bindemittelträgers (2) erwärmt wird und das partikuläre Adsorptionsmaterial (A) auf dem Bindemittelträger (2) zum Haften gebracht und/oder auf dem Bindemittelträger (2) fixiert wird und auf diese Weise Zwischenprodukte, welche das partikuläre Adsorptionsmaterial (A) und den Bindemittelträger (2) aufweisen, erhalten werden,
c) wobei gegebenenfalls anschließend die resultierenden Zwischenprodukte auf Temperaturen unterhalb der Schmelz- oder Erweichungstemperatur des Bindemittels des Bindemittelträgers (2) abgekühlt werden,
d) wobei anschließend das Fasermaterial (B) zu den Zwischenprodukten gegeben wird und/oder mit den Zwischenprodukten in Kontakt gebracht und vermischt wird,
e) wobei gegebenenfalls die resultierende Mischung nachfolgend erneut auf Temperaturen oberhalb der Schmelz- oder Erweichungstemperatur des Bindemittels des Bindemittelträgers (2) erwärmt wird,
f) wobei das Fasermaterial (B) auf dem Bindemittelträger (2) zum Haften gebracht und/oder auf dem Bindemittelträger (2) fixiert wird und auf diese Weise Produkte, welche das erste partikuläre Adsorptionsmaterial (A), das Fasermaterial (B) und den Bindemittelträger (2) aufweisen, erhalten werden und
g) wobei schließlich die resultierenden Produkte auf Temperaturen unterhalb der Schmelz- oder Erweichungstemperatur des Bindemittels des Bindemittelträgers (2) zum Erhalt der diskreten adsorptiven Strukturen (1) abgekühlt werden.

Typischerweise wird in Schritt a) und/oder in Schritt e) und/oder in Schritt f), unabhängig voneinander, die erreichte Temperatur für eine definierte Zeitdauer gehalten, insbesondere für eine Minute, insbesondere für mindestens 5 Minuten, vorzugsweise mindestens 10 Minuten, und/oder für eine Zeitdauer von 1 bis 600 Minuten, insbesondere 5 bis 300 Minuten, bevorzugt 10 bis 150 Minuten. Die Haltedauer ist insbesondere danach zu messen, daß die gesamte Charge jeweils auf eine einheitliche Temperatur gebracht wird, was die Haftung der partikulären Adsorbentien (A) bzw. der Faserkomponente (B) auf dem Bindemittelträger verbessert. Zudem wird durch die erfindungsgemäß vorgesehene Haltedauer der Temperatur gewährleistet, daß der Bindemittelträger zumindest im wesentlichen vollständig aufgeschmolzen wird, um so eine gute Haftung der Komponenten (A) und (B) auf dem Bindemittelträger zu ermöglichen. Die Temperatur kann während des gesamten Fixierungsablaufes der Komponenten (A) und (B) aufrechtgehalten werden, d. h. oberhalb der Schmelz- bzw. Erweichungstemperatur des Bindemittels eingestellt werden.

Während der Durchführung von Schritt b) und/oder d) und/oder von Schritt e) und/oder f), insbesondere beim Erwärmungs- und Haltevorgang, ist es von besonderem Vorteil, wenn, unabhängig voneinander, ein Energieeintrag, vorzugsweise mittels Mischen, erfolgt. Diesbezüglich kann über den Energieeintrag die resultierende Agglomeratgröße und/oder die Größe der resultierenden adsorptiven Strukturen gesteuert werden. Über die Menge und Art des Energieeintrags kann somit die Teilchengröße und/oder der Teilchendurchmesser, insbesondere die mittlere Teilchengröße und/oder der mittlere Teilchendurchmesser D50, der erhaltenen Agglomerate gesteuert werden.

Typischerweise wird das erfindungsgemäße Verfahren in einem beheizbaren Drehrohr, insbesondere einem Drehrohrofen, durchgeführt. Über die Drehgeschwindigkeit des Drehrohrs kann der Energieeintrag und somit insbesondere die resultierende Agglomeratgröße und/oder Größe der resultierenden adsorptiven Strukturen nach der Erfindung gesteuert werden. Mit zunehmendem Energieeintrag werden dabei kleine Agglomeratgrößen erhalten. Entsprechend können mit zunehmender Drehgeschwindigkeit zunehmend kleinere Agglomeratgrößen erhalten werden. Durch chargenweises Entladen des Drehrohres lassen sich zudem insbesondere auch unter Variation der Drehgeschwindigkeit für die einzelnen Chargen insgesamt multimodale Agglomeratgrößenverteilungen erhalten. Gleichermaßen kommt die Anwendung von Wirbelschichtverfahren, Vibrationsagglomeration und Trommelbeschichtungsverfahren *(Trommel-Coating)* in Betracht.

Gemäß einer besonderen Ausführungsform der vorliegenden Erfindung können die in Schritt g) resultierenden adsorptiven Systeme in einem nachfolgenden Schritt h) zu einem Formkörper verarbeitet werden, was insbesondere unter Verpressen erfolgen kann. Dabei kann die Verarbeitung zu Formkörpern unter Erwärmen, vorzugsweise auf Temperaturen unterhalb der Schmelz- oder Erweichungstemperatur des Bindemittelträgers, erfolgen, so daß die betreffenden Agglomerate nicht zersetzt werden bzw. nicht zerfallen. Typischerweise wird im Rahmen des erfindungsgemäßen Verfahrens das partikuläre Adsorptionsmaterial (A) in Form einer Vielzahl von diskreten Adsorberpartikeln eingesetzt. Gleichermaßen kann das Fasermaterial (B) in Form einer Vielzahl von diskreten Fasern eingesetzt werden.

Was den Bindemittelträger anbelangt, so kann dieser in Form eines thermoplastischen organischen Polymers in Form von Partikeln, insbesondere korn- oder kugelförmigen Partikeln, bevorzugt von bei Raumtemperatur und Atmosphärendruck festen Partikeln, eingesetzt werden. Diesbezüglich bezieht sich die Raumtemperatur insbesondere auf 25 °C, während sich der Atmosphärendruck insbesondere auf 1.013 hPa bezieht.

In diesem Zusammenhang kann der Bindemittelträger mit Partikelgrößen im Bereich von 100 bis 2.000 µm, insbesondere 150 bis 1.500 µm, vorzugsweise 200 bis 1.000 µm, eingesetzt werden.

Als Bindemittelträger wird im Rahmen des erfindungsgemäßen Verfahrens ein thermoplastisches organisches Polymer, insbesondere ein vorzugsweise thermoplastischer Schmelzklebstoff, bevorzugt auf der Grundlage von Polymeren aus der Gruppe von Polyestern, Polyamiden, Polyethern, Polyetherestern und/oder Polyurethanen sowie deren Mischungen und Copolymeren, eingesetzt. Als weitere Bindemittelträger bzw. Bindemittel kommen auch Polyolefine sowie insbesondere thermoplastisch modifizierte Cellulosederivate, insbesondere karamellisiertc Zucker, Zuckerderivate und/oder insbesondere thermoplastisch modifizierte Stärke in Betracht.

Für weitergehende Einzelheiten zu dem erfindungsgemäßen Verfahren gemäß diesem Aspekt der vorliegenden Erfindung kann auf die obigen Ausführungen sowie auf die nachfolgenden Ausführungen zu den übrigen Aspekten der vorliegenden Erfindung verwiesen werden, welche in bezug auf das erfindungsgemäße Herstellungsverfahren gemäß diesem Erfindungsaspekt entsprechend gelten.

Gemäß einer typischen Ausführungsform kann beispielsweise wie folgt vorgegangen werden:

Als Bindemittelträger können Schmelzklebstoffe verwendet werden, wobei typischerweise eine Vielzahl von geeigneten Schmelzklebstoffen genutzt werden kann. Insbesondere können Schmelzklebstoffe in Form von thermoplastischen Copolyamiden und/oder thermoplastischen Copolymeren in Granulat- und/oder Pulverform eingesetzt werden. Beispielsweise können als Bindemittelträger Schmelzklebstoffe in Form von Copolyester eingesetzt werden. Derartige Schmelzstoffe können beispielsweise von der Firma EMS-Chemie GmbH & Co. KG, Neumünster, bezogen werden.

Insbesondere können die Schmelzklebstoffe in Teilchenform eingesetzt werden. Dabei sollte vorteilhafterweise die mittlere Partikelgröße des Schmelzklebers größer sein als die mittlere Partikelgröße des eingesetzten partikulären Adsorptionsmaterials (A), um auf diese Weise insbesondere ein Durchfallen von Kleberbestandteilen bzw. -partikeln in der Schüttung zu verhindern. Im allgemeinen können die eingesetzten Bindemittelträger, insbesondere in Form von Schmelzklebstoffen, einstellbare thermische und/oder chemische Eigenschaften aufweisen, so daß auf diese Weise eine Anpassung im Hinblick auf eine optimierte Haftung der jeweils eingesetzten Komponenten (A) und/oder (B) erreicht werden kann.

Wie zuvor geschildert, kann das partikuläre Adsorptionsmaterial (A) in Form von sphärischen Basispartikeln beispielsweise auf Basis von polymeren Rohstoffen hergestellt bzw. eingesetzt werden. Insbesondere kommt der Einsatz von partikulärer Aktivkohle in Betracht. Das erfindungsgemäß verwendete partikuläre Adsorptionsmaterial (A) zeichnet sich durch eine Vielzahl von Vorteilen aus, wobei eine hohe Adsorptionskapazität, eine hohe chemische Reinheit sowie außergewöhnlich gute mechanische Eigenschaften diesbezüglich hervorzuheben sind.

Insbesondere ist die Formgebung des partikulären Adsorptionsmaterials (A) bzw. der Basispartikel sphärisch, wobei das partikuläre Adsorptionsmaterial (A) insbesondere in einer Partikelgröße von D_{(Partikel)} von 0,05 bis 0,7 mm eingesetzt werden kann. Auch hiervon abweichende Werte sind möglich. Insbesondere können hinsichtlich der Partikelgrößen bzw. Teilchendurchmesser bzw. Teilchengrößen neben zumindest im wesentlichen monodispersen auch polydisperse Partikelgrößenverteilungen vorliegen.

Hinsichtlich des einsetzbaren partikulären Adsorptionsmaterials (A) ist es zudem möglich, auf Basis des gezielt ausgewählten Rohstoffes und auf Basis spezieller Herstellungsverfahren Porenvolumina nahe der theoretischen Machbarkeit zu erreichen, beispielsweise können Oberflächen von bis zu 2.300 m²/g oder mehr gemäß ASTM D 6554-04 sowie Gesamtporenvolumina von bis zu 3,5 cm³/g oder mehr erzeugt bzw. derartige Adsorbentien eingesetzt werden.

Was Schritt a) und Schritt b) des erfindungsgemäßen Verfahrens anbelangt, so stellen diese Schritte gewissermaßen die Herstellung der Basisagglomerate da, d. h. es resultiert ein erstes adsorptives System bzw. eine erste adsorptive Struktur auf Basis des Bindemittelträgers und des partikulären Adsorptionsmaterials (A), wie zuvor angeführt. Somit werden gemäß diesen Schritten des erfindungsgemäßen Verfahrens aus sphärischen Basispartikeln in Form des partikulären Adsorptionsmaterials (A) und Bindemittelträgern, insbesondere in Form von Schmelzklebstoffen, insbesondere durch thermische und mechanische Behandlung Basisagglomerate hergestellt. Die so hergestellten Basisagglomerate können, wie zuvor angeführt, in weiteren sich anschließenden Schritten mit dem Fasermaterial (B) und gegebenenfalls mit weiteren Materialien belegt werden.

Dabei sollte in bezug auf die Herstellung der erfindungsgemäßen adsorptiven Strukturen bzw. Agglomerate bzw. der erfindungsgemäßen Kompositadsorber die Partikelgrößenverteilung des partikulären Adsorptionsmaterials so gewählt werden, daß in einem bestimmten Maß freie und somit für das Fasermaterial (B) zugängliche Kleberflächen auf dem Bindemittelträger entstehen bzw. vorliegen, welche in nachfolgenden Schritten mit dem Fasermaterial (B) belegt werden können.

Was die thermische Behandlung der Schüttung bzw. Mischung der jeweiligen Komponenten anbelangt, so richtet sich diese insbesondere nach dem eingesetzten Bindemittelträger bzw. nach dem eingesetzten Klebertyp. Dabei sollte die Zieltemperatur größer bzw. innerhalb der Schmelztemperatur des eingesetzten Bindemittelträgers sein, insbesondere mit der Maßgabe, daß eine klebrige Oberfläche zur Haftung bzw. Fixierung der partikulären Strukturen bzw. der Faserkomponente resultiert. Dabei sollte die Zieltemperatur sozusagen minimal gewählt werden, da eine weitergehende Temperatur und somit eine weitergehende Verringerung der Viskosität des Klebstoffs bzw. des Bindemittelträgers bei bereits erreichter Schmelz- bzw. Erweichungstemperatur des vorliegenden Bindemittelträgers bzw. Klebstoffs zu einer übermäßigen Erweichung bzw. Verschmelzung und somit zu einer unerwünschten Porenblockierung der Adsorberpartikel führen würde und gegebenenfalls die Adsorberpartikel zu tief in die Bindemittelmatrix eindringen könnten. Zudem könnten die eingesetzten Fasern, deren Schmelztemperatur im allgemeinen höher liegen sollte als diejenige des Bindemittelträgers, beschädigt werden. Weiterhin ist beachtlich, daß im Rahmen des erfindungsgemäßen Verfahrens die jeweiligen Schüttungen der Komponenten auf die Zieltemperatur erhitzt werden sollten, so daß mit entsprechenden Haltezeiten hinsichtlich der eingestellten Temperatur gearbeitet werden sollte, um eine vollständige und homogene Erhitzung der gesamten Schüttung zu gewährleisten.

Was die mechanische Behandlung bzw. den Energieeintrag insbesondere in Schritt b) und/oder f) anbelangt, sollte der entsprechende Energieeintrag durch Drehung eines zur Herstellung der erfindungsgemäßen adsorptiven Strukturen eingesetzten Drehrohrreaktors bzw. Drehrohrofens erfolgen. Dies gewährleistet außerdem eine ausreichende Durchmischung der Schüttung sowie einen ausreichenden Wärmeeintrag in die Schüttung. Temperatur und Energieeintrag durch das Drehrohr können dabei unabhängig voneinander auch in bezug auf die jeweils eingesetzten Komponenten - nämlich partikuläres Adsorptionsmaterial (A) in Schritt b) und Fasermaterial (B) in Schritt f) - eingestellt werden. Insbesondere kommt gemäß einer alternativen Ausführungsform in Schritt b) und/oder Schritt f) des erfindungsgemäßen Verfahrens der Einsatz von Wirbelschichtverfahren, Vibrationsagglomeration und/oder Trommelbeschichtungsverfahren (Trommel-*Coating*) in Betracht.

In bezug auf Verfahrensschritt b) umfaßt die Schüttung vorzugsweise das partikuläre Adsorptionsmaterial (A) sowie den Bindemittelträger. Es wird ein ausreichender Kontakt zwischen Bindemittelträger bzw. Kleber einerseits und dem partikulären Adsorptionsmaterial (A) erzeugt, insbesondere zumindest im wesentlichen sämtliche für die entsprechende Partikelgrößenverteilung des partikulären Adsorptionsmaterials (A) zugänglichen freien Kleberstellen des Bindemittelträgers insbesondere sukzessiv belegt werden, d. h. mit fortschreitender Drehdauer des Drehrohrofens erfolgt eine zunehmende Belegung des Bindemittelträgers mit den Basispartikeln bzw. mit dem partikulären Adsorptionsmaterial (A). Wie zuvor angeführt, kann z. B. mit Hilfe einer erhöhten Drehgeschwindigkeit des z. B. eingesetzten Drehrohrofens die Agglomeratgrößenverteilung zielgerichtet bzw. definiert beeinflußt werden, insbesondere wobei eine erhöhte Drehgeschwindigkeit des Drehrohrofens bzw. Drehrohrreaktors zu einer kleineren Größe bzw. zu kleineren mittleren Größe der Agglomerate führt und auch die Größenverteilung der Partikel beeinflußt werden kann.

Wie zuvor angeführt, kann in nachfolgenden Schritten gemäß dem erfindungsgemäßen Verfahren aus den bereits hergestellten Basisagglomeraten unter Verwendung des Fasermaterials die erfindungsgemäßen adsorptiven Strukturen hergestellt werden. Dabei kann das erfindungsgemäße Verfahren insbesondere im Batch bzw. batchweise durchgeführt werden.

Die in Schritt d) gegebenenfalls durchgeführte erneute thermische Behandlung bzw. die weiterführende thermische Behandlung zur Fixierung des Fasermaterials (B) sollte sich gleichermaßen nach dem eingesetzten Bindemittelträger bzw. Klebertyp richten, wobei diesbezüglich auch zu beachten ist, daß die Fasern thermisch nicht beschädigt werden.

Insbesondere wird in bezug auf die Herstellung der erfindungsgemäßen adsorptiven Strukturen im gesamten Verfahren kein weiterer Kleber zur Herstellung der Kompositadsorber eingesetzt.

Im Rahmen der vorliegenden Erfindung besteht zudem die Möglichkeit, durch sinnvolle Auswahl neben dem partikulären Adsorptionsmaterial (A) und der Faserkomponente (B) weitere Komponenten aufzubringen, beispielsweise können weitere partikuläre Adsorptionsmaterialien aufgebracht werden, wobei diese insbesondere kleinere Teilchengrößen aufweisen sollten als das erste partikuläre Adsorptionsmaterial. Dabei kann das Aufbringen eines weiteren Adsorptionsmaterials beispielsweise auch vor dem Aufbringen des Fasermaterials erfolgen.

Wie zuvor angeführt, sollte die Zieltemperatur auch in Verfahrensschritt d) und/oder e) und/oder f) des erfindungsgemäßen Verfahrens größer bzw. innerhalb des Schmelztemperaturenbereichs des Klebers sein bzw. auf derartige Temperaturen gebracht werden. Der bereits in den Basisagglomeraten mit dem ersten partikulären Adsorptionsmaterial (A) vorhandene Kleber wird dabei insbesondere (an)geschmolzen bzw. bleibt in einem angeschmolzenen Zustand, so daß an den klebrigen freien Kleberstellen des Bindemittelträgers das Fasermaterial (B) fixiert werden kann.

Diesbezüglich ist insbesondere beachtlich, daß insbesondere im Rahmen von Verfahrensschritt d) und/oder e) und/oder f) des erfindungsgemäßen Verfahrens eine Schüttung aus den zuvor erhaltenen Basisagglomeraten, wobei die Basisagglomerate das partikuläre Adsorptionsmaterial (A) und dem Bindemittelträger aufweisen, auf eine definierte Zieltemperatur gebracht wird, so daß insbesondere mit entsprechenden Haltezeiten gearbeitet werden sollte, um eine vollständige Erhitzung der gesamten Schüttung aus Basisagglomeraten und dem dazugegebenen Fasermaterial (B) zu erreichen.

Wie zuvor angeführt, schließt sich gemäß Verfahrensschritt f) eine zweite mechanische Behandlung bzw. ein weiterer Energieeintrag an, welche bzw. welcher gleichermaßen durch Drehung des eingesetzten Drehrohrofens bzw. Drehrohrreaktors gewährleistet werden kann, um eine ausreichende Durchmischung der Schüttung bzw. der Basisagglomerate einerseits und dem Fasermaterial (B) andererseits sowie einen ausreichenden Wärmeeintrag in die Schüttung bzw. der Mischung aus Basisagglomeraten und Fasermaterial (B) zu ermöglichen. Dabei umfaßt die Schüttung, wie zuvor angeführt, die Basisagglomerate auf Basis des partikulären Adsorptionsmaterials (A) und des Bindemittelträgers sowie die zugegebenen Fasern bzw. die zugegebene Faserkomponente (B) sowie gegebenenfalls weitere Materialien. Durch die Drehung des Drehrohrofens wird ein ausreichender Kontakt zwischen den Basisagglomeraten einerseits und dem Fasermaterial (B) bzw. den weiteren Materialien andererseits gewährleistet, wobei insbesondere die freien Kleberstellen des Bindemittelträgers sukzessiv mit dem Fasermaterial (B) belegt werden, so daß auf diese Weise die erfindungsgemäßen adsorptiven Systeme mit dem partikulären Adsorptionsmaterial (A) und der Faserkomponente (B) bzw. dem Fasermaterial (B) erhalten werden. Auch gemäß Schritt f) des erfindungsgemäßen Verfahrens kommt, wie zuvor angeführt und gemäß einer alternativen Ausführungsform der Einsatz von Wirbelschichtverfahren, Vibrationsagglomeration und/oder Trommelbeschichtungsverfahren (Trommel-*Coating*) in Betracht.

Wie zuvor angeführt, erfolgt abschließend gemäß Schritt g) des erfindungsgemäßen Verfahrens eine Abkühlung der erhaltenen Agglomerate zum Erhalt der erfindungsgemäßen Strukturen als den entsprechenden Endprodukte.

Die erfindungsgemäßen adsorptiven Strukturen können mit einem weiteren Herstellungsverfahren erhalten werden.

Somit kann ein Verfahren zur Herstellung von adsorptiven Strukturen mit einem partikulären Adsorptionsmaterial (A) und einem Fasermaterial (B) angeführt werden,
a) wobei zunächst ein partikuläres Adsorptionsmaterial (A) und ein Fasermaterial (B) einerseits und ein insbesondere partikulärer Bindemittelträger auf Basis mindestens eines thermoplastischen organischen Polymers andererseits miteinander in Kontakt gebracht und vorzugsweise vermischt werden,
b) wobei die resultierende Mischung nachfolgend auf Temperaturen oberhalb der Schmelz- oder Erweichungstemperatur des Bindemittelträgers erwärmt wird und das partikuläre Adsorptionsmaterial (A) und das Fasermaterial (B) auf dem Bindemittelträger insbesondere durch Energieeintrag zum Haften gebracht und/oder auf dem Bindemittelträger fixiert werden und
c) wobei schließlich die resultierenden Produkte auf Temperaturen unterhalb der Schmelz- oder Erweichungstemperatur des Bindemittels des Bindemittelträgers zum Erhalt der diskreten adsorptiven Strukturen abgekühlt werden.

Gemäß diesem Herstellungsverfahren zum Erhalt der adsorptiven Strukturen nach der Erfindung wird somit von einer Mischung des partikulären Adsorptionsmaterials (A) und dem Fasermaterial (B) ausgegangen, welche dann gleichermaßen in Form einer Mischung sozusagen gleichzeitig auf den partikulären Bindemittelträger aufgebracht werden können.

Im übrigen kann in bezug auf dieses Verfahren auf die weiterführenden Einzelheiten zu den übrigen Aspekten der vorliegenden Erfindung verwiesen werden, welche in bezug auf dieses Verfahren entsprechend gelten.

Auf Basis der zuvor beschriebenen Verfahren können somit die erfindungsgemäßen adsorptiven Strukturen erhalten werden.

Insbesondere können das Verfahren gemäß dem zweiten Aspekt nach Art eines Trockenverfahrens durchgeführt werden, d. h. insbesondere unter Einsatz und Verarbeitung der Komponenten in jeweils lösemittelfreier bzw. dispersionsmittelfreier Form. Eine derartige Verfahrensführung ist insbesondere bei Verwendung von Fasern mit größeren Längen bzw. Durchmessern von Vorteil.

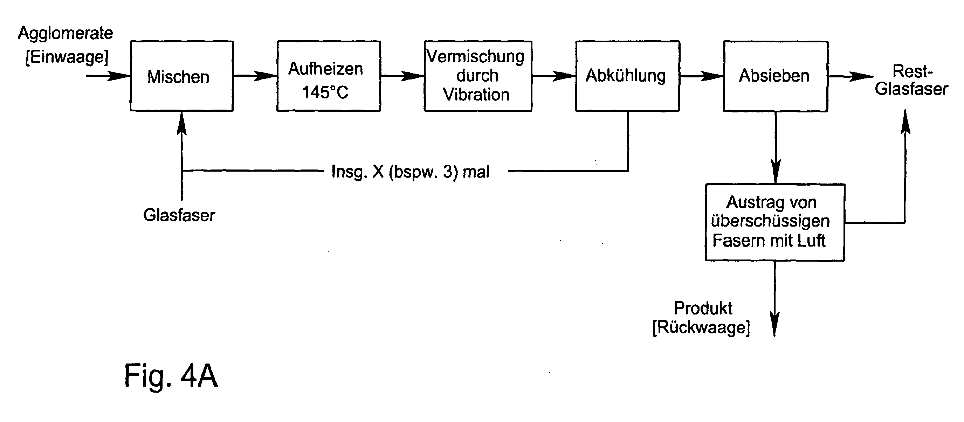

Eine typische Ausführungsform für die Durchführung des erfindungsgemäßen Verfahrens nach Art eines Trockenverfahrens ist in Fig. 4A dargestellt.

Gleichermaßen kann das erfindungsgemäße Verfahren gemäß einer alternativen Ausführungsform auch nach Art eines Suspensionsverfahrens bzw. Naßverfahrens durchgeführt werden.

So kann im Hinblick auf das erfindungsgemäße Verfahren gemäß dem zweiten Aspekt der vorliegenden Erfindung die Komponenten zur Herstellung der erfindungsgemäßen adsorptiven Strukturen, insbesondere das partikuläre Adsorptionsmaterial (A) und/oder der Bindemittelträger und/oder (Vor-)Agglomerate aus dem partikulären Adsorptionsmaterial (A) und dem Bindemittelträger und/oder das Fasermaterial (B), vorzugsweise das Fasermaterial (B), jeweils in Form einer Suspension eingesetzt werden. Gleichermaßen liegt es im Rahmen der vorliegenden Erfindung, wenn das Zusammenführen bzw. das Inkontaktbringen bzw. das Vermischen der in Rede stehenden Komponenten in Form des partikulären Adsorptionsmaterials (A) und/oder des Bindemittelträgers und/oder der (Vor-)Agglomerate und/oder des Fasermaterials (B) in Gegenwart eines Suspensionsmittels erfolgt. Als Suspensionsmittel können dem Fachmann an sich bekannte Suspensionsmittel eingesetzt werden. Insbesondere kann als Suspensionsmittel Wasser eingesetzt werden.

In diesem Zusammenhang ist es erfindungsgemäß von Vorteil, das Suspensionsmittel im weiteren Verlauf der Verfahrensdurchführung zu entfernen, insbesondere vor der eigentlichen Verklebung bzw. Fixierung bzw. Haftung des partikulären Adsorptionsmaterials (A) und/oder vorzugsweise des Fasermaterials (B) auf dem Bindemittelträger, also insbesondere bevor der Bindemittelträger in einen klebrigen Zustand überführt wird bzw. in einem solchen Zustand vorliegt. Das Entfernen des Suspensionsmittels kann z. B. bereits während des Inkontaktbringens bzw. der Vermischung der Komponenten z. B. kontinuierlich und/oder nach dem Inkontaktbringen bzw. der Vermischung der Komponenten auf Basis von entsprechenden Trocknungsschritten durchgeführt werden. Dabei kann das Entfernen z. B. durch Unterdruckverfahren, Filtrationsverfahren, insbesondere Abfiltrieren und/oder Abnutschen; und/oder Erwärmen, insbesondere auf Temperaturen unterhalb der Schmelz- oder Erweichungstemperatur des Bindemittelträgers, z. B. unterhalb von 100 °C, erfolgen. Eine insbesondere weiterführende bzw. ergänzende Entfernung des Suspensionsmittels kann z. B. auch im Rahmen des Verfahrensschritts der Erwärmung der Mischung auf Temperaturen oberhalb der Schmelz- oder Erweichungstemperatur des Bindemittelträgers erfolgen, wobei diesbezüglich insbesondere derart vorgegangen werden sollte, daß das Suspensionsmittel zumindest im wesentlich vollständig entfernt ist, wenn die Mischung die Schmelz- oder Erweichungstemperatur des Bindemittelträgers erreicht.

Durch die Verwendung bzw. den Einsatz eines Suspensionsmittels wird eine besonders gute Vermischung der Komponenten erreicht, was insbesondere zu einer verbesserten Belegung des Bindemittelträgers mit dem Fasermaterial (B) führt. Zudem wird insbesondere das Fasermaterial (B) geschont, so daß sich diese Verfahrensführung insbesondere bei Verwendung von Fasern mit geringen Faserdurchmessern eignet, beispielsweise im Falle der Verwendung von Nanofasern.

In bezug auf das Verfahren gemäß dem zweiten Aspekt der vorliegenden Erfindung kann insbesondere das in Verfahrensschritt d) zugegebene Fasermaterial (B) in Form einer Suspension vorliegen bzw. kann der in Verfahrensschritt d) resultierenden Mischung ein Suspensionsmittel zugegeben werden. Das Suspensionsmittel wird vorzugsweise vor und/oder im Rahmen der in Verfahrensschritt e) durchgeführten Erwärmung entfernt. In diesem Zusammenhang kann mindestens ein weiterer Verfahrensschritt d1), d2) usw. zur Entfernung des Suspensionsmittels vorgesehen sein. Diesbezüglich kommen die oben genannten Methoden in Betracht. Grundsätzlich können - auch wenn dies erfindungsgemäß weniger bevorzugt ist - bereits die in Verfahrensschritt a) eingesetzten Komponenten, nämlich das partikuläre Adsorptionsmaterial (A) und/oder der Bindemittelträger als Suspension eingesetzt werden. In diesem Fall sollte ein Entfernen des Suspensionsmittels vor bzw. während der Durchführung von Verfahrensschritt b) erfolgen.

Was das erfindungsgemäße Verfahren zur Herstellung der adsorptiven Strukturen nach der Erfindung weiterhin anbelangt, so kann die Belegung des Bindemittelträgers mit dem partikulären Adsorptionsmaterial (A) bzw. insbesondere mit dem Fasermaterial (B) wiederholt werden, insbesondere durch weitere Zugabe der Komponenten und nachfolgende Erwärmung der resultierenden Mischung. Auf diese Weise kann die Belegung des Bindemittelträges weiter optimiert werden.

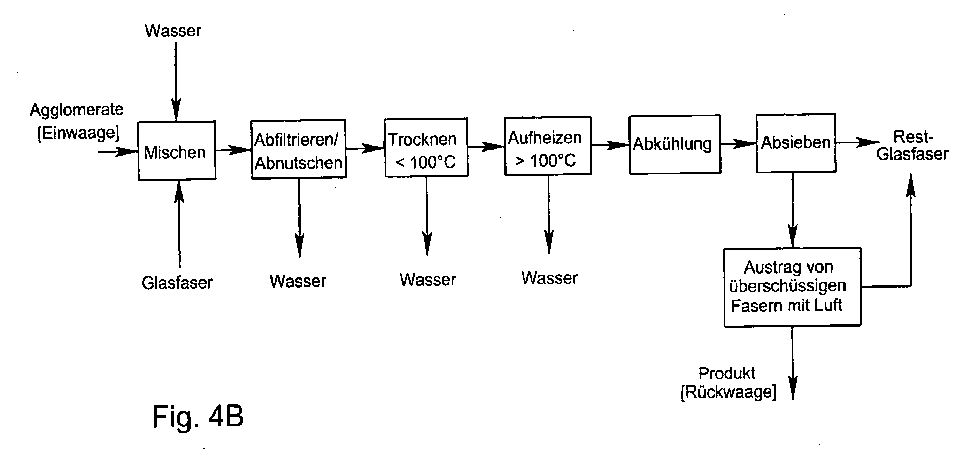

Eine typische Ausführungsform für die Durchführung der erfindungsgemäßen Verfahren nach Art eines Suspensionsverfahrens bzw. Naßverfahrens ist in Fig. 4B dargestellt.

Weiterer Gegenstand - gemäß einem dritten Aspekt der vorliegenden Erfindung - sind die Verwendungen der erfindungsgemäßen adsorptiven Systeme.

So können die erfindungsgemäßen adsorptiven Systeme, wie zuvor definiert, mit einem partikulären Adsorptionsmaterial (A), insbesondere einer Vielzahl von Adsorberpartikeln, und mit einem Fasermaterial (B), insbesondere einer Vielzahl von Fasern, für die Adsorption von Giftstoffen, Schadstoffen und Gerüchen, insbesondere aus Gas- oder Luftströmen oder aber aus Flüssigkeiten, insbesondere Wasser, verwendet werden.

Zudem können die erfindungsgemäßen adsorptiven Strukturen, wie zuvor definiert, mit einem partikulären Adsorptionsmaterial (A), insbesondere einer Vielzahl von Adsorberpartikeln, und mit einem Fasermaterial (B), insbesondere einer Vielzahl von Fasern, zur Reinigung oder Aufbereitung von Gasen, Gasströmen oder Gasgemischen, insbesondere Luft, oder von Flüssigkeiten, insbesondere Wasser, verwendet werden.

Weiterhin können die erfindungsgemäßen adsorptiven Strukturen, wie zuvor definiert, mit einem partikulären Adsorptionsmaterial (A), insbesondere einer Vielzahl von Adsorberpartikeln, und mit einem Fasermaterial (B), insbesondere einer Vielzahl von Fasern, zur Verwendung in Adsorptionsfiltern und/oder zur Herstellung von Filtern, insbesondere Adsorptionsfiltern, eingesetzt werden.

Zudem können die erfindungsgemäßen adsorptiven Strukturen, wie zuvor definiert, mit einem partikulären Adsorptionsmaterial (A), insbesondere einer Vielzahl von Adsorberpartikeln, und mit einem Fasermaterial (B), insbesondere einer Vielzahl von Fasern, als Sorptionsspeicher für Gase, insbesondere Wasserstoff, verwendet werden.

Weiterhin können - gemäßen einem vierten Aspekt der vorliegenden Erfindung - die erfindungsgemäßen adsorptiven Strukturen (1), wie zuvor definiert, mit einem partikulären Adsorptionsmaterial (A), insbesondere einer Vielzahl von Adsorberpartikeln, und mit einem Fasermaterial (B), insbesondere einer Vielzahl von Fasern, zur Herstellung von adsorptiven Formkörpern, insbesondere durch Verpressen, verwendet werden.

In bezug auf die vorgenannten Verwendungen können die adsorptiven Systeme nach der Erfindung insbesondere in loser Schüttung eingesetzt werden. Alternativ können die adsorptiven Systeme auch in Form eines hieraus insbesondere mittels Verpressens hergestellten Formkörpers eingesetzt werden.

Wiederum beschrieben ist ein Filter, welches die adsorptiven Systeme nach der Erfindung, wie zuvor definiert, mit einem partikulären Adsorptionsmaterial (A), insbesondere einer Vielzahl von Adsorberpartikeln, und mit einem Fasermaterial (B), insbesondere einer Vielzahl von Fasern, vorzugsweise in loser Schüttung, enthält, wobei das Filter einen längenbezogenen Druckverlust bei einer Strömungsgeschwindigkeit von 0,2 m/s von höchstens 200 Pa/cm, insbesondere im Bereich von 5 bis 200 Pa/cm, aufweist. In diesem Zusammenhang sollte das Filter einen längenbezogenen Druckverlust bei einer Strömungsgeschwindigkeit von 0,2 m/s von höchstens 150 Pa/cm, vorzugsweise höchstens 100 Pa/cm, besonders bevorzugt höchstens 90 Pa/cm, ganz besonders bevorzugt höchstens 70 Pa/cm, noch mehr bevorzugt höchstens 50 Pa/cm, aufweisen. Typischerweise sollte das Filter einen längenbezogenen Druckverlust bei einer Strömungsgeschwindigkeit von 0,2 m/s im Bereich von 5 bis 150 Pa/cm, vorzugsweise 5 bis 100 Pa/cm, besonders bevorzugt 7,5 bis 90 Pa/cm, ganz besonders bevorzugt 10 bis 80 Pa/cm, aufweisen.

Für weitergehende Einzelheiten zu dem Filter kann auf die obigen Ausführungen zu den übrigen Erfindungsaspekten sowie auf nachfolgende Ausführungen verwiesen werden, welche in bezug auf diesen Aspekt entsprechend gelten.

Wiederum weiterer Gegenstand der vorliegenden Erfindung - gemäß einem fünften Aspekt der vorliegenden Erfindung - ist ein adsorptiver Formkörper, welcher aus einer Vielzahl der erfindungsgemäßen adsorptiven Systeme, wie zuvor definiert, aufgebaut ist.

Der erfindungsgemäße adsorptive Formkörper, wie zuvor definiert, kann mit einem Verfahren hergestellt werden, wobei adsorptive Systeme, wie zuvor definiert, zusammengeführt, insbesondere verpreßt werden.

Schließlich ist ein weiterer Gegenstand der vorliegenden Erfindung - gemäß einem sechsten Aspekt der vorliegenden Erfindung - ein Filter, welches den zuvor angeführten adsorptiven Formkörper nach der Erfindung enthält.

Weitere vorteilhafte Eigenschaften, Aspekte und Merkmale der vorliegenden Erfindung ergeben sich aus der folgenden Beschreibung von in den Figuren dargestellten Ausführungsbeispielen. Es zeigt:
- Fig. 1A: eine schematische Querschnittsdarstellung einer erfindungsgemäßen adsorptiven Struktur mit an einem Bindemittelträger fixierten Adsorbentien in Form eines partikulären Adsorptionsmaterials (A) sowie mit an dem Bindemittelträger fixierten Fasern eines Fasermaterials (B);
- Fig. 1B: eine schematische Draufsicht einer erfindungsgemäßen adsorptiven Struktur mit auf einem Bindemittelträger aufgebrachten Adsorbentien in Form eines partikulären Adsorptionsmaterials (A) und mit auf dem Bindemittelträger aufgebrachten Fasern eines Fasermaterials (B);
- Fig. 2A: eine vergrößerte fotographische Darstellung einer erfindungsgemäßen adsorptiven Struktur mit fixierten Adsorbentien in Form des partikulären Adsorptionsmaterials (A) und mit fixierten Fasern in Form des Fasermaterials (B);
- Fig. 2B: eine weitere photografische Darstellung mit einer Vielzahl von erfindungsgemäßen adsorptiven Strukturen, welche jeweils das partikuläre Adsorptionsmaterial (A) sowie das Fasermaterial (B) aufweisen.
- Fig. 2C: eine vergrößerte photografische Darstellung einer erfindungsgemäßen Struktur mit dem partikulären Adsorptionsmaterial (A) und dem Fasermaterial (B).
- Fig. 3A: eine Schemadarstellung des Ablaufes des erfindungsgemäßen Verfahrens gemäß einer Ausführungsform der vorliegenden Erfindung zur Herstellung der erfindungsgemäßen adsorptiven Systeme;
- Fig. 3B: eine Schemadarstellung eines Verfahrens zur Herstellung der adsorptiven Systeme nach der Erfindung (Vergleich);
- Fig. 4A: eine Schemadarstellung einer typischen Ausführungsform für die Durchführung der erfindungsgemäßen Verfahren nach Art eines Trockenverfahrens;
- Fig. 4B: eine Schemadarstellung einer typischen Ausführungsform für die Durchführung der erfindungsgemäßen Verfahren nach Art eines Naßverfahrens.

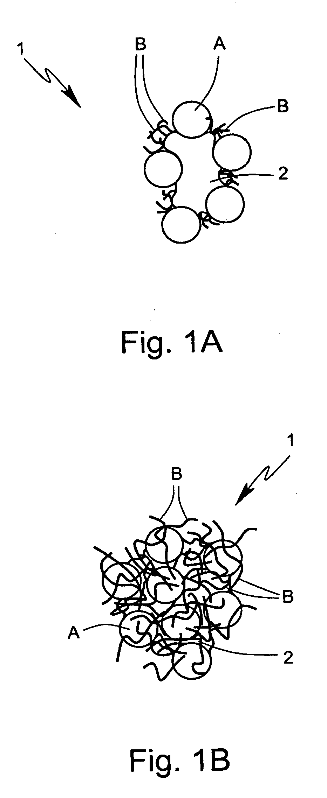

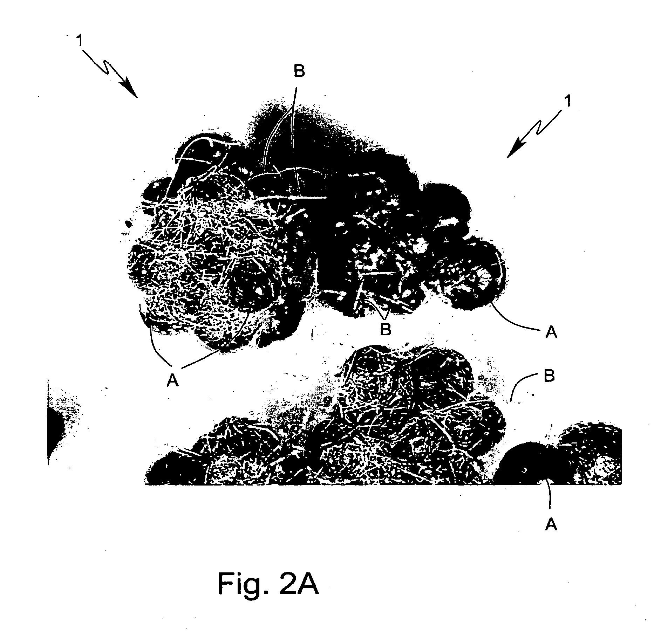

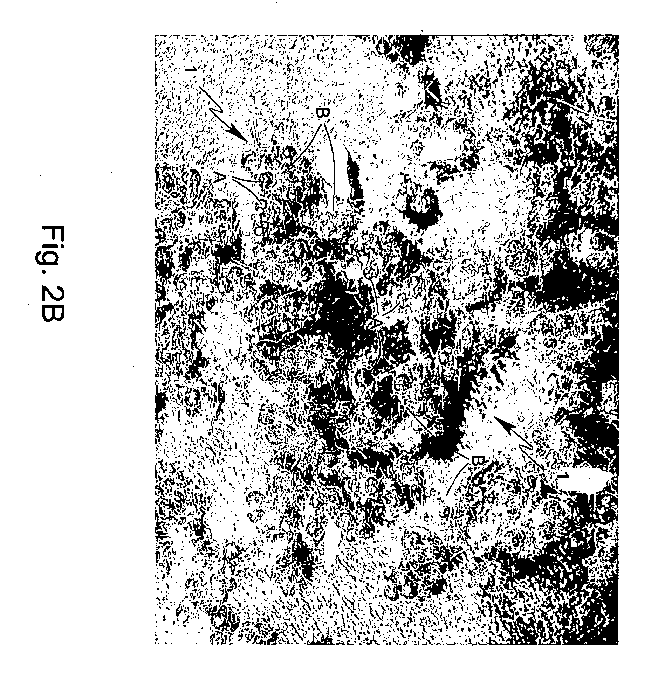

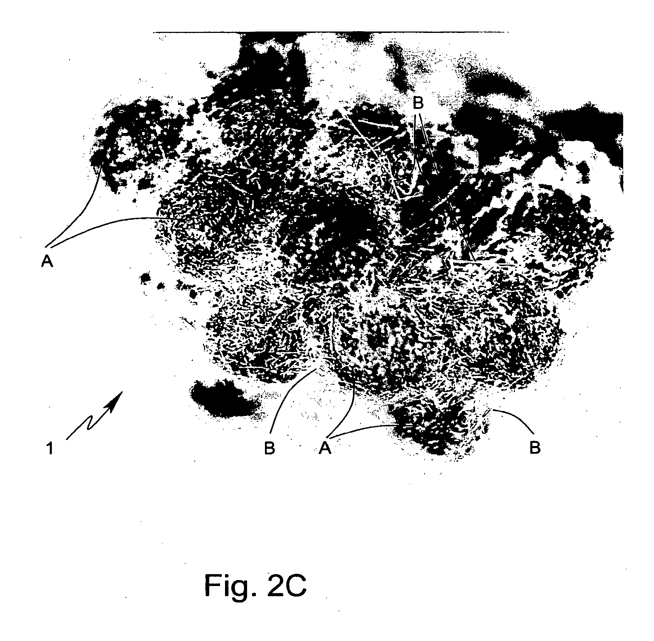

Die Fig. 1A, Fig. 1B sowie Fig. 2A bis Fig. 2C beziehen sich jeweils auf die erfindungsgemäßen adsorptiven Strukturen, wobei ein partikuläres Adsorptionsmaterial (A) und ein Fasermaterial (B) an bzw. auf einem Bindemittelträger 2 zum Haften gebracht sind.

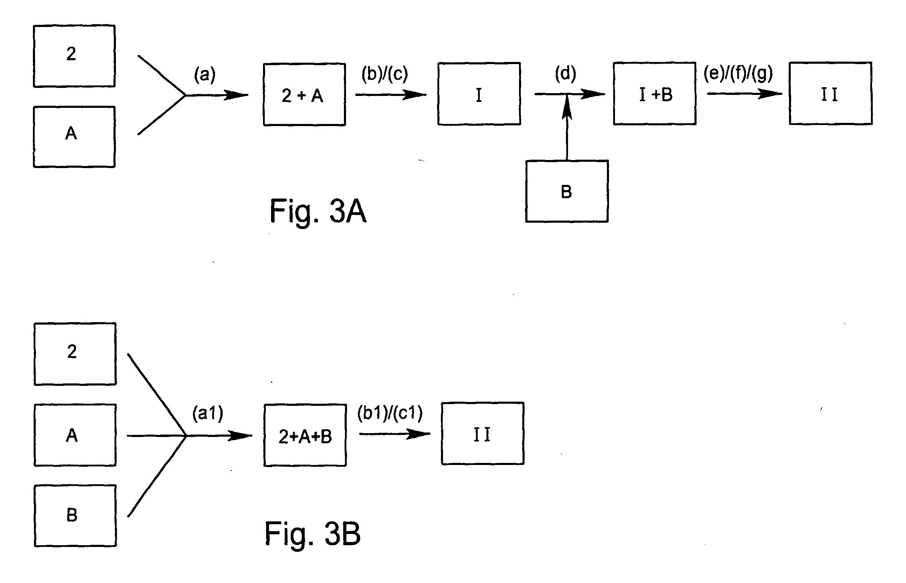

Fig. 3A schematisiert den Ablauf des erfindungsgemäßen Verfahrens gemäß einer erfindungsgemäß bevorzugten Ausführungsform, wonach zunächst das partikuläre Adsorptionsmaterial (A) einerseits und ein Bindemittelträger 2 miteinander in Kontakt gebracht bzw. vermischt werden. Diesbezüglich kann das partikuläre Adsorptionsmaterial (A) als Basisadsorber mit definierten Eigenschaften eingesetzt werden. Der Bindemittelträger 2 sollte hinsichtlich seiner Partikelgröße an die Partikelgröße des verwendeten partikulären Adsorptionsmaterials (A) bzw. an die Basisadsorber angepaßt werden, insbesondere wie zuvor angeführt. Nach bzw. bei Inkontaktbringen der Komponenten erfolgt eine Erwärmung der resultierenden Mischung auf Temperaturen oberhalb der Schmelz- bzw. Erweichungstemperatur des Bindemittelträgers gemäß Schritt b), wobei die thermische Behandlung in Abhängigkeit von den diesbezüglichen Eigenschaften des eingesetzten Bindemittelträgers bzw. Klebers durchgeführt werden sollte. Durch den Eintrag von Energie im Sinne einer mechanischen Behandlung wird sozusagen der Kontakt zwischen Bindemittelträger 2 einerseits und dem partikulären Adsorptionsmaterial (A) andererseits hergestellt und die adsorptiven Partikel auf dem Bindemittelträger 2 fixiert bzw. zum Haften gebracht. Anschließend kann gemäß Schritt c) eine Abkühlung der resultierenden Zwischenprodukte in Form von Agglomeraten mit dem partikulären Adsorptionsmaterial (A) (Agglomerate I) erfolgen.

In einem weiterführenden Schritt wird dem ersten Agglomerat I anschließend gemäß Schritt d) das Fasermaterial (B) zugegeben. Gegebenenfalls erfolgt anschließen gemäß Schritt d) eine thermische Behandlung, welche gleichermaßen in Abhängigkeit vom eingesetzten Bindemittelträger bzw. Kleber sowie hinsichtlich der eingesetzten Fasern ausgeführt bzw. durchgeführt wird. Gemäß Schritt f) erfolgt ein weiterer Energieeintrag in Form einer mechanischen Behandlung, wobei der Kontakt mit dem Fasermaterial (B) und den ersten Agglomeraten I hergestellt wird und das Fasermaterial (B) auf den freien Stellen des Bindemittelträgers 2 und/oder gegebenenfalls auf dem partikulären Adsorptionsmaterial fixiert bzw. zum Haften gebracht wird. Anschließend erfolgt gemäß Schritt g) eine Abkühlung zum Erhalt der erfindungsgemäßen adsorptiven Systeme (Agglomerate II) in Form von Adsorberagglomeraten mit zusätzlicher Partikel- und/oder Aerosolfilterfunktion.

Gemäß dem Schema nach Fig. 3B können die erfindungsgemäßen adsorptiven Systeme 1 nach einem Verfahren hergestellt werden, wonach in einem ersten Schritt a1) sowohl das partikuläre Adsorptionsmaterial (A) als auch das Fasermaterial (B) und der Bindemittelträger 2 in Kontakt miteinander gebracht und vermischt werden. Nachfolgend erfolgt gemäß Schritt b1) eine Temperaturbehandlung bzw. Erwärmung, wobei das partikuläre Adsorptionsmaterial (A) sowie das Fasermaterial (B) insbesondere durch Energieeintrag auf den Teilchen des Bindemittelträgers 2 zum Haften gebracht werden. Anschließend erfolgt gemäß Schritt c1) eine Abkühlung zum Erhalt der erfindungsgemäßen adsorptiven Systeme 1 (Agglomerate II).

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

Nachfolgend wird die Herstellung adsorptiver Strukturen nach der Erfindung auf Basis von Agglomeraten unter Verwendung eines partikulären Adsorptionsmaterials (A) und eines Fasermaterials (B) sowie von Vergleichssystemen beschrieben.
1. Erfindungsgemäße Agglomerate A1 bis A3
Bei der Herstellung der erfindungsgemäßen adsorptiven Strukturen bzw. Agglomerate wird derart vorgegangen, daß zunächst Basispartikel bzw. das erste partikuläre Adsorptionsmaterial (A) in Form von Aktivkohle bereitgestellt wird. Dabei wird das erste partikuläre Adsorptionsmaterial aus polymerem Rohstoff hergestellt. Das partikuläre Adsorptionsmaterial (A) weist ein Gesamtporenvolumen V₍ₜₒₜ₎ von 0,63 cm³/g sowie eine spezifische Oberfläche A_{(BET)} von 1.350 m²/g auf. Zudem weist das partikuläre Adsorptionsmaterial (A) eine polydisperse Partikelgrößenverteilung mit d_{(Partikel)} = 0,45 bis 0,71 mm auf. Ein derartiges partikuläres Adsorptionsmaterial (A) in Form von Aktivkohle kann beispielsweise von der Blücher GmbH, Erkrath, Deutschland, oder von der Adsor-Tech GmbH, Premnitz, Deutschland, erhalten werden.
In bezug auf den Bindemittelträger werden thermoplastische Schmelzklebstoffpartikel, im allgemeinen mit Korngrößen im Bereich von 200 bis 1.000 µm in einem gewichtsbezogenen Klebereinsatzverhältnis (Bindemittelträger/Basispartikel-Verhältnis) von 1:7 eingesetzt. Der Schmelzklebstoff kann beispielsweise vom Typ 9EP sein, erhältlich von der EMS-Chemie AG, EMS-GRILLTECH, Schweiz. Das partikuläre Adsorptionsmaterial (A) einerseits und die Bindemittelträger andererseits werden miteinander in Kontakt gebracht und in einem Drehrohr gemischt, wobei eine Erwärmung auf eine Zieltemperatur von T = 175 °C mit einem Gradienten zum Erreichen der Zieltemperatur von dT/dt = 2 °C/min durchgeführt wird. Die Haltezeit nach Erreichen der Zieltemperatur beträgt t = 30 min. Die Drehgeschwindigkeit des Drehrohrreaktors beträgt n = 5 U/min. Es erfolgt eine Agglomeratsiebung mit d_{(Agglomerat)} auf 1,25 bis 2,5 mm.
In einem weiteren Schritt werden die erfindungsgemäßen adsorptiven Strukturen aus den zuvor erhaltenen Basisagglomeraten unter erneuter Erwärmung bzw. unter Aufrechterhaltung der Temperatur und durch Zugabe des Fasermaterials (B) erhalten. Das Fasermaterial (B) wird mit den Basisagglomeraten in Kontakt gebracht und gemischt, wobei die Mischung auf eine Zieltemperatur von T = 175 °C mit einem Gradienten zum Erreichen der Zieltemperatur von dT/dt = 2 °C/min erwärmt werden kann, sofern zuvor eine Abkühlung durchgeführt wurde. Die Haltezeiten nach Erreichen der Zieltemperatur beträgt dann t = 30 min. Nach Abkühlen erfolgt eine Absiebung, um nicht fixierte bzw. nicht verklebte Fasern abzutrennen. Die nicht fixierten Fasern können auch durch einen Luftstrom entfernt bzw. abgeblasen werden. Zudem kann sich eine Klassierung der Kompositadsorber insbesondere mit d_{(Kompositadsorber)} von 1,25 bis 2,5 mm anschließen. Es resultieren somit erfindungsgemäße adsorptive Strukturen auf Basis eines partikulären Adsorptionsmaterials (A) in Form von Aktivkohle einerseits und einem Fasermaterial (B) andererseits, wobei das Fasermaterial (B) in bezug auf die jeweils hergestellten verschiedenen Agglomerate nach der Erfindung wie folgt eingesetzt wird:
a) In bezug auf die erfindungsgemäßen adsorptiven Systeme A1 werden bezüglich des Fasermaterials (B) im Vergleich zu den im allgemeinen einsetzbaren Fasern solche Fasern eingesetzt, welche relativ große mittlere Faserlängen und relativ große mittlere Faserdurchmesser aufweisen. So handelt es sich bei den eingesetzten Fasern gemäß A1 um solche mit einer mittleren Faserlänge von etwa 6 mm, während der mittlere Faserdurchmesser etwa 250 µm beträgt, wobei diesbezüglich übliche Chemiefasern eingesetzt werden.
b) In bezug auf die erfindungsgemäßen adsorptiven Systeme A2 werden in bezug auf das Fasermaterial (B) solche Fasern eingesetzt, welche im Vergleich zu den im allgemeinen einsetzbaren Fasern relativ kleine Faserlängen und relativ kleine Faserdurchmesser aufweisen. So werden in bezug auf das Fasermaterial (B) Fasern mit einer mittleren Faserlänge von etwa 1,5 mm und einem mittleren Faserdurchmesser von etwa 10 µm eingesetzt. Bei den Fasern handelt es sich gleichermaßen um handelsübliche Chemiefasern.
c) Schließlich werden erfindungsgemäße adsorptive Systeme A3 hergestellt, welche ein Fasermaterial (B) auf Basis einer Mischung der unter a) und b) beschriebenen Fasern in einem gewichtsbezogenen Verhältnis von 1 : 1 enthalten; das Fasermaterial (B) gemäß A3 setzt sich somit aus 50 Gew.-% des ersten Fasertyps und aus 50 Gew. des zweiten Fasertyps zusammen. Die erfindungsgemäßen adsorptiven Systeme C3 enthalten somit gewichtsbezogen gleiche Anteile von Fasern mit einem mittleren Faserdurchmesser von 250 µm und einer mittleren Faserlänge von 6 mm einerseits und von Fasern mit einem mittleren Faserdurchmesser von 10 µm und einer mittleren Faserlänge von 1,5 mm andererseits.

3. Adsorptive Agglomerate (B1) (Vergleich)
Als Vergleich bzw. als nichterfindungsgemäßes Beispiel werden Agglomerate hergestellt, welche lediglich das unter 1.a) beschriebene partikuläre Adsorptionsmaterial aufweisen. Auch der eingesetzte Bindemittelträger entspricht dem unter 1.a) beschriebenen Schmelzklebstoff. Es resultieren nach Fixierung der Adsorberpartikel auf dem Bindemittelträger nichterfindungsgemäße Agglomerate B1.
4. Adsorptionspartikel (C1) (Vergleich)
Als weiteres Vergleichsbeispiel fungiert ein partikuläres Adsorptionsmaterial als solches, welches in Form einer losen Schüttung der jeweiligen Adsorberpartikel vorliegt. Die Adsorber weisen eine Größe von etwa 0,3 bis etwa 0,6 mm auf.
5. Untersuchungen zum Druckverlust, zur Partikel- und/oder Aerosolfilterfunktion sowie zum Durchbruchsverhalten der jeweiligen Systeme
a) In einem ersten Versuchsabschnitt wird der Druckverlust für die erfindungsgemäßen Agglomerate A1 bis A3 sowie für die nichterfindungsgemäßen Agglomerate B1 sowie für die Partikel gemäß C1 bestimmt, wobei die Systeme jeweils in Form einer Schüttung eingesetzt werden. Die Messung des Druckverlustes führt zu den nachfolgend in Tabelle 1 angegebenen Werte.

**Tabelle 1: Druckverlustmessungen an verschiedenen adsorptiven Strukturen**

| **Probe** | **A1** | **A2** | **A3** | **B1** | **C1** |
|---|---|---|---|---|---|
| **Druckverlust (Pa/cm bei 0,1 m/s)** | 5 | 11 | 7 | 15 | 131 |

Die vorstehenden Ergebnisse zeigen, daß für die nichterfindungsgemäßen Adsorber C1 in Form einer losen Schüttung der höchste Druckverlust vorliegt, während im Hinblick auf die erfindungsgemäßen Adsorber geringere Druckverluste zu beobachten sind, wobei der Druckverlust unter Verwendung von längeren Fasern mit größerem Querschnitt bzw. Durchmesser (gemäß A1 und A3) zu einer weiteren Abnahme des Druckverlustes führt.
b) Zudem wird an allen sechs Adsorptionsfiltermaterialien der mittlere Wirkungsgrad Eₘ nach DIN EN 779 (Juli 1993) und der mittlere Abscheidegrad Am nach DIN EN 779 (Juli 1993) bestimmt.
Der mittlere Wirkungsgrad Eₘ liegt bei dem ersten erfindungsgemäßen System A1 bzw. zweiten erfindungsgemäßen System A2 bzw. dritten erfindungsgemäßen System A3 bei ca. 87 % bzw. ca. 96 % bzw. ca. 91 %, während der mittlere Wirkungsgrad Eₘ bei den Vergleichsmaterialien B1 sowie C1 bei 7 % bzw. 9 % liegt.
Zudem beträgt der mittlere Abscheidegrad Aₘ bei dem ersten erfindungsgemäßen System A1 bzw. zweiten erfindungsgemäßen System A2 bzw. dritten erfindungsgemäßen System A3 89 % bzw. 97 % bzw. 93 % während der mittlere Abscheidegrad Aₘ bei den nichterfindungsgemäßen Systemen gemäß B1 bzw. C1 bei 10 % bzw. 11 % liegt.
Dies zeigt, daß die erfindungsgemäßen adsorptiven Systeme einen guten Partikel- und Aerosolschutz aufweisen, welcher bei Verwendung von Fasern mit relativ geringem Faserdurchmesser und relativ geringer Faserlänge noch weiterführend verbessert ist, wohingegen die Vergleichsbeispiele einen deutlich schlechteren Partikel- bzw. Aerosolfilterschutz aufweisen.
Weiterhin wird an den adsorptiven Systemen der integrale Anfangsdurchlaßgrad Dᵢ nach DIN EN 1822 (April 1998; DEHS-Aerosol MPPS = 0,1 bis 0,3 µm) bestimmt. Der integrale Anfangsdurchlaßgrad Dᵢ liegt bei dem ersten adsorptiven System A1 bzw. zweiten adsorptiven System A2 bzw. dritten adsorptiven System A3 bei ca. 6 % bzw. ca. 4 % bzw. ca. 5 %, während bei den nichterfindungsgemäßen Systemen B1 und C1 mit 88% bzw. 85% deutlich schlechtere Werte erzielt werden.
Zudem weisen die drei erfindungsgemäßen adsorptiven Systeme A1, A2 und A3 gegenüber Partikeln und Aerosolen mit Durchmessern ≥ 1,5 µm eine Abscheiderate oberhalb von 95 % auf, wohingegen diese Abscheiderate bei den nichterfindungsgemäßen adsorptiven Systemen B1, C1 unterhalb von 25 % liegt.
c) Schließlich wird für die erfindungsgemäßen adsorptiven Systeme A1, A2 und A3 sowie für die nichterfindungsgemäßen Systeme B1 und C1 die jeweilige Barrierewirkung gegenüber Senfgas im Rahmen eines sogenannten konvektiven Strömungstests (*convective flow lest*) bestimmt. Zu diesem Zweck läßt man bei konstantem Strömungswiderstand mit einer Strömungsgeschwindigkeit von ca. 0,45 cm/s einen Senfgas enthaltenden Luftstrom auf das Adsorptionsmaterial einwirken und bestimmt die flächenbezogene Durchbruchsmenge nach 16 Stunden (80 % relative Luftfeuchtigkeit, 32 °C). Bei sämtlichen adsorptiven Systemen liegt die Durchbruchsmenge in bezug auf Senfgas deutlich unterhalb von 4 µg/m², so daß sämtliche adsorptiven Systeme eine gute Schutzwirkung gegenüber chemischen Kampfstoffen zeigen.
Die zuvor angeführten Untersuchungen zeigen insgesamt die hervorragenden Eigenschaften der erfindungsgemäßen adsorptiven Strukturen in bezug auf die kombinierte Bereitstellung von Adsorptionseigenschaften einerseits und einer Partikel- und/oder Aerosolfilterfunktion andererseits.
6. Ergänzende Ausführungsbeispiele auf Basis weiterer Agglomerate nach der Erfindung
Koagglomerate (Agglomerate mit Glasfasern):
1. (1,25 - 2,5 mm) → 1,8 µm Glasfaser (Trockenprozedur)
2. (1,25 - 2,5 mm) → 600 nm Glasfaser (Wassermethode)
3. (1,25 - 2,5 mm) → Mischung 1,8 µm Glasfaser und 600 nm Glasfaser (Wassermethode)
4. (0,71 - 1,25 mm) → 1,8 µm Glasfaser (Trockenprozedur)
5. (0,71 - 1,25 mm) → 600 nm Glasfaser (Wassermethode)
6. (0,71 - 1,25 mm) → Mischung 1,8 µm Glasfaser und 600 nm Glasfaser (Wassermethode)
7. Erhöhte Kleberanteile // (1,25 - 2,5 mm) → 1,8 µm Glasfaser (Trockenprozedur)
8. Erhöhte Kleberanteile // (1,25 - 2,5 mm) → 600 nm Glasfaser (Wassermethode)
9. Erhöhte Kleberanteile // (1,25 - 2,5 mm)
   → Mischung 1,8 µm Glasfaser und 600 nm Glasfaser (Wassermethode)
10. Erhöhte Kleberanteile // (0,71 - 1,25 mm) → 1,8 µm Glasfaser (Trockenprozedur)
11. Erhöhte Kleberanteile // (0,71 - 1,25 mm) → 600 nm Glasfaser (Wassermethode)
12. Erhöhte Kleberanteile // (0,71 - 1,25 mm) → Mischung 1,8 µm Glasfaser und 600 nm Glasfaser (Wassermethode)

Die Mischung aus 1,8 µm Glasfaser und 600 nm Glasfaser wird jeweils 3:1 eingesetzt. Für die Fasern sind die Faserdurchmesser angegeben. Die in den Klammern angegebenen Zahlenwerte beziehen sich auf die Teilchengröße des eingesetzten Adsorptionsmaterials.
7. Weitere Ausführungsbeispiele auf Basis von Agglomeraten nach der Erfindung

**Tabelle 2: Koagglomerate (Agglomerate mit Glasfasern)**

| Probe | Glasfaseranteil | Schüttdichte | Butan | Flüchtige Bestandteile | ΔP (v = 0,2 m/s) |
|---|---|---|---|---|---|
| [-] | [%] | [g/l] | [%] | [%] | [Pa/cm] |
| TV605 / TV606 / TV607 (1,25-2,5 mm) | 0,00 % | 428 | 22,7 | 9,7 | 19 |
| 1 | 1,02 % | 407 | 22,5 | 9,3 | 57 |
| 2 | 3,21 % | 468 | 20,5 | 10,6 | 27 |
| 3 | 0,75 % | 446 | 21,6 | 10 | 25 |
| 3b | 0,58 % | 447 | 21,4 | 9,9 | 22 |
| TV605 / TV606 / TV607 (0,71 - 1,25 mm) | 0,00% | 544 | 23,8 | 6,7 | 55 |
| 4 | 0,45 % | 484 | 23,8 | 6,6 | 73 |
| 5 | 3,02 % | 566 | 22,2 | 7,5 | 69 |
| 6 | 0,82 % | 528 | 23,1 | 7,3 | 60 |
| 6b | 0,72 % | 531 | 23,0 | 6,8 | 64 |
| TV730 // (1,25 - 2,5 mm) | 0,00 % | 566 | 21,7 | 12,8 | 40 |
| 7 | 0,20 % | 513 | 21,4 | 13,4 | 53 |
| 8 | 1,11 % | 537 | 20,0 | 12,7 | 35 |
| 9b | 0,33 % | 508 | 20,6 | 12,7 | 30 |
| TV730 // (0,71 - 1,25 mm) | 0,00 % | 586 | 22,9 | 10,6 | 63 |
| 10 | 0,40 % | 539 | 22,7 | 10,4 | 70 |
| 11 | 1,37 % | 575 | 21,3 | 10,4 | 69 |
| 12b | 0,39 % | 575 | 22,1 | 10,2 | 66 |

| | | | | | |
|---|---|---|---|---|---|
| Bemerkungen: a) 3 und 3b, 6 und 6b sind jeweils äquivalente Prototypen. b) Die Mischungen 1,8 µm Glasfaser und 600 nm Glasfaser sind jeweils zu 3:1 gesetzt. c) (TV605 / TV606 / TV607) und TV 730 haben verschiedene Kleberanteile. Typen: 1. TV605 / TV606 / TV607 (1,25 - 2,5 mm) → 1,8 µm Glasfaser (Trockenprozedur) 2. TV605 / TV606 / TV607 (1,25 - 2,5 mm) → 600 nm Glasfaser (Wassermethode) 3. TV605 / TV606 / TV607 (1,25 - 2,5 mm) → Mischung 1,8 µm Glasfaser und 600 nm Glasfaser (Wassermethode) 4. TV605 / TV606 / TV607 (0,71 - 1,25 mm) → 1,8 µm Glasfaser (Trockenprozedur) 5. TV605/ TV606/ TV607 (0,71 - 1,25 mm) → 600 nm Glasfaser (Wassermethode) 6. TV605 / TV606 / TV607 (0,71 - 1,25 mm) → Mischung 1,8 µm Glasfaser und 600 nm-Glasfaser (Wassermethode) 7. TV730 // (1,25 - 2,5 mm) → 1,8 µm Glasfaser (Trockenprozedur) 8. TV730 // (1,25 - 2,5 mm) → 600 nm Glasfaser (Wassermethode) 9b. TV730 // (1,25 - 2,5 mm) → Mischung 1,8 µm Glasfaser und 600 nm Glasfaser (Wassermethode) 10. TV730 // (0,71 - 1,25 mm) → 1,8 µm Glasfaser (Trockenprozedur) 11. TV730 // (0,71 - 1,25 mm) → 600 nm Glasfaser (Wassermethode) 12b. TV730 // (0,71 - 1,25 mm) → Mischung 1,8 µm Glasfaser und 600 nm Glasfaser (Wassermethode) | | | | | |

## Patentansprüche

1. Adsorptive Strukturen (1) auf Basis von Agglomeraten von Adsorberpartikeln, vorzugsweise mit Partikel- und/oder Aerosolfilterfunktion,
wobei die einzelnen adsorptiven Strukturen (1) in Form der einzelnen Agglomerate jeweils mindestens ein partikuläres Adsorptionsmaterial (A) einerseits und mindestens ein Fasermaterial (B) andererseits aufweisen, wobei das mindestens eine partikuläre Adsorptionsmaterial (A) und das mindestens eine Fasermaterial (B) jeweils auf einem auf Basis eines thermoplastischen organischen Polymers ausgebildeten Bindemittelträger (2) fixiert sind, wobei das partikuläre Adsorptionsmaterial (A) und das Fasermaterial (B) über den Bindemittelträger (2) zu einer einzelnen adsorptiven Struktur (1) in Form eines einzelnen Agglomerats verbunden sind und wobei der Bindemittelträger (2) mindestens einen Kern einer einzelnen adsorptiven Struktur (1) in Form eines einzelnen Agglomerats bildet,
wobei die einzelnen adsorptiven Strukturen (1) in Form der einzelnen Agglomerate das partikuläre Adsorptionsmaterial (A) in Form von diskreten Adsorberpartikeln und das Fasermaterial (B) in Form von diskreten Fasern in einem Gewichtsverhältnis von Adsorberpartikeln einerseits zu Fasern andererseits von mindestens 5 : 1 aufweisen und
wobei das partikuläre Adsorptionsmaterial (A) ausgewählt ist aus der Gruppe von
(i) Aktivkohle, insbesondere kornförmiger Aktivkohle, vorzugsweise kugelförmiger Aktivkohle und/oder insbesondere geformter und/oder extrudierter Aktivkohle und/oder pulverförmiger Aktivkohle;
(ii) Zeolithen, insbesondere natürlichen und/oder synthetischen Zeolithen;
(iii) Molekularsieben, insbesondere zeolithischen Molekularsieben, synthetischen Molekularsieben und/oder insbesondere synthetischen Molekularsieben auf Basis von Kohlenstoff, Oxiden und/oder Gläsern;
(iv) Metalloxid- und/oder Metallpartikeln;
(v) Ionenaustauscherharzen, insbesondere polydispersen und/oder monodispersen Kationen- und/oder Anionenaustauschern, insbesondere vom Geltyp und/oder vom makroporösen Typ;
(vi) anorganischen Oxiden, insbesondere Siliciumdioxiden, Silicagelen und/oder Aluminiumoxiden;
(vii) porösen organischen Polymeren und/oder porösen organisch-anorganischen Hybridpolymeren;
(viii) mineralischen Granulaten;
(ix) Klathraten; sowie
(x) deren Mischungen und/oder Kombinationen.

2. Adsorptive Strukturen nach Anspruch 1, wobei die einzelnen adsorptiven Strukturen (1) in Form der einzelnen Agglomerate das partikuläre Adsorptionsmaterial (A) jeweils in Form und/oder in Mengen von mindestens 2 Adsorberpartikeln, insbesondere mindestens 5 Adsorberpartikeln, vorzugsweise mindestens 10 Adsorberpartikeln, besonders bevorzugt mindestens 15 Adsorberpartikeln, aufweisen und/oder wobei die adsorptiven Strukturen (1) in Form der einzelnen Agglomerate das partikuläre Adsorptionsmaterial (A) jeweils in Form und/oder in Mengen von bis zu 50 Adsorberpartikeln, insbesondere bis zu 75 Adsorberpartikeln, vorzugsweise bis zu 100 Adsorberpartikeln oder mehr, aufweisen und/oder
wobei die einzelnen adsorptiven Strukturen (1) in Form der einzelnen Agglomerate das Fasermaterial (B) jeweils in Form von und/oder in Mengen von mindestens 5 Fasern, insbesondere mindestens 10 Fasern, vorzugsweise mindestens 20 Fasern, bevorzugt mindestens 30 Fasern, besonders bevorzugt mindestens 50 Fasern, aufweist und/oder wobei die adsorptiven Strukturen (1) in Form der einzelnen Agglomerate das Fasermaterial (B) jeweils in Form von und/oder in Mengen von bis zu 50 Fasern, insbesondere bis zu 100 Fasern, vorzugsweise bis zu 150 Fasern oder mehr, umfassen
und/oder wobei die einzelnen adsorptiven Strukturen (1) in Form der einzelnen Agglomerate das partikuläre Adsorptionsmaterial (A) in Form von diskreten Adsorberpartikeln und das Fasermaterial (B) in Form von diskreten Fasern in einem Gewichtsverhältnis von Adsorberpartikeln einerseits zu Fasern andererseits von mindestens 10 : 1, ganz besonders bevorzugt mindestens 50 : 1 oder mehr, aufweisen oder wobei die einzelnen adsorptiven Strukturen (1) in Form der einzelnen Agglomerate das partikuläre Adsorptionsmaterial (A) in Form von diskreten Adsorberpartikeln und das Fasermaterial (B) in Form von diskreten Fasern in einem Gewichtsverhältnis von Adsorberpartikeln einerseits zu Fasern andererseits im Bereich von 1000: 1 bis 5 : 1, insbesondere 500 : 1 bis 5 : 1, vorzugsweise 400 : 1 bis 5 : 1, bevorzugt 300 : 1 bis 5 : 1, besonders bevorzugt 250 : 1 bis 10: 1, ganz besonders bevorzugt 200 : 1 bis 10: 1, aufweisen.

3. Adsorptive Strukturen nach Anspruch 1 oder 2, wobei das partikuläre Adsorptionsmaterial (A), insbesondere das partikelbildende Material des partikulären Adsorptionsmaterial (A), aus Aktivkohle, insbesondere aus kornförmiger, vorzugsweise kugelförmiger Aktivkohle gebildet ist.

4. Adsorptive Strukturen (1) nach einem der vorangehenden Ansprüche, wobei die einzelnen adsorptiven Strukturen (1) in Form der einzelnen Agglomerate das partikuläre Adsorptionsmaterial (A) in Mengen von mindestens 5 Gew.-%, insbesondere mindestens 10 Gew.-%, vorzugsweise mindestens 20 Gew.-%, bevorzugt mindestens 30 Gew.-%, besonders bevorzugt mindestens 50 Gew.-% oder mehr, bezogen auf das Gesamtgewicht einer einzelnen adsorptiven Struktur in Form eines einzelnen Agglomerats, aufweisen und/oder wobei die einzelnen adsorptiven Strukturen (1) in Form der einzelnen Agglomerate das partikuläre Adsorptionsmaterial (A) in Mengen im Bereich von mindestens 5 bis 95 Gew.-%, insbesondere 10 bis 90 Gew.-%, vorzugsweise 20 bis 85 Gew.-%, bevorzugt 30 bis 85 Gew.-%, besonders bevorzugt 50 bis 85 Gew.-%, bezogen auf das Gesamtgewicht einer einzelnen adsorptiven Struktur in Form eines einzelnen Agglomerats, aufweisen und/oder
wobei die einzelnen adsorptiven Strukturen (1) in Form der einzelnen Agglomerate jeweils ein Gewichtsverhältnis von partikulärem Adsorptionsmaterial (A) zu Bindemittelträger (2) von mindestens 1,5: 1, insbesondere mindestens 2 : 1, vorzugsweise mindestens 3 : 1, besonders bevorzugt mindestens 5 : 1, ganz besonders bevorzugt mindestens 7 : 1, aufweisen und/oder wobei die einzelnen adsorptiven Strukturen (1) in Form der einzelnen Agglomerate jeweils ein Gewichtsverhältnis von partikulärem Adsorptionsmaterial (A) zu Bindemittelträger (2) im Bereich von 1,5 : 1 bis 30 : 1, insbesondere 2 : 1 bis 20 : 1, vorzugsweise 3 : 1 bis 15 : 1, besonders bevorzugt 4 : 1 bis 10 : 1, aufweisen.

5. Adsorptive Strukturen nach einem der vorangehenden Ansprüche, wobei die einzelnen adsorptiven Strukturen (1) in Form der einzelnen Agglomerate mindestens ein weiteres partikuläres Adsorptionsmaterial (A₁) aufweisen, wobei das erste partikuläre Adsorptionsmaterial (A) und das weitere partikuläre Adsorptionsmaterial (A₁) mindestens eine voneinander verschiedene physikalische und/oder chemische Eigenschaft, insbesondere mindestens einen voneinander verschiedenen physikalischen und/oder chemischen Parameter, aufweisen,
wobei die physikalische und/oder chemische Eigenschaft, insbesondere der physikalische und/oder chemische Parameter, ausgewählt ist aus der Gruppe von (i) Teilchengröße, insbesondere mittlerer Teilchengröße, und/oder Teilchendurchmesser, insbesondere mittlerer Teilchendurchmesser D50; (ii) spezifischer Oberfläche, insbesondere BET-Oberfläche; (iii) Porenvolumen, insbesondere Adsorptionsvolumen und/oder Gesamtporenvolumen; (iv) Porosität und/oder Porenverteilung, insbesondere Mikroporenvolumenanteil am Gesamtporenvolumen und/oder mittlerem Porendurchmesser; (v) Teilchenform; (vi) chemischer Natur des partikelbildenden Materials; (vii) Imprägnierung und/oder katalytischer Ausrüstung sowie (viii) Kombinationen von mindestens zwei dieser Eigenschaften,
insbesondere wobei das partikuläre Adsorptionsmaterial (A) und das weitere partikuläre Adsorptionsmaterial (A₁) voneinander verschiedene Teilchengrößen, insbesondere voneinander verschiedene Teilchendurchmesser, und/oder voneinander verschiedene mittleren Teilchendurchmesser, insbesondere voneinander verschiedene mittlere Teilchendurchmesser D50, aufweisen, insbesondere wobei die Teilchengrößen, insbesondere die Teilchendurchmesser, insbesondere die mittleren Teilchendurchmesser D50, des partikulären Adsorptionsmaterials (A) und des weiteren partikulären Adsorptionsmaterials (A₁) um mindestens einen Faktor 1,1, insbesondere mindestens einen Faktor 1,25, vorzugsweise mindestens einen Faktor 1,5, bevorzugt mindestens einen Faktor 2, besonders bevorzugt mindestens einen Faktor 5, ganz besonders bevorzugt mindestens einen Faktor 10, jeweils bezogen auf den kleineren Teilchengrößenwert, voneinander verschieden sind und/oder wobei die Teilchengrößen, insbesondere die Teilchendurchmesser, insbesondere die mittleren Teilchendurchmesser D50, des partikulären Adsorptionsmaterials (A) und des weiteren partikulären Adsorptionsmaterials (A₁) um mindestens 0,001 mm, insbesondere um mindestens 0,01 mm, vorzugsweise um mindestens 0,05 mm, bevorzugt um mindestens 0,1 mm, voneinander verschieden sind, insbesondere mit der Maßgabe, dass das partikuläre Adsorptionsmaterial (A) die größeren Werte aufweist und/oder insbesondere mit der Maßgabe, dass das weitere partikuläre Adsorptionsmaterial (A₁) die kleineren Werte aufweist.

6. Adsorptive Strukturen nach einem der vorangehenden Ansprüche, wobei das Fasermaterial (B) ausgewählt ist aus der Gruppe von synthetischen Fasern (Chemiefasern), Naturfasern, insbesondere tierischen und/oder pflanzlichen Fasern, und Mineralfasern sowie deren Mischungen, vorzugsweise synthetischen Fasern (Chemiefasern), und/oder
wobei das Fasermaterial (B) in Form von synthetische Fasern (Chemiefasern), eingesetzt ist oder diese umfasst, insbesondere aus der Gruppe von Polyestern (PES); Polyolefinen, wie Polyethylen (PE) und Polypropylen (PP), Polyvinylchlorid (CLF); Polyvinylidenchlorid (CLF); Acetat (CA); Triacetat (CTA); Polyacryl (PAN), Polyamid (PA); Polyvinylalkohol (PVAL); Polyurethanen; Polyvinylestern; (Meth-)Acrylaten; sowie deren Mischungen, und/oder
wobei das Fasermaterial (B) in Form von Wollfasern, insbesondere Wollfasern tierischen und/oder pflanzlichen Ursprungs, vorzugsweise in Form von Schafswolle und/oder Baumwolle, bevorzugt Schafswolle, eingesetzt ist oder diese umfasst und/oder wobei das Fasermaterial (B) in Form von Aktivkohlefasern eingesetzt ist, insbesondere wobei die Aktivkohlefasern erhältlich sind durch Carbonisieren und nachfolgende Aktivierung organischer Ausgangsfasern, insbesondere von Cellulosefasern, Fasern auf Basis von Cellulosederivaten, Phenolharzfasern, Polyvinylalkoholfasern, Pechfasern, Acrylharzfasern, Polyacrylnitrilfasern, aromatischen Polyamidfasern, Formaldehydharzfasern, divinylbenzolvernetzten Polystyrolfasern, Ligninfasern, Baumwollfasern und/oder Hanffasern.

7. Adsorptive Strukturen nach einem der vorangehenden Ansprüche, wobei die einzelnen adsorptiven Strukturen (1) in Form der einzelnen Agglomerate das Fasermaterial (B) in Mengen von mindestens 0,5 Gew.-%, insbesondere mindestens 1 Gew.-%, vorzugsweise mindestens 2 Gew.-%, bevorzugt mindestens 5 Gew.-%, bezogen auf das Gesamtgewicht einer einzelnen adsorptiven Struktur in Form eines einzelnen Agglomerats, aufweisen und/oder wobei die einzelnen adsorptiven Strukturen (1) in Form der einzelnen Agglomerate das Fasermaterial (B) in Mengen von höchstens 40 Gew.-%, insbesondere höchstens 30 Gew.-%, vorzugsweise höchstens 25 Gew.-%, bevorzugt höchstens 20 Gew.-%, bezogen auf das Gesamtgewicht einer einzelnen adsorptiven Struktur (1) in Form eines einzelnen Agglomerats, aufweisen und/oder wobei die einzelnen adsorptiven Strukturen (1) in Form der einzelnen Agglomerate das Fasermaterial (B) in Mengen im Bereich von 0,5 bis 40 Gew.-%, insbesondere 1 bis 30 Gew.-%, vorzugsweise 2 bis 25 Gew.-%, bevorzugt 5 bis 20 Gew.-%, bezogen auf das Gesamtgewicht einer einzelnen adsorptiven Struktur (1) in Form eines einzelnen Agglomerats, aufweisen und/oder
wobei die einzelnen adsorptiven Strukturen (1) in Form der einzelnen Agglomerate jeweils ein Gewichtsverhältnis von Fasermaterial (B) zu Bindemittelträger (2) von mindestens 0,05 : 1, insbesondere mindestens 0,2 : 1, vorzugsweise mindestens 0,5 : 1, aufweisen und/oder wobei die einzelnen adsorptiven Strukturen (1) in Form der einzelnen Agglomerate jeweils ein Gewichtsverhältnis von Fasermaterial (B) einerseits zu Bindemittelträger (2) andererseits im Bereich von 0,1 : 1 bis 5 : 1, insbesondere 0,2 : 1 bis 3 : 1, vorzugsweise 0,5 : 1 bis 2 : 1, besonders bevorzugt 0,75 : 1 bis 1,5 : 1, aufweisen.

8. Adsorptive Strukturen nach einem der vorangehenden Ansprüche, wobei die einzelnen adsorptiven Strukturen (1) in Form der einzelnen Agglomerate mindestens ein weiteres Fasermaterial (B₁) aufweisen, insbesondere wobei das Fasermaterial (B) und das weitere Fasermaterial (B₁) mindestens eine voneinander verschiedene physikalische und/oder chemische Eigenschaft, insbesondere mindestens einen voneinander verschiedenen physikalischen und/oder chemischen Parameter, aufweisen, wobei die physikalische und/oder chemische Eigenschaft, insbesondere der physikalische und/oder chemische Parameter, ausgewählt ist aus der Gruppe von (i) Faserlänge, insbesondere mittlerer Faserlänge; (ii) Faserdurchmesser, insbesondere mittlerer Faserdurchmesser; (iii) chemischer Natur des faserbildenden Materials sowie (vi) Kombinationen von mindestens zwei dieser Eigenschaften, und/oder
wobei die jeweiligen Teilchen und/oder Partikel und/oder Adsorberpartikel des partikulären Adsorptionsmaterials (A) und/oder die Fasern des Fasermaterials (B) einer einzelnen adsorptiven Struktur (1) in Form eines einzelnen Agglomerats jeweils an mindestens einem Kern in Form des Bindemittelträgers (2) angeordnet und/oder angelagert sind, insbesondere wobei eine einzelne adsorptive Struktur (1) in Form eines einzelnen Agglomerats einen oder mehrere Kerne in Form des Bindemittelträgers (2) umfasst, und/oder
wobei der Bindemittelträger (2) und/oder der Kern in Form des Bindemittelträgers (2) eine Größe von 100 bis 2.000 µm, insbesondere 150 bis 1.500 µm, vorzugsweise 200 bis 1.000 µm, besitzt und/oder wobei das Größenverhältnis von Bindemittelträger (2) und/oder Kern in Form des Bindemittelträgers (2) zu einzelnem Adsorberpartikel des partikulären Adsorptionsmaterials (A) mindestens 1 : 1, insbesondere mindestens 1,25: 1, vorzugsweise mindestens 1, 5 : 1, besonders bevorzugt mindestens 2 : 1, ganz besonders bevorzugt mindestens 3 : 1, beträgt und/oder wobei das Größenverhältnis von Bindemittelträger (2) und/oder Kern in Form des Bindemittelträgers (2) zu einzelner Faser des Fasermaterials (B), bezogen auf den mittleren Faserdurchmesser, mindestens 2 : 1, insbesondere mindestens 5 : 1, vorzugsweise mindestens 10: 1, beträgt und/oder
wobei die einzelnen adsorptiven Strukturen (1) in Form der einzelnen Agglomerate teilchenförmig ausgebildet sind, insbesondere wobei die einzelnen adsorptiven Strukturen (1) in Form der einzelnen Agglomerate eine Teilchengröße, insbesondere insbesondere eine mittlere Teilchengröße, und/oder einen Teilchendurchmesser, insbesondere einen mittleren Teilchendurchmesser D50, im Bereich von 0,01 bis 20 mm, insbesondere 0,05 bis 15 mm, vorzugsweise 0,1 bis 10 mm, besonders bevorzugt 0,2 bis 7,5 mm, ganz besonders bevorzugt 0,5 bis 5 mm, aufweisen.

9. Adsorptive Strukturen nach einem der vorangehenden Ansprüche, wobei das organische Polymer des Bindemittelträgers (2) ein thermoplastischer Schmelzklebstoff, bevorzugt auf der Grundlage von Polymeren aus der Gruppe von Polyestern, Polyamiden, Polyethern, Polyetherestern und/oder Polyurethanen sowie deren Mischungen und Copolymeren, ist und/oder
wobei das organische Polymer, vorzugsweise der Schmelzklebstoff, bei 25 °C und Atmosphärendruck fest ist und/oder wobei das organische Polymer, vorzugsweise der Schmelzklebstoff, einen Schmelz- oder Erweichungsbereich oberhalb von 100 °C, vorzugsweise oberhalb von 110 °C, insbesondere oberhalb von 120 °C, aufweist und/oder wobei das organische Polymer, insbesondere das Bindemittel, vorzugsweise der Schmelzklebstoff, eine Temperaturbeständigkeit von mindestens 100 °C, vorzugsweise mindestens 125 °C, insbesondere mindestens 150 °C, aufweist und/oder
wobei die jeweiligen Adsorberpartikel des partikulären Adsorptionsmaterials (A) und/oder die Fasern des Fasermaterials (B) einer einzelnen adsorptiven Struktur (1) in Form eines einzelnen Agglomerats, unabhängig voneinander, jeweils zu höchstens 50 %, insbesondere zu höchstens 40 %, bevorzugt zu höchstens 30 %, ganz besonders bevorzugt zu höchstens 20 %, ihrer Oberfläche mit dem Bindemittelträger (2) bedeckt und/oder belegt sind.

10. Verfahren zur Herstellung von adsorptiven Strukturen (1), wie in den Ansprüchen 1 bis 9 definiert, mit einem partikulären Adsorptionsmaterial (A) und einem Fasermaterial (B),
a) wobei zunächst das partikuläre Adsorptionsmaterial (A) einerseits und Partikel eines Bindemittelträgers (2) auf Basis mindestens eines thermoplastischen organischen Polymers andererseits miteinander in Kontakt gebracht und vermischt werden,
b) wobei die resultierende Mischung nachfolgend auf Temperaturen oberhalb der Schmelz- oder Erweichungstemperatur des Bindemittelträgers (2) erwärmt wird und das partikuläre Adsorptionsmaterial (A) auf dem Bindemittelträger (2) zum Haften gebracht und/oder auf dem Bindemittelträger (2) fixiert wird und auf diese Weise Zwischenprodukte, welche das partikuläre Adsorptionsmaterial (A) und den Bindemittelträger (2) aufweisen, erhalten werden,
c) wobei gegebenenfalls anschließend die resultierenden Zwischenprodukte auf Temperaturen unterhalb der Schmelz- oder Erweichungstemperatur des Bindemittels des Bindemittelträgers (2) abgekühlt werden,
d) wobei anschließend das Fasermaterial (B) zu den Zwischenprodukten gegeben wird und/oder mit den Zwischenprodukten in Kontakt gebracht und vermischt wird,
e) wobei gegebenenfalls die resultierende Mischung nachfolgend erneut auf Temperaturen oberhalb der Schmelz- oder Erweichungstemperatur des Bindemittels des Bindemittelträgers (2) erwärmt wird,
f) wobei das Fasermaterial (B) auf dem Bindemittelträger (2) zum Haften gebracht und/oder auf dem Bindemittelträger (2) fixiert wird und auf diese Weise Produkte, welche das erste partikuläre Adsorptionsmaterial (A), das Fasermaterial (B) und den Bindemittelträger (2) aufweisen, erhalten werden und
g) wobei schließlich die resultierenden Produkte auf Temperaturen unterhalb der Schmelz- oder Erweichungstemperatur des Bindemittels des Bindemittelträgers (2) zum Erhalt der diskreten adsorptiven Strukturen (1) abgekühlt werden.

11. Verfahren nach Anspruch 10, wobei die in Schritt g) resultierenden adsorptiven Strukturen (1) in einem nachfolgenden Schritt h) zu einem Formkörper verarbeitet werden, insbesondere unter Verpressen, insbesondere wobei die Verarbeitung zu Formkörpern unter Erwärmen, vorzugsweise auf Temperaturen unterhalb der Schmelz- oder Erweichungstemperatur des Bindemittelträgers (2), erfolgt.

12. Verwendung von adsorptiven Strukturen (1), wie in den Ansprüchen 1 bis 9 definiert, mit einem partikulären Adsorptionsmaterial (A), insbesondere einer Vielzahl von Adsorberpartikeln, und mit einem Fasermaterial (B), insbesondere einer Vielzahl von Fasern,
für die Adsorption von Giftstoffen, Schadstoffen und Gerüchen, insbesondere aus Gas- oder Luftströmen oder aber aus Flüssigkeiten, insbesondere Wasser, oder
zur Reinigung oder Aufbereitung von Gasen, Gasströmen oder Gasgemischen, insbesondere Luft, oder von Flüssigkeiten, insbesondere Wasser, oder in Adsorptionsfiltern und/oder zur Herstellung von Filtern, insbesondere Adsorptionsfiltern, oder
als Sorptionsspeicher für Gase, insbesondere Wasserstoff, oder
zur Herstellung von adsorptiven Formkörpern, insbesondere durch Verpressen.

13. Adsorptiver Formkörper, aufgebaut aus einer Vielzahl adsorptiver Strukturen (1), wie in den Ansprüchen 1 bis 9 definiert.

14. Filter, umfassend einen adsorptiven Formkörper gemäß Anspruch 13.

## Claims

1. Adsorptive structures (1) based on agglomerates of adsorber particles, preferably having a particle and/or aerosol filter function,
wherein the single adsorptive structures (1) in the form of the single agglomerates each have at least one particulate adsorption material (A), and at least one fiber material (B), wherein the at least one particulate adsorption material (A), and the at least one fiber material (B) are each fixed on a binder carrier (2) based on a thermoplastic, organic polymer, wherein the particulate adsorption material (A) and the fiber material (B) are joined into a single adsorptive structure (1) in the form of a single agglomerate by means of the binder carrier (2), and wherein the binder carrier (2) forms at least one core of a single adsorptive structure (1) in the form of a single agglomerate,
wherein the single adsorptive structures (1) in the form of the single agglomerate contain the particulate adsorption material (A) in the form of discrete adsorber particles, and the fiber material (B) in the form of discrete fibers, at a weight ratio of adsorber particles to fibers of at least 5:1, and
wherein the particulate adsorption material (A) is selected from the group of
(i) activated carbon, in particular granular activated carbon, preferably spherical activated carbon, and/or in particular formed and/or extruded activated carbon, and/or powder activated carbon;
(ii) zeolites, in particular natural and/or synthetic zeolites;
(iii) molecular sieves, in particular zeolitic molecular sieves, synthetic molecular sieves, and/or in particular synthetic molecular sieves based on carbon, oxides, and/or glass;
(iv) metal oxide and/or metal particles;
(v) iron exchange resin, in particular polydispersed, and/or monodispersed cation and/or anion exchangers, in particular of the gel type and/or of the macroporous type;
(vi) inorganic oxides, in particular silica, silica gels, and/or aluminum oxides;
(vii) porous, organic polymers, and/or porous, organic/inorganic hybrid polymers;
(viii) mineral granulates;
(ix) clathrates; as well as
(x) the mixtures and/or combinations thereof.

2. The adsorptive structures according to claim 1, wherein the single adsorptive structures (1) in the form of the single agglomerates contain the particulate adsorption material (A) each in the form and/or in amounts of at least 2 adsorber particles, in particular at least 5 adsorber particles, preferably at least 10 adsorber particles, particularly preferred at least 15 adsorber particles, and/or wherein the adsorptive structures (1) in the form of the single agglomerates contain the particulate adsorption material (A) each in the form and/or in amounts of up to 50 adsorber particles, in particular up to 75 adsorber particles, preferably up to 100 adsorber particles, or more, and/or
wherein the single adsorptive structures (1) in the form of the single agglomerates each contain the fiber material (B) in the form and/or in amounts of at least 5 fibers, in particular at least 10 fibers, preferably at least 20 fibers, more preferred at least 30 fibers, particularly preferred at least 50 fibers, and/or wherein the adsorptive structures (1) in the form of the single agglomerates comprise the fiber material (B) each in the form and/or in amounts of up to 50 fibers, in particular up to 100 fibers, preferably up to 150 fibers or more,
and/or wherein the single adsorptive structures (1) in the form of the single agglomerates contain the particulate adsorption material (A) in the form of discrete adsorber particles, and the fiber material (B) in the form of discrete fibers at a weight ratio of adsorber particles to fibers of at least 10:1, most particularly preferred at least 50:1 or more, or wherein the single adsorptive structures (1) in the form of the single agglomerates contain the particulate adsorption material (A) in the form of discrete adsorber particles, and the fiber material (B) in the form of discrete fibers at a weight ratio of adsorber particles to fibers in the range of 1000:1 to 5:1, in particular 500:1 to 5:1, preferably 400:1 to 5:1, more preferred 300:1 to 5:1, particularly preferred 250:1 to 10:1, most particularly preferred 200:1 to 10:1.

3. The adsorptive structures according to claims 1 or 2, wherein the particulate adsorption material (A), in particular the particle forming material of the particulate adsorption material (A), is formed by activated carbon, in particular granular, preferably spherical activated carbon.

4. The adsorptive structures (1) according to one of the preceding claims, wherein the single adsorptive structures (1) in the form of the single agglomerates contain the particulate adsorption material (A) in amounts of at least 5% by weight, in particular at least 10% by weight, preferably at least 20% by weight, more preferred at least 30% by weight, particularly preferred at least 50% by weight or more, based on the total weight of the single adsorptive structure in the form of a single agglomerate, and/or wherein the single adsorptive structures (1) in the form of the single agglomerates contain the particulate adsorption material (A) in amounts in the range of at least 5 to 95% by weight, in particular 10 to 90% by weight, preferably 20 to 85% by weight, more preferred 30 to 85% by weight, particularly preferred 50 to 85% by weight, based on the total weight of a single adsorptive structure in the form of a single agglomerate, and/or wherein the single adsorptive structures (1) in the form of the single agglomerates, each have a weight ratio of particulate adsorption material (A) to binder carrier (2) of at least 1.5:1, in particular at least 2:1, preferably at least 3:1, particularly preferred at least 5:1, most particularly preferred at least 7:1, and/or wherein the single adsorptive structures (1) in the form of the single agglomerates each have a weight ratio of particulate adsorption material (A) to binder carrier (2) in the range of 1.5:1 to 30:1, in particular 2:1 to 20:1, preferably 3:1 to 15:1, particularly preferred 4:1 to 10:1.

5. The adsorptive structures according to one of the preceding claims, wherein the single adsorptive structures (1) in the form of the single agglomerates contain at least one additional particulate adsorption material (A₁), wherein the first particulate adsorption material (A) and the additional particulate adsorption material (A₁) have at least one physical and/or chemical property that is different from the other, in particular at least one physical and/or chemical parameter that is different from the other,
wherein the physical and/or chemical property, in particular the physical and/or chemical parameter, is selected from the group of (i) the particle size, in particular the mean particle size, and/or the particle diameter, in particular the mean particle diameter D50; (ii) the specific surface, in particular the BET surface; (iii) the pore volume, in particular the adsorption volume and/or total pore volume; (iv) the porosity and/or the pore distribution, in particular the micropore volume proportion of the total pore volume, and/or the mean pore diameter; (v) the particle shape; (vi) the chemical nature of the particle forming material; (vii) the impregnation and/or catalytic equipment, as well as (viii) the combinations of at least two of said properties,
in particular, wherein the particulate adsorption material (A) and the additional particulate adsorption material (A₁) have particle sizes that are different from each other, in particular particle diameters that are different from each other, and/or mean particle diameters that are different from each other, in particular mean particle diameters D50 that are different from each other, in particular, wherein the particle sizes, in particular the particle diameters, in particular the mean particle diameters D50 of the particulate adsorption material (A) and the additional particulate adsorption material (A₁) are different from each other by at least a factor of 1.1, in particular at least a factor 1.25, preferably at least a factor 1.5, more preferred at least a factor 2, particularly preferred at least a factor 5, most particularly preferred at least a factor 10, each with respect to the smaller particle size value, and/or wherein the particle sizes, in particular the particle diameters, in particular the mean particle diameter D50, of the particulate adsorption material (A) and the additional particulate adsorption material (A₁) are different from each other by at least 0.001 mm, in particular by at least 0.01 mm, preferably by at least 0.05 mm, more preferred by at least 0.1 mm, in particular, provided that the particulate adsorption material (A) has the greater values, and/or in particular, provided that the additional particulate adsorption material (A₁) has the lesser values.

6. The adsorptive structures according to one of the preceding claims, wherein the fiber material (B) is selected from the group of synthetic fibers (chemical fibers), natural fibers, in particular animal and/or plant fibers, and mineral fibers, as well as the mixtures thereof, preferably synthetic fibers (chemical fibers), and/or
wherein the fiber material (B) is utilized in the form of synthetic fibers (chemical fibers) and comprises the same, in particular those from the group of polyesters (PES); polyolefins, such as polyethylene (PE) and polypropylene (PP), polyvinyl chloride (CLF); polyvinylidene chloride (CLF); acetate (CA); triacetate (CTA); polyacryl (PAN), polyamide (PA); polyvinyl alcohol (PVAL); polyurethanes; polyvinyl esters; (meth)acrylates; as well as the mixtures thereof, and/or
wherein the fiber material (B) is utilized in the form of wool fibers, in particular the wool fibers of animal and/or plant origin, preferably in the form of lamb's wool, and/or cotton, preferably lamb's wool, or comprises the same, wherein the fiber material (B) is utilized in the form of activated carbon fibers, in particular, wherein the activated carbon fibers may be obtained by means of carbonizing and subsequent activation of organic base fibers, in particular cellulose fibers, fibers based on cellulose derivatives, phenol resin fibers, polyvinyl alcohol fibers, tar fibers, acrylic resin fibers, polyacrylic nitrile fibers, aromatic polyamide fibers, formaldehyde resin fibers, divinyl benzene-cross-linked polystyrol fibers, lignin fibers, cotton fibers, and/or hemp fibers.

7. The adsorptive structures according to one of the preceding claims, wherein the single adsorptive structures (1) in the form of the single agglomerates contain the fiber material (B) in amounts of at least 0.5% by weight, in particular at least 1% by weight, preferably at least 2% by weight, more preferred at least 5% by weight, with respect to the total weight of the single adsorptive structure in the form of a single agglomerate, and/or wherein the single adsorptive structures (1) in the form of the single agglomerates contain the fiber material (B) in amounts of not more than 40% by weight, in particular not more than 30% by weight, preferably not more than 25% by weight, more preferred not more than 20% by weight, with respect to the total weight of the single adsorptive structure (1) in the form of a single agglomerate, and/or wherein the single adsorptive structures (1) in the form of the single agglomerates contain the fiber material (B) in amounts in the range of 0.5 to 40% by weight, in particular 1 to 30% by weight, preferably 2 to 25% by weight, more preferred 5 to 20% by weight, with respect to the total weight of the single adsorptive structure (1) in the form of a single agglomerate, and/or
wherein the single adsorptive structures (1) in the form of the single agglomerates each have a weight ratio of fiber material (B) to binder carrier (2) of at least 0.05:1, in particular at least 0.2:1, preferably at least 0.5:1, and/or wherein the single adsorptive structures (1) in the form of the single agglomerates each have a weight ratio of fiber material (B) to binder carrier (2) in the range of 0.1:1 to 5:1, in particular 0.2:1 to 3:1, preferably 0.5:1 to 2:1, particularly preferred 0.75:1 to 1.5:1.

8. The adsorptive structures according to one of the preceding claims, wherein the single adsorptive structures (1) in the form of the single agglomerates have at least one additional fiber material (B₁), in particular wherein the fiber material (B) and the additional fiber material (B₁) have at least one physical and/or chemical property that is different from the other, in particular at least one physical and/or chemical parameter that is different from the other, wherein the physical and/or chemical property and/or the physical and/or chemical parameter is selected from the group of (i) the fiber length, in particular the mean fiber length; (ii) the fiber diameter, in particular the mean fiber diameter; (iii) the chemical nature of the fiber forming material, as well as (vi) combinations of at least two of said properties, and/or
wherein the respective particulates, and/or particles, and/or adsober particles of the particulate adsorption material (A) and/or the fibers of the fiber material (B) of a single adsorptive structure (1) in the form of a single agglomerate each are disposed and/or adsorbed on at least one core in the form of the binder carrier (2), in particular, wherein a single adsorptive structure (1) in the form of a single agglomerate comprises one or more cores in the form of the binder carrier (2), and/or
wherein the binder carrier (2) and/or the core in the form of the binder carrier (2) has a size of 100 to 2,000 µm, in particular 150 to 1,500 µm, preferably 200 to 1,000 µm, and/or wherein the size ratio of the binder carrier (2) and/or the core in the form of the binder carrier (2) to the single adsorber particle of the particulate adsorption material (A) is at least 1:1, in particular at least 1.25:1, preferably at least 1.5:1, particularly preferred at least 2:1, most particularly preferred at least 3:1, and/or wherein the size ratio of the binder carrier (2) and/or the core in the form of the binder carrier (2) to the single fiber of the fiber material (B), with respect to the mean fiber diameter, is at least 2:1, in particular at least 5:1, preferably at least 10:1, and/or
wherein the single adsorptive structures (1) in the form of the single agglomerates are embodied in the shape of particulates, in particular, wherein the single adsorptive structures (1) in the form of the single agglomerates have a particle size, in particular a mean particle size, and/or a particle diameter, in particular a mean particle diameter D50, in the range of 0.01 to 20 mm, in particular 0.05 to 15 mm, preferably 0.1 to 10 mm, particularly preferred 0.2 to 7.5, most particularly preferred 0.5 to 5 mm.

9. The adsorptive structures according to one of the preceding claims, wherein the organic polymer of the binder carrier (2) is a thermoplastic hot melt adhesive, preferably on the basis of polymers from the group of polyesters, polyamides, polyethers, polyether esters, and/or polyurethanes, as well as the mixtures and copolymers thereof, and/or
wherein the organic polymer, preferably the hot melt adhesive, is solid at 25°C and at atmospheric pressure, and/or wherein the organic polymer, preferably the hot melt adhesive, has a melting or softening range of above 100°C, preferably of above 110°C, in particular of above 120°C, and/or wherein the organic polymer, in particular the binder, preferably the hot melt adhesive, has a temperature resistance of at least 100°C, preferably of at least 125°C, in particular of at least 150°C, and/or
wherein the respective adsorber particles of the particulate adsorption material (A) and/or the fibers of the fiber material (B) of a single adsorptive structure (1) in the form of a single agglomerate, are independently of each other covered and/or occupied on the surface thereof by the binder carrier (2) at no more than 50%, in particular no more than 40%, preferably no more than 30%, particularly preferred no more than 20%.

10. A method for the production of adsorptive structures (1), as defined in claims 1 to 9, having a particulate adsorption material (A) and a fiber material (B),
a) wherein initially both the particulate adsorption material (A), and particles of a binder carrier (2) based on at least one thermoplastic, organic polymer, are brought into contact with each other and are mixed,
b) wherein the resulting mixture is subsequently heated to temperatures of above the melting or softening temperature of the binder carrier (2), and the particulate adsorption material (A) is brought to adhere to the binder carrier (2), and/or is fixed onto the binder carrier (2), and thus intermediate products having the particulate adsorption material (A) and the binder carrier (2) are obtained in this manner,
c) wherein optionally the resulting intermediate products are subsequently cooled down to temperatures of below the melting or softening temperature of the binder of the binder carrier (2),
d) wherein subsequently the fiber material (B) is added to the intermediate products, and/or is brought into contact with the intermediate products, and the same are mixed,
e) wherein optionally the resulting mixture is subsequently reheated to temperatures of above the melting or softening temperature of the binder of the binding carrier (2),
f) wherein the fiber material (B) is brought to adhere to the binder carrier (2), and/or is fixed onto the binder carrier (2), and thus intermediate products having the particulate adsorption material (A), and the fiber material (B), and the binder carrier (2) are obtained in this manner, and
g) wherein the resulting products are finally cooled down to below the melting or softening temperature of the binder of the binder carrier (2) for obtaining the discrete adsorptive structures (1).

11. The method according to claim 10, wherein the adsorptive structures (1) resulting in step g) are processed into a molded body in a subsequent step h), in particular under compacting, in particular, wherein the processing into molded bodies is carried out with heating, preferably to temperatures of below the melting or softening temperature of the binder carrier (2).

12. A use of adsorptive structures (1), as defined in claims 1 to 9, having a particulate adsorption material (A), in particular a plurality of adsorber particles, and having a fiber material (B), in particular a plurality of fibers,
for the adsorption of toxins, contaminants, and odors, in particular from gas or air streams, but also from liquids, in particular water, or
for purifying or treating gases, gas streams, or gas mixtures, in particular air, or of liquids, in particular water, or
in adsorption filters, and/or for the production of filters, in particular adsorption filters, or
as sorption reservoirs for gases, in particular hydrogen, or
for the production of adsorptive molded bodies, in particular by means of compacting.

13. An adsorptive molded body, composed of a plurality of adsorptive structures (1), as defined in claims 1 to 9.

14. A filter, comprising an adsorptive molded body according to claim 13.

## Revendications

1. Structures adsorbantes (1) à base d'agglomérats de particules adsorbantes, ayant de préférence une fonction de filtre à particules et/ou à aérosols,
les différentes structures adsorbantes (1), sous forme des différents agglomérats, présentant chacune au moins un matériau adsorbant particulaire (A) d'une part et au moins un matériau fibreux (B) d'autre part, le ou les matériaux adsorbants particulaires (A) et le ou les matériaux fibreux (B) étant chacun fixés à un support de liant (2) configuré à base d'un polymère organique thermoplastique, le matériau adsorbant particulaire (A) et le matériau fibreux (B) étant reliés par l'intermédiaire du support de liant (2) pour former une structure adsorbante individuelle (1) sous forme d'un agglomérat individuel, et le support de liant (2) formant au moins un coeur d'une structure adsorbante individuelle (1) sous forme d'un agglomérat individuel,
les différentes structures adsorbantes (1) sous forme des différents agglomérats comprenant le matériau adsorbant particulaire (A) sous forme de particules adsorbantes discrètes et le matériau fibreux (B) sous forme de fibres discrètes selon un rapport en poids des particules adsorbantes d'une part aux fibres d'autre part d'au moins 5:1, et
le matériau adsorbant particulaire (A) étant choisi dans le groupe
(i) du charbon actif, de préférence du charbon actif granulaire, de préférence du charbon actif sphérique et/ou en particulier du charbon actif moulé et/ou extrudé et/ou du charbon actif en poudre ;
(ii) des zéolithes, en particulier des zéolithes naturelles et/ou synthétiques ;
(iii) des tamis moléculaires, en particulier des tamis moléculaires zéolithiques, des tamis moléculaires synthétiques et/ou en particulier des tamis moléculaires synthétiques à base de carbone, d'oxydes et de verres ;
(iv) des particules d'oxydes métalliques et/ou des particules métalliques ;
(v) des résines échangeuses d'ions, en particulier des échangeurs de cations et/ou d'anions polydispersés et/ou monodispersés, en particulier du type gel et/ou du type macroporeux ;
(vi) des oxydes inorganiques, en particulier des dioxydes de silicium, des gels de silice et/ou des oxydes d'aluminium ;
(vii) des polymères organiques poreux et/ou des polymères hybrides organiques-inorganiques poreux ;
(viii) des granulés minéraux ;
(ix) des clathrates ; ainsi que
(x) de leurs mélanges et/ou combinaisons.

2. Structures adsorbantes selon la revendication 1, les différentes structures adsorbantes (1) sous forme des différents agglomérats comprenant chacune le matériau adsorbant particulaire (A) sous la forme et/ou en les quantités d'au moins 2 particules adsorbantes, en particulier d'au moins 5 particules adsorbantes, de préférence d'au moins 10 particules adsorbantes, d'une manière particulièrement préférée d'au moins 15 particules adsorbantes, et/ou les structures adsorbantes (1) sous forme des différents agglomérats comprenant chacun le matériau adsorbant particulaire (A) sous forme et/ou en des quantités allant jusqu'à 50 particules adsorbantes, en particulier jusqu'à 75 particules adsorbantes, de préférence jusqu'à 100 particules adsorbantes ou plus, et/ou
les différentes structures adsorbantes (1) sous forme des différents agglomérats comprenant chacune le matériau fibreux (B) sous la forme et/ou en des quantités d'au moins 5 fibres, en particulier d'au moins 10 fibres, de préférence d'au moins 20 fibres, de préférence d'au moins 30 fibres, d'une manière particulièrement préférée d'au moins 50 fibres, et/ou les structures adsorbantes (1) sous forme des différents agglomérats comprenant chacun le matériau fibreux (B) sous forme et/ou en des quantités allant jusqu'à 50 fibres, en particulier jusqu'à 100 fibres, de préférence jusqu'à 150 fibres, ou plus
et/ou les différentes structures adsorbantes (1) sous forme des différents agglomérats comprenant le matériau adsorbant particulaire (A) sous forme de particules adsorbantes discrètes et le matériau fibreux (B) sous forme de fibres discrètes selon un rapport en poids des particules adsorbantes d'une part aux fibres d'autre part d'au moins 10:1, d'une manière tout particulièrement préférée d'au moins 50:1, ou les différentes structures adsorbantes (1) sous forme des différents agglomérats comprenant le matériau adsorbant particulaire (A) sous forme de particules adsorbantes discrètes et le matériau fibreux (B) sous forme de fibres discrètes selon un rapport en poids des particules adsorbantes d'une part aux fibres d'autre part compris dans la plage de 1000:1 à 5:1, en particulier de 500:1 à 5:1, de préférence de 400:1 à 5:1, de préférence de 300:1 à 5:1, d'une manière particulièrement préférée de 250:1 à 10:1, d'une manière tout particulièrement préférée de 200:1 à 10:1.

3. Structures adsorbantes selon la revendication 1 ou 2, dans lesquelles le matériau adsorbant particulaire (A), en particulier le matériau formant des particules du matériau adsorbant particulaire (A), est formé à partir de charbon actif, en particulier de charbon actif granulaire, de préférence sphérique.

4. Structures adsorbantes (1) selon l'une des revendications précédentes, les différentes structures adsorbantes (1) sous forme des différents agglomérats comprenant le matériau adsorbant particulaire (A) en des quantités d'au moins 5 % en poids, en particulier d'au moins 10 % en poids, de préférence d'au moins 20 % en poids, de préférence d'au moins 30 % en poids, d'une manière particulièrement préférée d'au moins 50 % en poids ou plus par rapport au poids total d'une structure adsorbante individuelle sous forme d'un agglomérat individuel, et/ou les différentes structures adsorbantes (1) sous forme des différents agglomérats comprenant le matériau adsorbant particulaire (A) en des quantités comprises dans la plage d'au moins 5 à 95 % en poids, en particulier de 10 à 90 % en poids, de préférence de 20 à 85 % en poids, de préférence de 30 à 85 % en poids, d'une manière particulièrement préférée de 50 à 85 % en poids par rapport au poids total d'une structure adsorbante individuelle sous forme d'un agglomérat individuel, et/ou
les différentes structures adsorbantes (1) sous forme des différents agglomérats présentant chacune un rapport en poids du matériau adsorbant particulaire (A) au support de liant (2) d'au moins 1,5:1, en particulier d'au moins 2:1, de préférence d'au moins 3:1, d'une manière particulièrement préférée d'au moins 5:1, d'une manière tout particulièrement préférée d'au moins 7:1, et les différentes structures adsorbantes individuelles (1) sous forme des différents agglomérats présentant chacune un rapport en poids du matériau adsorbant particulaire (A) au support de liant (2) compris dans la plage de 1,5:1 à 30:1, en particulier de 2:1 à 20:1, de préférence de 3:1 à 15:1, d'une manière particulièrement préférée de 4:1 à 10:1.

5. Structures adsorbantes selon l'une des revendications précédentes, les différentes structures adsorbantes (1) sous forme des différents agglomérats comprenant au moins un autre matériau adsorbant particulaire (A₁), le premier matériau adsorbant particulaire (A) et l'autre matériau adsorbant particulaire (A₁) présentant au moins une propriété physique et/ou chimique différentes l'une de l'autre, en particulier au moins un paramètre physique et/ou chimique différents l'un de l'autre,
la propriété physique et/ou chimique, en particulier le paramètre physique et/ou chimique, étant choisi dans le groupe
(i) de la granulométrie, en particulier de la granulométrie moyenne et/ou du diamètre des particules, en particulier du diamètre moyen des particules D50 ;
(ii) de l'aire spécifique, en particulier de l'aire BET ;
(iii) du volume des pores, en particulier du volume d'adsorption et/ou du volume total des pores ;
(iv) de la porosité et/ou de la distribution des pores, en particulier de la proportion volumique des micropores par rapport au volume total des pores et/ou du diamètre moyen des pores ;
(v) de la forme des particules ;
(vi) de la nature chimique du matériau formant les particules ;
(vii) de l'imprégnation et/ou de l'équipement catalytique, ainsi que
(viii)de combinaisons d'au moins deux de ces propriétés,
en particulier les matériaux adsorbants particulaires (A) et l'autre matériau adsorbant particulaire (A₁) présentant des granulométries différentes l'une de l'autre, en particulier des diamètres de particules différents l'un de l'autre et/ou des diamètres moyens de particules différents l'un de l'autre, en particulier des diamètres moyens de particules D50 différents l'un de l'autre, en particulier les granulométries, en particulier les diamètres des particules, en particulier les diamètres moyens des particules D50, du matériau adsorbant particulaire (A) et de l'autre matériau adsorbant particulaire (A₁) différant d'au moins un facteur de 1,1, en particulier d'au moins un facteur de 1,25, de préférence d'au moins un facteur de 1,5, de préférence d'au moins un facteur de 2, d'une manière particulièrement préférée d'au moins un facteur de 5, d'une manière tout particulièrement préférée d'au moins un facteur de 10, chaque fois par rapport à la valeur la plus petite de la granulométrie, et/ou les granulométries, en particulier les diamètres des particules, en particulier les diamètres moyens des particules D50, du matériau adsorbant particulaire (A) et de l'autre matériau adsorbant particulaire (A₁) différant l'un de l'autre d'au moins 0,001 mm, en particulier d'au moins 0,01 mm, de préférence d'au moins 0,05 mm, de préférence d'au moins 0,1 mm, en particulier à la condition que le matériau adsorbant particulaire (A) présente les valeurs les plus grandes et/ou en particulier à la condition que l'autre matériau adsorbant particulaire (A₁) présente les valeurs les plus petites.

6. Structures adsorbantes selon l'une des revendications précédentes, dans lesquelles le matériau fibreux (B) est choisi dans le groupe des fibres synthétiques (fibres chimiques), des fibres naturelles, en particulier des fibres animales et/ou végétales, et des fibres minérales ainsi que de leurs mélanges, de préférence des fibres synthétiques (fibres chimiques), et/ou
le matériau fibreux (B) étant utilisé sous forme de fibres synthétiques (fibres chimiques) ou les comprenant, en particulier du groupe de polyesters (PES), des polyoléfines telles que le polyéthylène (PE) et le polypropylène (PP), du poly(chlorure de vinyle) (CLF) ; du poly(chlorure de vinylidène) (CLF) ; des acétates (CA) ; des triacétates (CTA) ; des polyacryliques (PAN) ; des polyamides (PA) ; du poly(alcool vinylique) (PVAL) ; des polyuréthannes ; des polyvinylesters ; des (méth)acrylates ainsi que de leurs mélanges, et/ou
le matériau fibreux (B) étant utilisé sous forme de fibres laineuses, en particulier de fibres laineuses d'origine animale et/ou végétale, de préférence sous forme de laine de mouton et/ou de coton, de préférence de laine de mouton, ou les comprenant, et/ou le matériau fibreux (B) étant utilisé sous forme de fibres de charbon actif, les fibres de charbon actif pouvant être obtenues en particulier par carbonisation suivie d'une activation de fibres de départ organiques, en particulier de fibres de cellulose, de fibres à base de dérivés de la cellulose, de fibres de résine phénoliques, de fibres de poly(alcool vinylique), de fibres de brai, de fibres de résine acrylique, de fibres de polyacrylonitrile, de fibres de polyamide aromatique, de fibres de résines de formaldéhyde, de fibres de polystyrène réticulées par du divinylbenzène, de fibres de lignine, de fibres de coton et/ou de fibres de chanvre.

7. Structures adsorbantes selon l'une des revendications précédentes, les différentes structures adsorbantes (1) sous forme des différents agglomérats comportant le matériau fibreux (B) en des quantités d'au moins 0,5 % en poids, en particulier d'au moins 1 % en poids, de préférence d'au moins 2 % en poids, de préférence d'au moins 5 % en poids, par rapport au poids total d'une structure adsorbante individuelle sous forme d'un agglomérat individuel, et/ou les différentes structures adsorbantes (1) sous forme des différents agglomérats comprenant la matière fibreuse (B) en des quantités d'au plus 40 % en poids, en particulier d'au plus 30 % en poids, de préférence d'au plus 25 % en poids, de préférence d'au plus 20 % en poids, par rapport au poids total d'une structure adsorbante individuelle (1) sous forme d'un agglomérat individuel, et/ou les différentes structures adsorbantes (1) sous forme des différents agglomérats comprenant le matériau fibreux (B) en des quantités comprises dans la plage de 0,5 à 40 % en poids, en particulier de 1 à 30 % en poids, de préférence de 2 à 25 % en poids, de préférence de 5 à 20 % en poids, par rapport au poids total d'une structure adsorbante individuelle (1) sous forme d'un agglomérat individuel, et/ou
les différentes structures adsorbantes (1) sous forme des différents agglomérats présentant chacune un rapport en poids du matériau fibreux (B) au support de liant (2) d'au moins 0,05:1, en particulier d'au moins 0,2:1, de préférence d'au moins 0,5:1, et/ou les différentes structures adsorbantes (1) sous forme des différents agglomérats présentant chacune un rapport en poids du matériau fibreux (B) d'une part au support de liant (2) d'autre part compris dans la plage de 0,1:1 à 5:1, en particulier de 0,2:1 à 3:1, de préférence de 0,5:1 à 2:1, d'une manière particulièrement préférée de 0,75:1 à 1,5:1.

8. Structures adsorbantes selon l'une des revendications précédentes, les différentes structures adsorbantes (1) sous forme des différents agglomérats comportant au moins un autre matériau fibreux (B₁), le matériau fibreux (B) et l'autre matériau fibreux (B₁) présentant au moins une propriété physique et/ou chimique différentes l'une de l'autre, en particulier au moins un paramètre physique et/ou chimique différents l'un de l'autre, la propriété physique et/ou chimique, en particulier le paramètre physique et/ou chimique, étant choisi dans le groupe (i) de la longueur des fibres, en particulier de la longueur moyenne des fibres, (ii) du diamètre des fibres, en particulier du diamètre moyen des fibres, (iii) de la nature chimique du matériau fibrogène, ainsi que (vi) de combinaisons d'au moins deux de ces propriétés, et/ou
les différents fragments et/ou particules et/ou particules adsorbantes du matériau adsorbant particulaire (A) et/ou les fibres du matériau fibreux (B) d'une structure adsorbante individuelle (1) sous forme d'un agglomérat individuel étant chacun disposé et/ou rapporté contre au moins un coeur sous forme d'un support de liant (2), en particulier une structure adsorbante individuelle (1) sous forme d'un agglomérat individuel comprenant un ou plusieurs coeurs sous forme d'un support de liant (2), et/ou
le support de liant (2) et/ou le coeur sous forme du support de liant (2) ayant une grosseur de 100 à 2 000 µm, en particulier de 150 à 1 500 µm, de préférence de 200 à 1 000 µm, et/ou le rapport entre la grosseur du support de liant (2) et/ou du coeur sous forme du support de liant (2), et la particule adsorbante individuelle du matériau adsorbant particulaire (A), étant d'au moins 1:1, en particulier d'au moins 1,25:1, de préférence d'au moins 1,5:1, d'une manière particulièrement préférée d'au moins 2:1, d'une manière tout particulièrement préférée d'au moins 3:1, et/ou le rapport entre la grosseur du support de liant (2) et/ou du coeur sous forme du support de liant (2) et la fibre individuelle du matériau fibreux (B), par rapport au diamètre moyen des fibres, étant d'au moins 2:1, en particulier d'au moins 5:1, de préférence d'au moins 10:1, et/ou
les différentes structures adsorbantes (1) sous forme des différents agglomérats ayant une configuration particulaire, en particulier les différentes structures adsorbantes (1) sous forme des différents agglomérats présentant une granulométrie, en particulier une granulométrie moyenne, et/ou un diamètre de particules, en particulier un diamètre moyen de particule D50, compris dans la plage de 0,01 à 20 mm, en particulier de 0,05 à 15 mm, de préférence de 0,1 à 10 mm, d'une manière particulièrement préférée de 0,2 à 7,5 mm, d'une manière tout particulièrement préférée de 0,5 à 5 mm.

9. Structures adsorbantes selon l'une des revendications précédentes, dans lesquelles le polymère organique du support de liant (2) est un adhésif fusible thermoplastique, de préférence à base de polymères du groupe des polyesters, des polyamides, des polyéthers, des polyétheresters et/ou des polyuréthannes ainsi que de leurs mélanges et copolymères, et/ou
le polymère organique, de préférence l'adhésif fusible, étant solide à 25°C et sous la pression atmosphérique, et/ou le polymère organique, de préférence l'adhésif fusible, présentant une plage de fusion ou de ramollissement au-delà de 100°C, de préférence au-delà de 110°C, en particulier au-delà de 120°C, et/ou le polymère organique, en particulier le liant, de préférence l'adhésif fusible, présentant une résistance à la température d'au moins 100°C, de préférence d'au moins 125°C, en particulier d'au moins 150°C, et/ou
les différentes particules adsorbantes du matériau adsorbant particulaire (A) et/ou les fibres du matériau fibreux (B) d'une structure adsorbante individuelle (1) sous forme d'un agglomérat individuel étant chacune indépendamment des autres, dans chaque cas à raison d'au plus 50 %, en particulier d'au plus 40 %, de préférence d'au plus 30 %, d'une manière tout particulièrement préférée d'au plus 20 % de leur surface, recouverts et/ou occupés par le support de liant (2) .

10. Procédé de fabrication de structures adsorbantes (1) telles que définies dans les revendications 1 à 9, avec un matériau adsorbant particulaire (A) et un matériau fibreux (B),
a) dans lequel d'abord le matériau adsorbant particulaire (A) d'une part et les particules d'un support de liant (2) à base d'au moins un polymère organique thermoplastique d'autre part, sont mis en contact et mélangés les uns aux autres,
b) dans lequel le mélange obtenu est ensuite chauffé à des températures supérieures à la température de fusion ou de ramollissement du support de liant (2), et le matériau adsorbant particulaire (A) est mis à adhérer sur le support de liant (2) et/ou est fixé sur le support de liant (2), et de cette manière on obtient des produits intermédiaires qui comprennent le matériau adsorbant particulaire (A) et le support de liant (2),
c) dans lequel éventuellement les produits intermédiaires obtenus sont ensuite refroidis à des températures inférieures à la température de fusion ou de ramollissement du liant du support de liant (2),
d) dans lequel le matériau fibreux (B) est ensuite ajouté aux produits intermédiaires, et/ou est mis en contact et mélangé aux produits intermédiaires,
e) dans lequel éventuellement le mélange résultant est ensuite de nouveau chauffé à des températures supérieures à la température de fusion ou de ramollissement du liant du support de liant (2),
f) dans lequel le matériau fibreux (B) est mis à adhérer au support de liant (2) et/ou est fixé au support de liant (2), et de cette manière on obtient des produits qui comprennent le premier matériau adsorbant particulaire (A), le matériau fibreux (B) et le support de liant (2), et
g) dans lequel pour terminer les produits obtenus sont refroidis à des températures inférieures à la température de fusion ou de ramollissement du liant du support de liant (2), pour obtenir les structures adsorbantes discrètes (1).

11. Procédé selon la revendication 10, dans lequel les structures adsorbantes (1) obtenues dans l'étape g) sont mises en oeuvre dans le cadre d'une étape suivante h) pour donner un objet moulé, en particulier par compression, en particulier dans lequel la mise en oeuvre conduit à des objets moulés par chauffage, de préférence à des températures inférieures à la température de fusion ou de ramollissement du support de liant (2) .

12. Utilisation de structures adsorbantes (1) telles que définies dans les revendications 1 à 9, avec un matériau adsorbant particulaire (A), en particulier un grand nombre de particules adsorbantes, et avec un matériau fibreux (B), en particulier un grand nombre de fibres,
pour l'adsorption de poisons, de polluants et d'odeurs, en particulier provenant de courants gazeux ou de courants d'air, ou cependant de liquides, en particulier l'eau, ou
pour la purification ou le traitement de gaz, de courants gazeux ou de mélanges gazeux, en particulier l'air, ou de liquides, en particulier l'eau, ou
dans des filtres par adsorption et/ou pour fabriquer des filtres, en particulier des filtres par adsorption, ou
en tant qu'accumulateur de sorption pour des gaz, en particulier l'hydrogène, ou
pour fabriquer des objets moulés adsorbants, en particulier par compression.

13. Objet moulé adsorbant, construit à partir d'un grand nombre de structures adsorbantes (1) telles que définies dans les revendications 1 à 9.

14. Filtre comprenant un objet moulé adsorbant selon la revendication 13.
